(19) Europäisches Patentamt
European Patent Office
Office européen des brevets

(11) EP 4 664 594 A1

(12) # EUROPEAN PATENT APPLICATION
published in accordance with Art. 153(4) EPC

(43) Date of publication:
**17.12.2025 Bulletin 2025/51**

(21) Application number: **24753270.8**

(22) Date of filing: **02.02.2024**

(51) International Patent Classification (IPC):
***H01M 10/0568*** *(2010.01)* ***H01M 10/052*** *(2010.01)*
***H01M 10/054*** *(2010.01)* ***H01M 10/0567*** *(2010.01)*
***H01M 10/0569*** *(2010.01)*

(52) Cooperative Patent Classification (CPC):
**H01M 10/052; H01M 10/054; H01M 10/0567; H01M 10/0568; H01M 10/0569;** Y02E 60/10

(86) International application number:
**PCT/JP2024/003560**

(87) International publication number:
**WO 2024/166827 (15.08.2024 Gazette 2024/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.02.2023 JP 2023016466**

(71) Applicant: **Central Glass Company, Limited**
**Ube-shi, Yamaguchi 755-0001 (JP)**

(72) Inventors:
- **KAWABATA, Wataru**
**Tokyo 101-0054 (JP)**
- **TAKAHASHI, Mikihiro**
**Tokyo 101-0054 (JP)**
- **NAKAHARA, Keita**
**Tokyo 101-0054 (JP)**
- **KAWAHARA, Kei**
**Tokyo 101-0054 (JP)**
- **YAMAUCHI, Miyuki**
**Tokyo 101-0054 (JP)**
- **MORINAKA, Takayoshi**
**Tokyo 101-0054 (JP)**

(74) Representative: **Manitz Finsterwald**
**Patent- und Rechtsanwaltspartnerschaft mbB**
**Martin-Greif-Straße 1**
**80336 München (DE)**

(54) **NON-AQUEOUS ELECTROLYTE AND NON-AQUEOUS ELECTROLYTE BATTERY**

(57) A nonaqueous electrolyte solution capable of improving a low-temperature (-30°C) output characteristic after a high-temperature (70°C) storage test (resistance after high-temperature storage) and a post-overdischarge discharge capacity retention rate after a high-temperature (70°C) storage test in a well-balanced manner and a nonaqueous electrolyte solution battery are provided. A nonaqueous electrolyte solution containing (1-1) a compound represented by the general formula [1a] described in the specification and (I-2) at least one selected from the group consisting of a compound represented by the general formula [1b] and a compound represented by the general formula [1b'] in which a (I-2) content in the nonaqueous electrolyte solution is 10 to 25000 ppm by mass.

EP 4 664 594 A1

## Description

TECHNICAL FIELD

The present disclosure relates to a nonaqueous electrolyte solution and a nonaqueous electrolyte solution battery.

BACKGROUND ART

In recent years, there is a rapidly increasing demand for batteries that have a high capacity, high output, and a high energy density and that can be mounted as an auxiliary power source for electric vehicles, hybrid vehicles, and fuel-cell vehicles in addition to a power storage system for a compact and high energy density application, such as information-related devices and communication devices, that is, personal computers, video cameras, digital cameras, mobile phones, and smartphones. In addition, there is an increasing demand for batteries that can be used for a long period of time even in power storage systems for large and power applications such as power storage. Nonaqueous electrolyte solution batteries such as lithium ion batteries, lithium batteries, and lithium ion capacitors have been actively developed as candidates for these various power storage systems.

A lithium secondary battery is mainly composed of a positive electrode, a nonaqueous electrolyte solution, and a negative electrode. As the negative electrode constituting the lithium secondary battery, for example, metal lithium, a metal compound capable of occluding and releasing lithium (for example, simple metal element, an oxide, an alloy with lithium, or the like), a carbon material, and the like are known, and in particular, a lithium secondary battery using a carbon material such as coke, artificial graphite, and natural graphite capable of occluding and releasing lithium has been widely put into practical use. For example, it has been reported that, in a lithium secondary battery in which a highly crystallized carbon material such as natural graphite and artificial graphite is used as a negative electrode material, since the nonaqueous organic solvent in the nonaqueous electrolyte solution is reductively decomposed on the surface of the negative electrode during charging, the decomposition product or a gas generated thereby inhibits the original electrochemical reaction of the battery, and thus the cycle characteristic is deteriorated.

In addition, it is known that reductive decomposition of the nonaqueous organic solvent is caused more easily in a lithium secondary battery using lithium metal, an alloy thereof, a simple metal element of silicon, tin, or the like, an oxide thereof, or the like as a negative electrode material than in a negative electrode of a carbon material because pulverization of the negative electrode material proceeds during the cycles although the initial capacity is high, resulting in a decrease in the charge/discharge efficiency in the first cycle due to an increase in the initial irreversible capacity of the battery and a considerable decrease in the battery performance such as the battery capacity and the cycle characteristic associated therewith.

When lithium cations are inserted into the negative electrode during the first cycle charging, the negative electrode and the lithium cations or the negative electrode and the electrolyte solution solvent react with each other to form a film containing lithium oxide, lithium carbonate, or lithium alkyl carbonate as a main component on the surface of the negative electrode. The film on the surface of the electrode is called solid electrolyte interface (SET), and the properties thereof greatly affect the battery performance, through suppression of reductive decomposition of the solvent, suppression of deterioration of the battery performance, or the like.

As described above, occlusion and release of lithium to and from the negative electrode cannot be smoothly performed due to accumulation of the decomposition product of the nonaqueous organic solvent, generation of gas, the adverse effect of the pulverization of the negative electrode material, and the like, and as a result, there is a problem of a significant decrease in the battery characteristics such as the cycle characteristic.

As the positive electrode, for example, $LiCoO_2$, $LiMn_2O_4$, $LiNiO_2$, $LiFePO_4$, and the like are known. It has been reported that, in a lithium secondary battery using these, when the temperature becomes high in the charged state, the nonaqueous organic solvent in the nonaqueous electrolyte solution is locally partially decomposed oxidatively at the interface between the positive electrode material and the nonaqueous electrolyte solution, and the decomposition product or a gas generated thereby inhibits the original electrochemical reaction of the battery and as a result decreases the battery performance such as the cycle characteristic. Similar to the negative electrode, it is known that a film made of an oxidative decomposition product is also formed on the surface of the positive electrode, and the film also plays an important role such as suppressing oxidative decomposition of the solvent and suppressing the amount of gas generated.

As described above, general lithium secondary batteries have factors which decrease the battery performance through inhibition of migration of lithium ions or swelling of the battery due to the decomposition products or the gases generated when the nonaqueous electrolyte solution is decomposed on the positive electrode or on the negative electrode.

In addition to overcoming these problems, in order to improve the battery performance including long-term durability and output characteristic, it is important to form a SEI which has high ion conductivity and low electron

conductivity and which is stable over a long period of time, and attempts have been widely made to actively form an excellent SEI by adding a small amount (usually 0.01% by mass or more and 10% by mass or less) of a compound referred to as an additive to the nonaqueous electrolyte solution.

As an attempt therefor, Patent Literature 1 discloses a nonaqueous electrolyte solution for a lithium battery in which a nitrile compound having a specific structure is used and which, as a result, can suppress elution of a copper component during overdischarge and suppress an increase in the initial resistance.

CITATION LIST

PATENT LITERATURE

Patent Literature 1: JP2021-163684A

SUMMARY OF INVENTION

TECHNICAL PROBLEM

It has been found that, when a nonaqueous electrolyte solution to which a nitrile compound such as one described in Patent Literature 1 is added is used, the initial input/output characteristic performance is high. The present disclosers have found that there is room for improvement in the low-temperature (-30°C) output characteristic after a high-temperature (70°C) storage test (resistance after high-temperature storage) and the post-overdischarge discharge capacity retention rate after a high-temperature (70°C) storage test in the nonaqueous electrolyte solution to which the nitrile compound is added.

The present disclosure has been made in view of the above circumstances, and an object thereof is to provide a nonaqueous electrolyte solution capable of improving the low-temperature (-30°C) output characteristic after a high-temperature (70°C) storage test (resistance after high-temperature storage) and the post-overdischarge discharge capacity retention rate after a high-temperature (70°C) storage test in a well-balanced manner and a nonaqueous electrolyte solution battery.

That the nonaqueous electrolyte solution is "capable of improving the low-temperature (-30°C) output characteristic after a high-temperature (70°C) storage test (resistance after high-temperature storage) and the post-overdischarge discharge capacity retention rate after a high-temperature (70°C) storage test in a well-balanced manner" means that the nonaqueous electrolyte solution exhibits "equivalent or higher resistance after high-temperature storage" and "superior post-overdischarge discharge capacity retention rate after a high-temperature storage test" compared to those of the case in which the (I-2) content of the nonaqueous electrolyte solution is less than 10 ppm by mass.

SOLUTION TO PROBLEM

The above problems can be solved by the following configuration.

[1] A nonaqueous electrolyte solution, containing:

(I-1) a compound represented by the following general formula [1a]; and
(I-2) at least one selected from the group consisting of a compound represented by the following general formula [1b] and a compound represented by the following general formula [1b'],
in which the (I-2) content in the nonaqueous electrolyte solution is 10 to 25000 ppm by mass.

$$M^+[X\text{-}S(=O)_2\text{-}N\text{-}C(=O)\text{-}R^1]^- \qquad [1a]$$

(In the general formula [1a], X represents a halogen atom, and $R^1$ represents a -CN group or a -OCN group. $M^+$ represents an alkali metal ion.)

[Chem. 1]

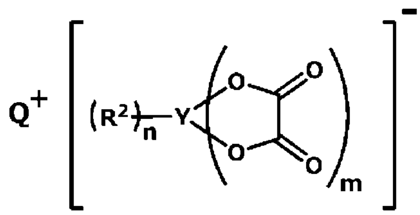

[1b]

(In the general formula [1b], Y represents a boron atom, and $R^2$ represents a fluorine atom. n is 0 to 4, and m is 0 to 2. $Q^+$ represents an alkali metal ion, a tetraalkylammonium cation, or a tetraalkylphosphonium cation.)

$Q^+[Z]^-$ [1b']

(In the general formula [1b'], the anion moiety represented by $[Z]^-$ is the following structure [1b-1] or a chloride anion. $Q^+$ represents an alkali metal ion, a tetraalkylammonium cation, or a tetraalkylphosphonium cation.)

[Chem. 2]

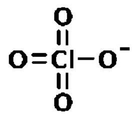

[1b-1]

[2] The nonaqueous electrolyte solution according to [1], in which the (I-2) content in the nonaqueous electrolyte solution is 10 to 8000 ppm by mass.

[3] The nonaqueous electrolyte solution according to [1] or [2], in which the (I-1) content in the nonaqueous electrolyte solution is 0.01 to 5.00% by mass.

[4] The nonaqueous electrolyte solution according to any one of [1] to [3], in which X in the general formula [1a] is a fluorine atom.

[5] The nonaqueous electrolyte solution according to any one of [1] to [4], in which the (I-2) is a salt compound containing at least one counter anion selected from the group consisting of a bis(oxalato)borate anion, a tetrafluoroborate anion, a chloride anion, and a perchlorate anion and at least one counter cation selected from the group consisting of a lithium cation, a sodium cation, a potassium cation, a tetraalkylammonium cation, and a tetraalkylphosphonium cation.

[6] The nonaqueous electrolyte solution according to any one of [1] to [5], further containing (II) a solute in which the solute is at least one selected from the group consisting of $LiPF_6$, $LiSbF_6$, $LiAsF_6$, $LiCF_3SO_3$, $LiC_4F_9SO_3$, $LiAlO_2$, $LiAlCl_4$, and LiI or at least one selected from the group consisting of $NaPF_6$, $NaSbF_6$, $NaAsF_6$, $NaCF_3SO_3$, $NaC_4F_9SO_3$, $NaAlO_2$, $NaAlCl_4$, and NaI.

[7] The nonaqueous electrolyte solution according to any one of [1] to [6], further containing (III) a nonaqueous organic solvent.

[8] The nonaqueous electrolyte solution according to [7], in which the (III) contains at least one selected from the group consisting of a cyclic ester, a chain ester, a cyclic ether, a chain ether, a sulfone compound, a sulfoxide compound, and an ionic liquid.

[9] The nonaqueous electrolyte solution according to [7] or [8], in which the (III) contains a cyclic ester and the cyclic ester is a cyclic carbonate.

[10] The nonaqueous electrolyte solution according to [7] or [8], in which the (III) contains a chain ester and the chain ester is a chain carbonate.

[11] The nonaqueous electrolyte solution according to any one of [1] to [10], further containing at least one additive selected from the group consisting of vinylene carbonate, fluoroethylene carbonate, dimethyl dicarbonate, ethynyl ethylene carbonate, trans-difluoroethylene carbonate, difluorobis(oxalato)phosphate, tetrafluorooxalato phosphate, (difluorophosphoryl)(fluorosulfonyl)imide salt, difluorophosphate, fluorosulfonate, nitrate, 1,3-propenesultone, 1,3-propanesultone, 1,6-diisocyanatohexane, 1,3,2-dioxathiolane-2,2-dioxide, 4-propyl-1,3,2-dioxathiolane-2,2-dioxide, methylene methanedisulfonate, 1,2-ethanedisulfonic anhydride, methanesulfonic anhydride, methanesulfonyl fluoride, 1,4-dioxane-2,6-dione, tripropargyl phosphate, tris(trimethylsilyl)borate, (ethoxy)pentafluorocyclotriphosphazene, tetrafluoro(malonato)phosphate, tetrafluoro(picolinato)phosphate, 1,3-dimethyl-1,3-divinyl-1,3-di(1,1,1,3,3,3-hexafluoroisopropyl)disiloxane, N,N'-carbonylbis(N-methylsulfamoylfluoride), tetravinylsilane, trivinylmethylsilane, t-butylbenzene, t-amylbenzene, fluorobenzene, and cyclohexylbenzene.

[12] A nonaqueous electrolyte solution battery, at least having: a positive electrode; a negative electrode; a separator; and the nonaqueous electrolyte solution according to any one of [1] to [11].

EFFECTS OF INVENTION

According to the present disclosure, a nonaqueous electrolyte solution capable of improving the low-temperature (-30°C) output characteristic after a high-temperature (70°C) storage test (resistance after high-temperature storage) and the post-overdischarge discharge capacity retention rate after a high-temperature (70°C) storage test in a well-balanced manner and a nonaqueous electrolyte solution battery can be provided.

DESCRIPTION OF EMBODIMENTS

The term "to" in the present specification is used with the meanings including the numerical values indicated before and after "to" as a lower limit value and an upper limit value.

Hereinafter, the present disclosure will be described in detail, but the description of the constituent elements described below is an example of an embodiment of the present disclosure, and the present disclosure is not limited to these specific contents.

1. Nonaqueous Electrolyte Solution

The nonaqueous electrolyte solution of the present disclosure is a nonaqueous electrolyte solution, containing:

(I-1) a compound represented by the following general formula [1a]; and
(I-2) at least one selected from the group consisting of a compound represented by the following general formula [1b] and a compound represented by the following general formula [1b'],
in which the (I-2) content in the nonaqueous electrolyte solution is 10 to 25000 ppm by mass.

$M^+ [X\text{-}S(=O)_2\text{-}N\text{-}C(=O)\text{-}R^1]^-$ [1a]

(In the general formula [1a], X represents a halogen atom, and $R^1$ represents a -CN group or a -OCN group. $M^+$ represents an alkali metal ion.)

[Chem. 3]

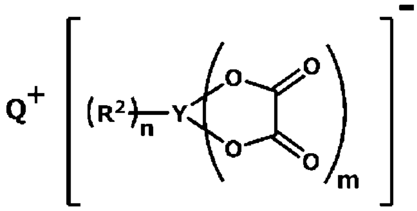

[1b]

(In the general formula [1b], Y represents a boron atom, and $R^2$ represents a fluorine atom. n is 0 to 4, and m is 0 to 2. $Q^+$ represents an alkali metal ion, a tetraalkylammonium cation, or a tetraalkylphosphonium cation.)

$Q^+[Z]^-$ [1b']

(In the general formula [1b'], the anion moiety represented by $[Z]^-$ is the following structure [1b-1] or a chloride anion. $Q^+$ represents an alkali metal ion, a tetraalkylammonium cation, or a tetraalkylphosphonium cation.)

[Chem. 4]

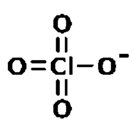

[1b-1]

(I-1) Compound Represented by General Formula [1a]

In the general formula [1a], X represents a halogen atom.

Examples of the halogen atom represented by X include a fluorine atom, a bromine atom, and an iodine atom. Of these, X may be a fluorine atom from the viewpoint of further lowering the battery resistance.

In the general formula [1a], $R^1$ represents a -CN group or a -OCN group.

In the general formula [1a], $M^+$ represents an alkali metal ion.

Examples of the alkali metal ion represented by $M^+$ include a lithium ion, a sodium ion, and a potassium ion, and the alkali metal ion is preferably a lithium ion or a sodium ion, more preferably a lithium ion in the case of a lithium ion battery and more preferably a sodium ion in the case of a sodium ion battery.

Specific examples of the compound represented by the general formula [1a] include, for example, the following compounds, but the compound is not limited to these compounds.

- $LiN(SO_2F)(COCN)$
- $LiN(SO_2F)(CO(OCN))$
- $NaN(SO_2F)(COCN)$
- $NaN(SO_2F)(CO(OCN))$
- $LiN(SO_2Cl)(COCN)$
- $LiN(SO_2Cl)(CO(OCN))$
- $NaN(SO_2Cl)(COCN)$
- $NaN(SO_2Cl)(CO(OCN))$

As the compound represented by the general formula [1a], one type may be used alone, or two or more types may be used in combination.

The content of (I-1) (the compound represented by the general formula [1a]) in the nonaqueous electrolyte solution may be 0.01 to 5.00% by mass, 0.07 to 3.5% by mass, or 0.1 to 2.5% by mass with respect to the total amount of the electrolyte solution. By setting the content of the compound represented by the general formula [1a] to 0.01% by mass or more, an effect of suppressing an increase in the initial resistance in the nonaqueous electrolyte solution battery is easily obtained. In addition, by setting the content to 5.00% by mass or less, the film formed on the electrode does not become too thick, and this hardly leads to an increase in resistance.

The compound represented by the general formula [1a] can be produced by various methods. The production method is not particularly limited. An example is a method in which a corresponding halogenated sulfonyl isocyanate and a corresponding cyanide salt or cyanate salt are reacted without any solvent or in a solvent which does not react with them.

(I-2) Compound Represented by General Formula [1b] and Compound Represented by General Formula [1b']

(I-2) may be a salt compound containing at least one counter anion selected from the group consisting of a bis(oxalato)borate anion, a tetrafluoroborate anion, a chloride anion, and a perchlorate anion and at least one counter cation selected from the group consisting of a lithium cation, a sodium cation, a potassium cation, a tetraalkylammonium cation, and a tetraalkylphosphonium cation.

Specific examples of the compound represented by the general formula [1b] and the compound represented by the general formula [1b'] include, for example, the following compounds, but the compounds are not limited to these compounds.

- Lithium bis(oxalato)borate
- Lithium difluorooxalatoborate
- Lithium tetrafluoroborate
- Lithium perchlorate
- Lithium chloride
- Sodium bis(oxalato)borate
- Sodium difluorooxalatoborate
- Sodium tetrafluoroborate
- Sodium perchlorate
- Sodium chloride

Of these, from the viewpoint of resistance after high-temperature storage, one from the group consisting of lithium bis(oxalato)borate, lithium difluorooxalatoborate, lithium tetrafluoroborate, lithium perchlorate, sodium bis(oxalato)borate, sodium difluorooxalatoborate, sodium tetrafluoroborate, sodium perchlorate, potassium bis(oxalato)borate,

potassium difluorooxalatoborate, potassium tetrafluoroborate, and potassium perchlorate may be employed.

Since lithium or sodium is often used as the cation of a secondary battery, one from the group consisting of lithium bis(oxalato)borate, lithium difluorooxalatoborate, lithium tetrafluoroborate, lithium perchlorate, sodium bis(oxalato)borate, sodium difluorooxalatoborate, sodium tetrafluoroborate, and sodium perchlorate may be employed.

The lower limit of the (I-2) content in the nonaqueous electrolyte solution is 10 ppm (parts per million) by mass with respect to the total amount of the electrolyte solution and may be 30 ppm by mass or 70 ppm by mass. The upper limit with respect to the total amount of the electrolyte solution is 25000 ppm by mass and may be 15000 ppm by mass, 8000 ppm by mass, or 7000 ppm by mass. By setting the (I-2) content to 10 ppm by mass or more, the post-overdischarge discharge capacity retention rate after a high-temperature (70°C) storage test can be improved without impairing the low-temperature (-30°C) output characteristic (resistance after high-temperature storage). By setting the content to 8000 ppm by mass or less, the low-temperature (-30°C) output characteristic (resistance after high-temperature storage) and the post-overdischarge discharge capacity retention rate after a high-temperature (70°C) storage test can be both improved.

The compound represented by the general formula [1b] and the compound represented by the general formula [1b'] can be produced by various methods. The production method is not particularly limited. For example, commercially available products of KTSHIDA CHEMICAL CO., LTD. and the like can be used as lithium bis(oxalato)borate, lithium tetrafluoroborate, lithium perchlorate, and lithium chloride. As lithium difluorooxalatoborate, commercially available products of Merck and the like can be used. As the sodium salt, a commercially available product may be used in the same manner, or a product obtained by cation exchange of a lithium salt may be used.

In addition, when the nonaqueous electrolyte solution battery is a lithium ion battery, even when the content of the cations other than lithium in the nonaqueous electrolyte solution is about 2000 ppm by mass, the effect of the present disclosure of improving the low-temperature (-30°C) output characteristic after a high-temperature (70°C) storage test (resistance after high-temperature storage) and the post-overdischarge discharge capacity retention rate after a high-temperature (70°C) storage test in a well-balanced manner can be exhibited in the nonaqueous electrolyte solution of the present disclosure containing the (I-1) and a predetermined amount of the (I-2). This is advantageous in terms of controlling the content of the cations other than lithium contained in the raw material in the preparation of the nonaqueous electrolyte solution of the present disclosure. From the above viewpoint, when the nonaqueous electrolyte solution battery is a lithium ion battery, the content of the cations other than lithium in the nonaqueous electrolyte solution may be 2000 ppm by mass or less. From the viewpoint of the low-temperature (-30°C) output characteristic after a high-temperature (70°C) storage test (resistance after high-temperature storage) and the post-overdischarge discharge capacity retention rate after a high-temperature (70°C) storage test, the content of the cations other than lithium in the nonaqueous electrolyte solution is preferably as small as possible and is, for example, preferably 1000 ppm by mass or less, more preferably 500 ppm by mass or less, and particularly preferably 300 ppm by mass or less.

When the nonaqueous electrolyte solution battery is a lithium ion battery and when a cation other than lithium is contained in the nonaqueous electrolyte solution, examples of the nonaqueous electrolyte solution include a nonaqueous electrolyte solution composition in which the cation species of the solute is lithium, the cation species of (I-1) is lithium, and the cation species of (I-2) is other than lithium. The content of the cations other than lithium in the nonaqueous electrolyte solution of the lithium ion battery can be determined by ICP emission spectrometry.

In addition, when the nonaqueous electrolyte solution battery is a sodium ion battery, even when the content of the cations other than sodium in the nonaqueous electrolyte solution is about 700 ppm by mass, the effect of the present disclosure of improving the low-temperature (-30°C) output characteristic after a high-temperature (70°C) storage test (resistance after high-temperature storage) and the post-overdischarge discharge capacity retention rate after a high-temperature (70°C) storage test in a well-balanced manner can be exhibited in the nonaqueous electrolyte solution of the present disclosure containing the (I-1) and a predetermined amount of the (I-2). This is advantageous in terms of controlling the content of the cations other than sodium contained in the raw material in the preparation of the nonaqueous electrolyte solution of the present disclosure. From the above viewpoint, when the nonaqueous electrolyte solution battery is a sodium ion battery, the content of the cations other than sodium in the nonaqueous electrolyte solution may be 700 pp by mass or less. From the viewpoints of both the low-temperature (-30°C) output characteristic after a high-temperature (70°C) storage test (resistance after high-temperature storage) and the post-overdischarge discharge capacity retention rate after a high-temperature (70°C) storage test together, the content of the cations other than sodium in the nonaqueous electrolyte solution is preferably as small as possible and is, for example, preferably 500 ppm by mass or less, more preferably 400 ppm by mass or less, and particularly preferably 200 ppm by mass or less.

When the nonaqueous electrolyte solution battery is a sodium ion battery and when a cation other than sodium is contained in the nonaqueous electrolyte solution, examples of the nonaqueous electrolyte solution include a nonaqueous electrolyte solution composition in which the cation species of the solute is sodium, the cation species of (I-1) is sodium, and the cation species of the (I-2) is other than sodium. The content of the cations other than sodium in the nonaqueous electrolyte solution of the sodium ion battery can be determined by ICP emission spectrometry.

(II) Solute

The nonaqueous electrolyte solution of the present disclosure may further contain (II) a solute. The (II) solute may be at least one selected from the group consisting of $LiPF_6$, $LiSbF_6$, $LiAsF_6$, $LiCF_3SO_3$, $LiC_4F_9SO_3$, $LiAlO_2$, $LiAlCl_4$, $LiC(CF_3SO_2)_3$, $LiPF_3(C_3F_7)_3$, $LiB(CF_3)_4$, $LiBF_3(C_2F_5)$, and LiI or at least one selected from the group consisting of $NaPF_6$, $NaSbF_6$, $NaAsF_6$, $NaCF_3SO_3$, $NaC_4F_9SO_3$, $NaAlO_2$, $NaAlCl_4$, $NaC(CF_3SO_2)_3$, $NaPF_3(C_3F_7)_3$, $NaB(CF_3)_4$, $NaBF_3(C_2F_5)$, and NaI.

The concentration of the (II) solute is not particularly restricted. For example, the lower limit of the solute concentration may be 0.5 mol/L or more, 0.7 mol/L or more, or 0.9 mol/L or more. The upper limit of the solute concentration may be 2.5 mol/L or less, 2.0 mol/L or less, or 1.5 mol/L or less.

The liquid temperature for dissolving the solute in a nonaqueous organic solvent is not particularly limited but may be -20 to 80°C or 0 to 60°C.

(III) Nonaqueous Organic Solvent

The nonaqueous electrolyte solution of the present disclosure may further contain (III) a nonaqueous organic solvent. The type of the (III) nonaqueous organic solvent is not particularly limited, and any nonaqueous organic solvent can be used. Specific examples thereof include the following nonaqueous organic solvents.

Examples of the cyclic ester include cyclic carbonates such as propylene carbonate (hereinafter sometimes referred to as "PC"), ethylene carbonate (hereinafter sometimes referred to as "EC"), fluoroethylene carbonate (hereinafter sometimes referred to as "FEC"), and butylene carbonate as well as γ-butyrolactone, γ-valerolactone, and the like.

Examples of the chain ester include chain carbonates such as diethyl carbonate (hereinafter sometimes referred to as "DEC"), dimethyl carbonate (hereinafter sometimes referred to as "DMC"), and ethyl methyl carbonate (hereinafter sometimes referred to as "EMC") as well as methyl acetate, methyl propionate, ethyl propionate (hereinafter sometimes referred to as "EP"), and the like.

Examples of the cyclic ether include tetrahydrofuran, 2-methyltetrahydrofuran, dioxane, and the like.

Examples of the chain ether include dimethoxyethane, diethyl ether, and the like.

Other examples include sulfone compounds and sulfoxide compounds such as dimethyl sulfoxide and sulfolane and the like. In addition, an ionic liquid and the like can also be exemplified.

The (III) may be at least one selected from the group consisting of a cyclic ester, a chain ester, a cyclic ether, a chain ether, a sulfone compound, a sulfoxide compound, and an ionic liquid.

In an aspect, the (III) may contain a cyclic ester, and the cyclic ester may be a cyclic carbonate. Moreover, in an aspect, the (III) may contain a chain ester, and the chain ester may be a chain carbonate.

Further, one type of the nonaqueous organic solvents used in the present disclosure may be used alone, or two or more types thereof may be mixed and used in any combination and any proportion according to the application. Of these, from the viewpoint of the electrochemical stability against oxidation and reduction and the chemical stability relating to heat or the reaction with the solute, particularly, one from the group consisting of propylene carbonate, ethylene carbonate, fluoroethylene carbonate, diethyl carbonate, dimethyl carbonate, ethyl methyl carbonate, methyl propionate, and ethyl propionate may be used.

For example, when one or more types of cyclic carbonates having high permittivity and one or more types of chain carbonates or chain esters other than chain carbonates having low liquid viscosity are contained as the nonaqueous organic solvents, the ionic conductivity of the electrolyte solution is increased. Specifically, one containing any of the following combinations may be used.

(1) Combination of EC and EMC
(2) Combination of EC and DEC
(3) Combination of EC, DMC, and EMC
(4) Combination of EC, DEC, and EMC
(5) Combination of EC, EMC, and EP
(6) Combination of PC and DEC
(7) Combination of PC and EMC
(8) Combination of PC and EP
(9) Combination of PC, DMC, and EMC
(10) Combination of PC, DEC, and EMC
(11) Combination of PC, DEC, and EP
(12) Combination of PC, EC, and EMC
(13) Combination of PC, EC, DMC, and EMC
(14) Combination of PC, EC, DEC, and EMC

(15) Combination of PC, EC, EMC, and EP
(16) Combination of EC, FEC, DMC, and EMC
(17) Combination of EC, PC, FEC, and EMC
(18) Combination of EC, PC, FEC, DMC, and EMC
(19) Combination of EC, PC, FEC, DEC, and EMC

Other Additives

The basic configuration of the nonaqueous electrolyte solution of the present disclosure has been described above, but an additive which is generally used or the like may be added to the nonaqueous electrolyte solution of the present disclosure at any ratio as long as the gist of the present disclosure is not impaired.

The nonaqueous electrolyte solution of the present disclosure may further contain, as another additive, a compound having an overcharge prevention effect, a negative electrode film-forming effect, or a positive electrode protection effect, such as vinylene carbonate (hereinafter sometimes referred to as "VC"), an oligomer of vinylene carbonate (number average molecular weight in terms of polystyrene is 170 to 5000), vinyl ethylene carbonate, fluoroethylene carbonate (hereinafter sometimes referred to as "FEC"), dimethyl dicarbonate, ethynyl ethylene carbonate, trans-difluoroethylene carbonate, dimethyl vinylene carbonate, difluorobis(oxalato)phosphate, tetrafluorooxalato phosphate, (difluorophosphoryl)(fluorosulfonyl)imide salt, difluorophosphate, fluorosulfonate, nitrate, 1,3-propenesultone, 1,3-propanesultone, 1,6-diisocyanatohexane, 1,3,2-dioxathiolane-2,2-dioxide, 4-propyl-1,3,2-dioxathiolane-2,2-dioxide, methylenemethane disulfonate, 1,2-ethanedisulfonic anhydride, methanesulfonic anhydride, methanesulfonyl fluoride, 1,4-dioxane-2,6-dione, tripropargyl phosphate, tris(trimethylsilyl)borate, (ethoxy)pentafluorocyclotriphosphazene, tetrafluoro(malonato)phosphate, tetrafluoro(picolinato)phosphate, 1,3-dimethyl-1,3-divinyl-1,3-di(1,1,1,3,3,3-hexafluoroisopropyl)disiloxane, N,N'-carbonylbis(N-methylsulfamoylfluoride), tetravinylsilane, trivinylmethylsilane, t-butylbenzene, t-amylbenzene, fluorobenzene, cyclohexylbenzene, biphenyl, and difluoroanisole.

FEC can also be used as the nonaqueous organic solvent described above, but when the content in the electrolyte solution is 2% by mass or less, FEC can function as an additive and thus can also be used as the other additive.

Moreover, carboxylates such as lithium acrylate, sodium acrylate, lithium methacrylate, and sodium methacrylate, sulfate ester salts such as lithium methyl sulfate, sodium methyl sulfate, lithium ethyl sulfate, and sodium methyl sulfate, and the like may be contained.

In addition, as in the case of being used in a nonaqueous electrolyte solution battery referred to as a lithium polymer battery, the nonaqueous electrolyte solution can be quasi-solidified with a gelling agent or a cross-linked polymer before use.

Of the other additives listed above, at least one additive selected from the group consisting of vinylene carbonate, fluoroethylene carbonate, dimethyl dicarbonate, ethynyl ethylene carbonate, trans-difluoroethylene carbonate, difluorobis(oxalato)phosphate, tetrafluorooxalato phosphate, (difluorophosphoryl)(fluorosulfonyl)imide salt, difluorophosphate, fluorosulfonate, nitrate, 1,3-propenesultone, 1,3-propanesultone, 1,6-diisocyanatohexane, 1,3,2-dioxathiolane-2,2-dioxide, 4-propyl-1,3,2-dioxathiolane-2,2-dioxide, methylene methanedisulfonate, 1,2-ethanedisulfonic anhydride, methanesulfonic anhydride, methanesulfonyl fluoride, 1,4-dioxane-2,6-dione, tripropargyl phosphate, tris(trimethylsilyl)borate, (ethoxy)pentafluorocyclotriphosphazene, tetrafluoro(malonato)phosphate, tetrafluoro(picolinato)phosphate, 1,3-dimethyl-1,3-divinyl-1,3-di(1,1,1,3,3,3-hexafluoroisopropyl)disiloxane, N,N'-carbonylbis(N-methylsulfamoylfluoride), tetravinylsilane, trivinylmethylsilane, t-butylbenzene, t-amylbenzene, fluorobenzene, and cyclohexylbenzene may be contained.

When the nonaqueous electrolyte solution according to the present embodiment contains the other additive, the content thereof may be 0.01% by mass or more and 5.00% by mass or less with respect to the total amount of the nonaqueous electrolyte solution.

The nonaqueous electrolyte solution of the present disclosure is suitably used for a nonaqueous electrolyte solution battery (preferably a nonaqueous electrolyte solution secondary battery).

2. Nonaqueous Electrolyte Solution Battery

The nonaqueous electrolyte solution battery of the present disclosure includes at least the nonaqueous electrolyte solution of the present disclosure described above, a negative electrode, and a positive electrode. Further, a separator, an exterior body, and the like may be included.

The nonaqueous electrolyte solution battery of the present disclosure preferably includes at least a positive electrode, a negative electrode, a separator, and the nonaqueous electrolyte solution of the present disclosure.

The nonaqueous electrolyte solution battery of the present disclosure is preferably a nonaqueous electrolyte solution secondary battery.

The negative electrode is not particularly limited, but a material capable of reversibly intercalating and

deintercalating alkali metal ions such as lithium ions and sodium ions or alkaline earth metal ions may be used.

For example, in the case of a lithium ion secondary battery in which cations are mainly lithium, the negative electrode active material constituting the negative electrode is one capable of doping and dedoping lithium ions. Examples of the negative electrode active material include a material containing at least one selected from a carbon material in which the d value of the lattice plane (002) plane in X-ray diffraction is 0.340 nm or less, a carbon material in which the d value of the lattice plane (002) plane in X-ray diffraction exceeds 0.340 nm, oxides of one or more metals selected from Si, Sn, and Al, one or more metals selected from Si, Sn, and Al, alloys containing these metals, alloys of the metals or the alloys and lithium, and lithium titanium oxide. One type of these negative electrode active materials can be used alone, or two or more types thereof can be used in combination. Lithium metal, a metal nitride, a tin compound, a conductive polymer, and the like may also be used.

Preferable examples of the negative electrode active material include those containing Si and/or an Si metal oxide and a carbon material. The Si is silicon metal. The Si metal oxide may be a compound represented by SiOx (x is a value of 0.5 to 1.5). Here, the total content of the Si and/or the Si metal oxide contained in the negative electrode active material may be 0.1 to 50% by mass and preferably 0.1 to 30% by mass, when the total amount of the Si and/or the Si metal oxide and the carbon material contained in the negative electrode active material is 100% by mass. As the carbon material, graphite is preferable, and various types of artificial graphite, natural graphite, and hard carbon (non-graphitizing carbon) can be used. With graphite, the change in crystal structure due to occlusion and release of lithium is very small, and thus a high energy density and excellent cycle characteristic can be obtained. The shape of the graphite may be any of a fibrous shape, a spherical shape, a granular shape, and a scale-like shape. Amorphous carbon or graphite coated with amorphous carbon on the surface is more preferable because the reactivity between the surface of the material and the electrolyte solution is low.

One type of these negative electrode active materials can be used alone, or two or more types thereof can be used in combination.

For example, in the case of a sodium ion secondary battery in which the cations are mainly sodium, as the negative electrode active material constituting the negative electrode, sodium metal, an alloy of sodium metal and another metal such as tin, an intermetallic compound of sodium metal and another metal, various carbon materials such as hard carbon, a metal oxide such as titanium oxide, a metal nitride, (elemental) tin, a tin compound, activated carbon, a conductive polymer, and the like may be used. In addition to these, (elemental) phosphorus such as red phosphorus and black phosphorus, phosphorus compounds such as Co-P, Cu-P, Sn-P, Ge-P, and Mo-P, (elemental) antimony, antimony compounds such as Sb/C and Bi-Sb, and the like may be used. One type of these negative electrode active materials may be used alone, or two or more types thereof may be used in combination.

The positive electrode is not particularly limited, but a material capable of reversibly intercalating and deintercalating alkali metal ions such as lithium ions and sodium ions or alkaline earth metal ions may be used.

For example, when the cation is lithium, lithium-containing transition metal oxide composites such as $LiCoO_2$, $LiNiO_2$, $LiMnO_2$, and $LiMn_2O_4$, lithium-containing transition metal oxide composites including a mixture of a plurality of transition metals in the lithium-containing transition metal oxide composites such as Co, Mn, and Ni, or lithium-containing transition metal oxide composites in which a part of the transition metals in the lithium-containing transition metal oxide composites is substituted with a metal other than the transition metals may be used as a positive electrode material. Specific examples thereof include $Li[Ni_{1/3}Mn_{1/3}Co_{1/3}]O_2$, $Li[Ni_{0.45}Mn_{0.35}Co_{0.2}]O_2$, $Li[Ni_{0.5}Mn_{0.3}Co_{0.2}]O_2$, $Li[Ni_{0.6}Mn_{0.2}Co_{0.2}]O_2$, $Li[Ni_{0.8}Mn_{0.1}Co_{0.1}]O_2$ (hereinafter sometimes referred to as "NCM811"), $Li[Ni_{0.49}Mn_{0.3}Co_{0.2}Zr_{0.01}]O_2$, $Li[Ni_{0.49}Mn_{0.3}Co_{0.2}Mg_{0.01}]O_2$, $LiNi_{0.8}Co_{0.2}O_2$, $LiNi_{0.85}Co_{0.10}Al_{0.05}O_2$, $LiNi_{0.87}Co_{0.10}Al_{0.03}O_2$, $LiNi_{0.90}Co_{0.07}Al_{0.03}O_2$, $LiNi_{0.6}Co_{0.3}Al_{0.1}O_2$, $LiNi_{0.5}Mn_{1.5}O_4$, $LiNi_{0.5}Mn_{0.5}O_2$, $LiNi_{0.1}Mn_{1.9}O_4$, $LiCo_{0.5}Mn_{0.5}O_2$, $0.5[LiNi_{0.5}Mn_{0.5}O_2]\cdot 0.5[Li_2MnO_3]$, $0.5[LiNi_{1/3}Co_{1/3}Mn_{1/3}O_2]\cdot 0.5[Li_2MnO_3]$, $0.5[LiNi_{0.375}Co_{0.25}Mn_{0.375}O_2]\cdot 0.5[Li_2MnO_3]$, $0.5[LiNi_{0.375}Co_{0.125}Fe_{0.125}Mn_{0.375}O_2]\cdot 0.5[Li_2MnO_3]$, $0.45[LiNi_{0.375}Co_{0.25}Mn_{0.375}O_2]\cdot 0.10[Li_2TiO_3]\cdot 0.45[Li_2MnO_3]$, and the like.

In addition, phosphoric acid compounds of transition metals such as $LiFePO_4$ called olivine, $LiCoPO_4$, and $LiMnPO_4$, oxides such as $TiO_2$, $V_2O_5$, and $MoO_3$, sulfides such as $TiS_2$ and FeS, conductive polymers such as polyacetylene, polyparaphenylene, polyaniline, and polypyrrole, activated carbon, radical-generating polymers, carbon materials, and the like may be used.

For example, when the cation is sodium, sodium-containing transition metal oxide composites such as $NaCrO_2$, $NaFe_{0.5}Co_{0.5}O_2$, $NaFe_{0.4}Mn_{0.3}Ni_{0.3}O_2$, $NaNi_{0.5}Ti_{0.3}Mn_{0.2}O_2$, $NaNi_{1/3}Ti_{1/3}Mn_{1/3}O_2$, $NaNi_{0.33}Ti_{0.33}Mn_{0.16}Mg_{0.17}O_2$, $Na_{2/3}Ni_{1/3}Ti_{1/6}Mn_{1/2}O_2$, and $Na_{2/3}Ni_{1/3}Mn_{2/3}O_2$, sodium-containing transition metal oxide composites including a mixture of a plurality of transition metals in the sodium-containing transition metal oxide composites such as Co, Mn, and Ni, sodium-containing transition metal oxide composites in which a part of the transition metals in the sodium-containing transition metal oxide composites is substituted with a metal other than the transition metals, polyanion type compounds such as $NaFePO_4$, $NaVPO_4F$, $Na_3V_2(PO_4)_3$, and $Na_2Fe_2(SO_4)_3$, sodium salts of Prussian Blue analogues represented by a compositional formula $Na_aM_b[Fe(CN)_6]_c$ (M represents Cr, Mn, Fe, Co, Ni, Cu, or Zn, $0 \leq a \leq 2$, $0.5 \leq b \leq 1.5$, and $0.5 \leq c \leq 1.5$), oxides such as $TiO_2$, $V_2O_5$, and $MoO_3$, sulfides such as $TiS_2$ and FeS, conductive polymers such as polyacetylene,

polyparaphenylene, polyaniline, and polypyrrole, activated carbon, radical-generating polymers, carbon materials, and the like may be used as a positive electrode material (positive electrode active material).

Acetylene black, Ketjen black, carbon fibers, or graphite as a conductive material and polytetrafluoroethylene, polyvinylidene fluoride, SBR resin, or the like as a binder may be added to the positive electrode and negative electrode materials, and an electrode sheet molded into a sheet shape may also be used.

As a separator for preventing contact between the positive electrode and the negative electrode, a nonwoven fabric or a porous sheet made of polypropylene, polyethylene, paper, glass fibers, or the like may be used.

An electrochemical device having a shape such as a coin shape, a cylindrical shape, a square shape, or an aluminum laminate sheet shape is assembled with the above elements.

## Examples

Hereinafter, the present disclosure will be specifically explained with Examples, but the present disclosure is not limited by these Examples.

### <Synthesis Example 1> $LiN(SO_2F)(COCN)$

Synthesis of Compound ($LiN(SO_2F)(COCN)$)

To a 100-ml pear-shaped flask, 40 g of acetonitrile (MeCN), 5 g (50 mmol) of sulfamoylfluoride, and 2.5 g (50 mmol) of sodium cyanide were charged, and then 5.5 g (56 mmol) of phosgene was slowly added thereto. After stirring at 40°C or lower for one hour, concentration was performed. Then, 0.4 g (50 mmol) of lithium hydride was added, and the mixture was further stirred for one hour. After filtration of the insoluble matter, the filtrate was concentrated to obtain 7.6 g (recovery rate: 95%) of a compound ($LiN(SO_2F)(COCN)$).

### <Synthesis Example 2> $LiN(SO_2F)(CO(OCN))$

Synthesis of Compound ($LiN(SO_2F)(CO(OCN))$)

To a 100-ml pear-shaped flask, 40 g of MeCN, 5 g (50 mmol) of sulfamoylfluoride, and 3.3 g (50 mmol) of sodium cyanate were charged, and then 5.5 g (56 mmol) of phosgene was slowly added thereto. After stirring at 40°C or lower for one hour, concentration was performed. Then, 0.4 g (50 mmol) of lithium hydride was added, and the mixture was further stirred for one hour. After filtration of the insoluble matter, the filtrate was concentrated to obtain 7.9 g (recovery rate: 90%) of a compound ($LiN(SO_2F)(CO(OCN))$).

The Li salt of a bis(oxalato)borate anion (also referred to as "BOB") and the Li salts, the Na salts, and the K salts of $BF_4$ and $ClO_4$ used were purchased from Kishida Chemical Co., Ltd. In addition, the Na salt and the K salt of BOB were obtained by cation exchange of the Li salt of BOB.

### <Preparation of Nonaqueous Electrolyte Solution (NCM811 Positive Electrode/Silicon-Containing Graphite Negative Electrode)>

As a nonaqueous organic solvent, a mixed solvent obtained by mixing ethylene carbonate (hereinafter also referred to as "EC"), fluoroethylene carbonate (hereinafter also referred to as "FEC"), dimethyl carbonate (hereinafter also referred to as "DMC"), and ethyl methyl carbonate (hereinafter also referred to as "EMC") at a volume ratio of EC: FEC: DMC: EMC = 3: 0.2: 3: 3.8 was used, and lithium hexafluorophosphate (hereinafter also referred to as "$LiPF_6$") as a solute was dissolved in the solvent in such a manner that the content in the nonaqueous electrolyte solution became 1.00 mol/L. Further, $LiN(SO_2F)(COCN)$ as (I-1) was dissolved in such a manner that the content (concentration) in the nonaqueous electrolyte solution became 0.05% by mass to prepare a nonaqueous electrolyte solution R1-1 of Comparative Example 1-1. The above preparation was performed while maintaining the liquid temperature at 25°C. In addition, the respective components were dissolved in the same manner as described above except that the type and the content (concentration) of (I-1) and the type and the content (concentration) of (I-2) were changed, and nonaqueous electrolyte solutions of the Examples and the Comparative Examples shown in Tables 1 to 16 below were prepared.

### <Preparation of Nonaqueous Electrolyte Solution (LFP Positive Electrode/Natural Graphite Negative Electrode)>

As a nonaqueous organic solvent, a mixed solvent obtained by mixing EC, FEC, DMC, and EMC at a volume ratio of EC: FEC: DMC: EMC = 3: 0.2: 3: 3.8 was used, and $LiPF_6$ as a solute was dissolved in the solvent in such a manner that the content in the nonaqueous electrolyte solution became 1.00 mol/L. Further, vinylene carbonate (hereinafter also

referred to as "VC") was dissolved at 0.5% by mass, and $LiN(SO_2F)(COCN)$ as (I-1) was dissolved in such a manner that the content (concentration) in the nonaqueous electrolyte solution became 0.05% by mass to prepare a nonaqueous electrolyte solution Ral-1 of Comparative Example a1-1. The above preparation was performed while maintaining the liquid temperature at 25°C. In addition, the respective components were dissolved in the same manner as described above except that the type and the content (concentration) of (I-1) and the type and the content (concentration) of (I-2) were changed, and nonaqueous electrolyte solutions of the Examples and the Comparative Examples shown in Tables 23 to 38 below were prepared.

(Production of NCM811 Positive Electrode)

In 92.0% by mass of $LiNi_{0.8}Mn_{0.1}Co_{0.1}O_2$ powder, 3.5% by mass of polyvinylidene fluoride (hereinafter also referred to as "PVDF") as a binder and 4.5% by mass of acetylene black as a conductive material were mixed, and 45% by mass of N-methyl-2-pyrrolidone (hereinafter also referred to as "NMP") with respect to the total mass of the $LiNi_{0.8}Mn_{0.1}Co_{0.1}O_2$ powder, the binder, and the conductive material was added to produce a positive electrode mixture paste. The paste was applied onto both sides of an aluminum foil (A1085), dried, pressed and then punched into 4 cm × 5 cm to obtain an NCM811 positive electrode for testing.

(Production of LFP Positive Electrode)

In 92.0% by mass of $LiFePO_4$ powder, 3.5% by mass of PVDF as a binder and 4.5% by mass of acetylene black as a conductive material were mixed, and 48% by mass of NMP with respect to the total mass of the $LiFePO_4$ powder, the binder, and the conductive material was further added to produce a positive electrode mixture paste. The paste was applied onto both sides of an aluminum foil (A1085), dried, pressed and then punched into 4 cm × 5 cm to obtain an LFP positive electrode for testing.

(Production of Natural Graphite Negative Electrode)

By mixing 92% by mass of natural graphite powder, 3% by mass of a conductive material (HS-100 manufactured by Denka Company Limited), 2% by mass of carbon nanofiber (VGCF manufactured by Showa Denko K.K.), 2% by mass of styrene-butadiene rubber (hereinafter also referred to as "SBR"), 1% by mass of sodium carboxymethyl cellulose (hereinafter also referred to as "CMC"), and water, a negative electrode mixture paste was produced. The paste was applied onto a copper foil, dried, pressed and then punched into 4.5 cm × 5.5 cm to obtain a natural graphite negative electrode for testing.

(Production of Silicon-Containing Graphite Negative Electrode)

In 85% by mass of artificial graphite powder, 7% by mass of nanosilicon, 3% by mass of a conductive material (HS-100 manufactured by Denka Company Limited), 2% by mass of carbon nanofiber (VGCF manufactured by Showa Denko K.K.), 2% by mass of SBR, 1% by mass of CMC, and water were mixed to produce a negative electrode mixture paste. The paste was applied onto a copper foil, dried, pressed and then punched into 4.5 cm × 5.5 cm to obtain a silicon-containing graphite negative electrode for testing.

(Production of Nonaqueous Electrolyte Solution Battery)

Under an argon atmosphere at a dew point of -50°C or lower, a terminal was welded to the above NCM811 positive electrode, and both sides of the welded product were then sandwiched between two polyethylene separators (5 cm × 6 cm). The outside of the sandwiched product was sandwiched between two silicon-containing graphite negative electrodes to which a terminal had been welded in advance in such a manner that the surface of the negative electrode active material faced the surface of the positive electrode active material. The resultant product was put in an aluminum laminated bag having an opening on one side, and after the nonaqueous electrolyte solution prepared above was vacuum-injected into the bag, the opening was sealed with heat. In this manner, the aluminum laminated nonaqueous electrolyte solution batteries (NCM811 positive electrode/silicon-containing graphite negative electrode) according to the Examples and the Comparative Examples in Tables 1 to 16 below were produced.

In the Examples and the Comparative Examples in Tables 23 to 38, nonaqueous electrolyte solution batteries (LFP positive electrode/natural graphite negative electrode) were similarly produced as described above using the LFP positive electrode as the positive electrode and the natural graphite negative electrode as the negative electrode.

<Evaluation of Low-Temperature (-30°C) Output Characteristic After High-Temperature (70°C) Storage Test (Resistance After High-Temperature Storage) (NCM811 Positive Electrode/Silicon-Containing Graphite Negative Electrode)>

Each nonaqueous electrolyte solution battery (cell) produced as described above was left to stand at an ambient temperature of 25°C for 12 hours (impregnation time: 12 hours) and then conditioned at an ambient temperature of 25°C under the following conditions. That is, as initial charge and discharge, a charge and discharge cycle including constant-current constant-voltage charging at an upper limit charge voltage of 4.3 V and at 0.1 C rate (9 mA), discharging at 0.2 C rate constant current to a discharge end voltage of 2.7 V, subsequent constant-current constant-voltage charging at an upper limit charge voltage of 4.3 V and at 0.2 C rate, and discharging at 0.2 C rate constant current to a discharge end voltage of 2.7 V was repeated three times.

Further, a storage test was performed under the following conditions. That is, the cell subjected to the conditioning was subjected to constant-current constant-voltage charging at an upper limit charge voltage of 4.3 V and at 0.2 C rate and stored for one week in an environment at 70°C.

After the storage test was performed, the cell was subjected to discharging at 0.2 C rate constant current to a discharge end voltage of 2.7 V at an ambient temperature of 25°C and constant-current constant-voltage charging at 0.2 C rate by a constant-current constant-voltage method to an upper limit charge voltage of 4.3 V, and the discharge capacity (discharge capacity at -30°C) at the time of discharging at 5 C rate constant current to a discharge end voltage of 2.7 V at an ambient temperature of -30°C was measured.

In each table, the relative values of the capacities of the Examples and the Comparative Examples are shown, where the capacity of Comparative Example 0-1 using the nonaqueous electrolyte solution R0-1 without containing (I-1) and (I-2) is set to 100. A larger value thereof means that the discharge capacity at a low temperature after high-temperature storage is higher, that is, the resistance after high-temperature storage is smaller.

<Evaluation of Post-Overdischarge Discharge Capacity Retention Rate (NCM811 Positive Electrode/Silicon-Containing Graphite Negative Electrode)>

For each cell subjected to the high-temperature (70°C) storage test as described above, a charge and discharge cycle including constant-current constant-voltage charging at an upper limit charge voltage of 4.3 V and at 0.2 C rate and discharging at 0.2 C rate constant current to a discharge end voltage of 2.7 V was repeated three times at an ambient temperature of 25°C. The third discharge capacity is defined as the capacity before the overdischarge test.

After the above operation is performed, the cell in the discharged state is further discharged to 0 V with constant resistance of 75 Ω to bring the cell into an overdischarged state, and the cell is left to stand at an ambient temperature of 25°C for three days. After the cell was left to stand, the cell was again subjected, at an ambient temperature of 25°C, to constant-current constant-voltage charging at an upper limit charge voltage of 4.3 V and at 0.2 C rate and discharging at 0.2 C rate constant current to a discharge end voltage of 2.7 V. The discharge capacity at that time (the capacity after the overdischarge test) was measured, and the capacity retention rate based on the capacity before the overdischarge test (post-overdischarge discharge capacity retention rate) was determined by the following equation. In each table, the "post-overdischarge discharge capacity retention rates" which are the relative values of the capacity retention rates of the Examples and the Comparative Examples are shown, where the capacity retention rate of Comparative Example 0-1 is set to 100.

Post-overdischarge discharge capacity retention rate (%) = (capacity after overdischarge test/capacity before overdischarge test) $\times$ 100

In the tables, "E1" shows the discharge capacity at the low temperature after high-temperature storage (discharge capacity at -30°C) (relative value), and "E2" shows the post-overdischarge discharge capacity retention rate (relative value).

[Table 1]

Table 1

| | Nonaqueous Electrolyte Solution | (I-1) | | | (I-2) | | | E1 | E2 |
|---|---|---|---|---|---|---|---|---|---|
| | | Type | | Concentration | Type | | Concentration | | |
| | | Anion | Cation | [% by mass] | Anion | Cation | [ppm by mass] | | |
| Comparative Example 0-1 | R0-1 | $N\text{-}(SO_2F)(COCN)$ | $Li^+$ | 0.00 | BOB | $Na^+$ | 0 | 100 | 100 |
| Comparative Example 0-2 | R0-2 | | | | | | 20 | 100 | 100 |
| Comparative Example 0-3 | R0-3 | | | | | | 50 | 100 | 100 |
| Comparative Example 0-4 | R0-4 | | | | | | 500 | 100 | 100 |
| Comparative Example 0-5 | R0-5 | | | | | | 2500 | 102 | 98 |
| Comparative Example 0-6 | R0-6 | | | | | | 5000 | 104 | 95 |
| Comparative Example 0-7 | R0-7 | | | | | | 6500 | 102 | 92 |
| Comparative Example 0-8 | R0-8 | | | | | | 7500 | 101 | 90 |
| Comparative Example 0-9 | R0-9 | | | | | | 10000 | 99 | 89 |
| Comparative Example 0-10 | R0-10 | | | | | | 20000 | 97 | 88 |
| Comparative Example 0-11 | R0-11 | | | | | | 30000 | 95 | 87 |
| Comparative Example 1-1 | R1-1 | | $Li^+$ | 0.05 | BOB | $Na^+$ | 0 | 102 | 107 |
| Example 1-1 | 1-1 | | | | | | 20 | 102 | 108 |
| Example 1-2 | 1-2 | | | | | | 50 | 102 | 109 |
| Example 1-3 | 1-3 | | | | | | 500 | 104 | 109 |
| Example 1-4 | 1-4 | | | | | | 2500 | 106 | 109 |
| Example 1-5 | 1-5 | | | | | | 5000 | 107 | 110 |
| Example 1-6 | 1-6 | | | | | | 6500 | 107 | 112 |
| Example 1-7 | 1-7 | | | | | | 7500 | 106 | 113 |
| Example 1-8 | 1-8 | | | | | | 10000 | 104 | 114 |
| Example 1-9 | 1-9 | | | | | | 20000 | 101 | 119 |
| Comparative Example 1-2 | R1-2 | | | | | | 30000 | 99 | 115 |
| Comparative Example 2-1 | R2-1 | | | | | | 0 | 106 | 112 |

(continued)

| | Nonaqueous Electrolyte Solution | (I-1) | | | (I-2) | | | E1 | E2 |
|---|---|---|---|---|---|---|---|---|---|
| | | Type | | Concentration | Type | | Concentration | | |
| | | Anion | Cation | [% by mass] | Anion | Cation | [ppm by mass] | | |
| Example 2-1 | 2-1 | | $Li^+$ | 0.25 | BOB | $Na^+$ | 20 | 106 | 113 |
| Example 2-2 | 2-2 | | | | | | 50 | 106 | 114 |
| Example 2-3 | 2-3 | | | | | | 500 | 108 | 114 |
| Example 2-4 | 2-4 | | | | | | 2500 | 110 | 114 |
| Example 2-5 | 2-5 | | | | | | 5000 | 111 | 115 |
| Example 2-6 | 2-6 | | | | | | 6500 | 112 | 116 |
| Example 2-7 | 2-7 | | | | | | 7500 | 111 | 118 |
| Example 2-8 | 2-8 | | | | | | 10000 | 108 | 120 |
| Example 2-9 | 2-9 | | | | | | 20000 | 105 | 124 |
| Comparative Example 2-2 | R2-2 | | | | | | 30000 | 103 | 120 |
| Comparative Example 3-1 | R3-1 | | $Li^+$ | 0.50 | BOB | $Na^+$ | 0 | 110 | 126 |
| Example 3-1 | 3-1 | | | | | | 20 | 110 | 128 |
| Example 3-2 | 3-2 | | | | | | 50 | 110 | 128 |
| Example 3-3 | 3-3 | | | | | | 500 | 112 | 129 |
| Example 3-4 | 3-4 | | | | | | 2500 | 114 | 129 |
| Example 3-5 | 3-5 | | | | | | 5000 | 115 | 130 |
| Example 3-6 | 3-6 | | | | | | 6500 | 116 | 131 |
| Example 3-7 | 3-7 | | | | | | 7500 | 115 | 133 |
| Example 3-8 | 3-8 | | | | | | 10000 | 112 | 135 |
| Example 3-9 | 3-9 | | | | | | 20000 | 109 | 138 |
| Comparative Example 3-2 | R3-2 | | | | | | 30000 | 107 | 136 |

[Table 2]

Table 2

| | Nonaqueous Electrolyte Solution | (I-1) | | | (I-2) | | | E1 | E2 |
|---|---|---|---|---|---|---|---|---|---|
| | | Type | | Concentration | Type | | Concentration | | |
| | | Anion | Cation | [% by mass] | Anion | Cation | [ppm by mass] | | |
| Comparative Example 4-1 | R4-1 | N-(SO$_2$F)(COCN) | Li$^+$ | 1.00 | BOB | Na$^+$ | 0 | 113 | 136 |
| Example 4-1 | 4-1 | | | | | | 20 | 113 | 137 |
| Example 4-2 | 4-2 | | | | | | 50 | 113 | 138 |
| Example 4-3 | 4-3 | | | | | | 500 | 115 | 139 |
| Example 4-4 | 4-4 | | | | | | 2500 | 117 | 139 |
| Example 4-5 | 4-5 | | | | | | 5000 | 119 | 140 |
| Example 4-6 | 4-6 | | | | | | 6500 | 120 | 141 |
| Example 4-7 | 4-7 | | | | | | 7500 | 119 | 142 |
| Example 4-8 | 4-8 | | | | | | 10000 | 115 | 145 |
| Example 4-9 | 4-9 | | | | | | 20000 | 112 | 149 |
| Comparative Example 4-2 | R4-2 | | | | | | 30000 | 110 | 146 |
| Comparative Example 5-1 | R5-1 | | Li$^+$ | 2.00 | BOB | Na$^+$ | 0 | 118 | 139 |
| Example 5-1 | 5-1 | | | | | | 20 | 118 | 140 |
| Example 5-2 | 5-2 | | | | | | 50 | 118 | 141 |
| Example 5-3 | 5-3 | | | | | | 500 | 120 | 141 |
| Example 5-4 | 5-4 | | | | | | 2500 | 121 | 141 |
| Example 5-5 | 5-5 | | | | | | 5000 | 122 | 143 |
| Example 5-6 | 5-6 | | | | | | 6500 | 123 | 144 |
| Example 5-7 | 5-7 | | | | | | 7500 | 123 | 145 |
| Example 5-8 | 5-8 | | | | | | 10000 | 119 | 148 |
| Example 5-9 | 5-9 | | | | | | 20000 | 117 | 153 |
| Comparative Example 5-2 | R5-2 | | | | | | 30000 | 115 | 150 |
| Comparative Example 6-1 | R6-1 | | | | | | 0 | 112 | 140 |

(continued)

| | Nonaqueous Electrolyte Solution | (I-1) | | | (I-2) | | | E1 | E2 |
|---|---|---|---|---|---|---|---|---|---|
| | | Type | | Concentration | Type | | Concentration | | |
| | | Anion | Cation | [% by mass] | Anion | Cation | [ppm by mass] | | |
| Example 6-1 | 6-1 | | | | | | 20 | 113 | 141 |
| Example 6-2 | 6-2 | | | | | | 50 | 114 | 142 |
| Example 6-3 | 6-3 | | | | | | 500 | 114 | 142 |
| Example 6-4 | 6-4 | | | | | | 2500 | 116 | 142 |
| Example 6-5 | 6-5 | | $Li^+$ | 4.00 | BOB | $Na^+$ | 5000 | 116 | 144 |
| Example 6-6 | 6-6 | | | | | | 6500 | 116 | 145 |
| Example 6-7 | 6-7 | | | | | | 7500 | 115 | 146 |
| Example 6-8 | 6-8 | | | | | | 10000 | 113 | 149 |
| Example 6-9 | 6-9 | | | | | | 20000 | 111 | 154 |
| Comparative Example 6-2 | R6-2 | | | | | | 30000 | 110 | 151 |

[Table 3]

Table 3

| | Nonaqueous Electrolyte Solution | (I-1) | | | (I-2) | | | E1 | E2 |
|---|---|---|---|---|---|---|---|---|---|
| | | Type | | Concentration | Type | | Concentration | | |
| | | Anion | Cation | [% by mass] | Anion | Cation | [ppm by mass] | | |
| Comparative Example 0-1 | R0-1 | | | | | | 0 | 100 | 100 |
| Comparative Example 0-12 | R0-12 | | | | | | 20 | 100 | 100 |
| Comparative Example 0-13 | R0-13 | | | | | | 50 | 101 | 100 |
| Comparative Example 0-14 | R0-14 | | | | | | 500 | 102 | 98 |
| Comparative Example 0-15 | R0-15 | | | | | | 2500 | 108 | 96 |
| Comparative Example 0-16 | R0-16 | | $Li^+$ | 0.00 | $BF_4$ | $Na^+$ | 5000 | 108 | 95 |
| Comparative Example 0-17 | R0-17 | | | | | | 6500 | 104 | 93 |
| Comparative Example 0-18 | R0-18 | | | | | | 7500 | 102 | 91 |
| Comparative Example 0-19 | R0-19 | | | | | | 10000 | 100 | 91 |
| Comparative Example 0-20 | R0-20 | | | | | | 20000 | 96 | 88 |
| Comparative Example 0-21 | R0-21 | | | | | | 30000 | 94 | 84 |
| Comparative Example 7-1 | R7-1 | | | | | | 0 | 102 | 107 |
| Example 7-1 | 7-1 | | | | | | 20 | 102 | 108 |
| Example 7-2 | 7-2 | | | | | | 50 | 103 | 111 |
| Example 7-3 | 7-3 | | | | | | 500 | 106 | 111 |
| Example 7-4 | 7-4 | | | | | | 2500 | 112 | 113 |
| Example 7-5 | 7-5 | | $Li^+$ | 0.05 | $BF_4$ | $Na^+$ | 5000 | 111 | 121 |
| Example 7-6 | 7-6 | | | | | | 6500 | 110 | 123 |
| Example 7-7 | 7-7 | | | | | | 7500 | 108 | 128 |
| Example 7-8 | 7-8 | $N-(SO_2F)(COCN)$ | | | | | 10000 | 105 | 135 |
| Example 7-9 | 7-9 | | | | | | 20000 | 100 | 145 |
| Comparative Example 7-2 | R7-2 | | | | | | 30000 | 97 | 142 |
| Comparative Example 8-1 | R8-1 | | | | | | 0 | 106 | 112 |

(continued)

| | Nonaqueous Electrolyte Solution | (I-1) | | | (I-2) | | | E1 | E2 |
|---|---|---|---|---|---|---|---|---|---|
| | | Type | | Concentration | Type | | Concentration | | |
| | | Anion | Cation | [% by mass] | Anion | Cation | [ppm by mass] | | |
| Example 8-1 | 8-1 | | $Li^+$ | 0.25 | $BF_4$ | $Na^+$ | 20 | 106 | 113 |
| Example 8-2 | 8-2 | | | | | | 50 | 107 | 116 |
| Example 8-3 | 8-3 | | | | | | 500 | 110 | 117 |
| Example 8-4 | 8-4 | | | | | | 2500 | 116 | 119 |
| Example 8-5 | 8-5 | | | | | | 5000 | 116 | 127 |
| Example 8-6 | 8-6 | | | | | | 6500 | 115 | 128 |
| Example 8-7 | 8-7 | | | | | | 7500 | 113 | 135 |
| Example 8-8 | 8-8 | | | | | | 10000 | 109 | 142 |
| Example 8-9 | 8-9 | | | | | | 20000 | 104 | 155 |
| Comparative Example 8-2 | R8-2 | | | | | | 30000 | 101 | 152 |
| Comparative Example 9-1 | R9-1 | | $Li^+$ | 0.50 | $BF_4$ | $Na^+$ | 0 | 110 | 126 |
| Example 9-1 | 9-1 | | | | | | 20 | 110 | 127 |
| Example 9-2 | 9-2 | | | | | | 50 | 112 | 131 |
| Example 9-3 | 9-3 | | | | | | 500 | 114 | 131 |
| Example 9-4 | 9-4 | | | | | | 2500 | 121 | 134 |
| Example 9-5 | 9-5 | | | | | | 5000 | 120 | 143 |
| Example 9-6 | 9-6 | | | | | | 6500 | 119 | 145 |
| Example 9-7 | 9-7 | | | | | | 7500 | 117 | 149 |
| Example 9-8 | 9-8 | | | | | | 10000 | 113 | 159 |
| Example 9-9 | 9-9 | | | | | | 20000 | 108 | 168 |
| Comparative Example 9-2 | R9-2 | | | | | | 30000 | 105 | 166 |

[Table 4]

Table 4

| | Nonaqueous Electrolyte Solution | (I-1) | | | (I-2) | | | E1 | E2 |
|---|---|---|---|---|---|---|---|---|---|
| | | Type | | Concentration | Type | | Concentration | | |
| | | Anion | Cation | [% by mass] | Anion | Cation | [ppm by mass] | | |
| Comparative Example 10-1 | R10-1 | $N-(SO_2F)(COCN)$ | $Li^+$ | 1.00 | $BF_4$ | $Na^+$ | 0 | 113 | 136 |
| Example 10-1 | 10-1 | | | | | | 20 | 113 | 137 |
| Example 10-2 | 10-2 | | | | | | 50 | 115 | 141 |
| Example 10-3 | 10-3 | | | | | | 500 | 117 | 141 |
| Example 10-4 | 10-4 | | | | | | 2500 | 124 | 144 |
| Example 10-5 | 10-5 | | | | | | 5000 | 123 | 154 |
| Example 10-6 | 10-6 | | | | | | 6500 | 123 | 157 |
| Example 10-7 | 10-7 | | | | | | 7500 | 121 | 163 |
| Example 10-8 | 10-8 | | | | | | 10000 | 116 | 172 |
| Example 10-9 | 10-9 | | | | | | 20000 | 111 | 179 |
| Comparative Example 10-2 | R10-2 | | | | | | 30000 | 108 | 177 |
| Comparative Example 11-1 | R11-1 | | $Li^+$ | 2.00 | $BF_4$ | $Na^+$ | 0 | 118 | 139 |
| Example 11-1 | 11-1 | | | | | | 20 | 118 | 140 |
| Example 11-2 | 11-2 | | | | | | 50 | 120 | 144 |
| Example 11-3 | 11-3 | | | | | | 500 | 122 | 144 |
| Example 11-4 | 11-4 | | | | | | 2500 | 129 | 147 |
| Example 11-5 | 11-5 | | | | | | 5000 | 127 | 157 |
| Example 11-6 | 11-6 | | | | | | 6500 | 126 | 161 |
| Example 11-7 | 11-7 | | | | | | 7500 | 125 | 167 |
| Example 11-8 | 11-8 | | | | | | 10000 | 120 | 175 |
| Example 11-9 | 11-9 | | | | | | 20000 | 116 | 181 |
| Comparative Example 11-2 | R11-2 | | | | | | 30000 | 113 | 179 |
| Comparative Example 12-1 | R12-1 | | | | | | 0 | 112 | 140 |

(continued)

| | Nonaqueous Electrolyte Solution | (I-1) | | | (I-2) | | | E1 | E2 |
|---|---|---|---|---|---|---|---|---|---|
| | | Type | | Concentration | Type | | Concentration | | |
| | | Anion | Cation | [% by mass] | Anion | Cation | [ppm by mass] | | |
| Example 12-1 | 12-1 | | $Li^+$ | 4.00 | $BF_4$ | $Na^+$ | 20 | 113 | 141 |
| Example 12-2 | 12-2 | | | | | | 50 | 115 | 145 |
| Example 12-3 | 12-3 | | | | | | 500 | 116 | 145 |
| Example 12-4 | 12-4 | | | | | | 2500 | 123 | 148 |
| Example 12-5 | 12-5 | | | | | | 5000 | 121 | 159 |
| Example 12-6 | 12-6 | | | | | | 6500 | 119 | 161 |
| Example 12-7 | 12-7 | | | | | | 7500 | 117 | 166 |
| Example 12-8 | 12-8 | | | | | | 10000 | 114 | 176 |
| Example 12-9 | 12-9 | | | | | | 20000 | 110 | 181 |
| Comparative Example 12-2 | R12-2 | | | | | | 30000 | 107 | 180 |

[Table 5]

Table 5

| | Nonaqueous Electrolyte Solution | (I-1) | | | (I-2) | | | E1 | E2 |
|---|---|---|---|---|---|---|---|---|---|
| | | Type | | Concentration | Type | | Concentration | | |
| | | Anion | Cation | [% by mass] | Anion | Cation | [ppm by mass] | | |
| Comparative Example 0-1 | R0-1 | $N-(SO_2F)(COCN)$ | $Li^+$ | 0.00 | $ClO_4$ | $Na^+$ | 0 | 100 | 100 |
| Comparative Example 0-22 | R0-22 | | | | | | 20 | 100 | 98 |
| Comparative Example 0-23 | R0-23 | | | | | | 50 | 101 | 97 |
| Comparative Example 0-24 | R0-24 | | | | | | 500 | 102 | 93 |
| Comparative Example 0-25 | R0-25 | | | | | | 2500 | 105 | 91 |
| Comparative Example 0-26 | R0-26 | | | | | | 5000 | 107 | 89 |
| Comparative Example 0-27 | R0-27 | | | | | | 6500 | 104 | 87 |
| Comparative Example 0-28 | R0-28 | | | | | | 7500 | 102 | 85 |
| Comparative Example 0-29 | R0-29 | | | | | | 10000 | 99 | 83 |
| Comparative Example 0-30 | R0-30 | | | | | | 20000 | 96 | 79 |
| Comparative Example 0-31 | R0-31 | | | | | | 30000 | 94 | 74 |
| Comparative Example 13-1 | R13-1 | | $Li^+$ | 0.05 | $ClO_4$ | $Na^+$ | 0 | 102 | 107 |
| Example 13-1 | 13-1 | | | | | | 20 | 102 | 109 |
| Example 13-2 | 13-2 | | | | | | 50 | 103 | 111 |
| Example 13-3 | 13-3 | | | | | | 500 | 106 | 113 |
| Example 13-4 | 13-4 | | | | | | 2500 | 109 | 119 |
| Example 13-5 | 13-5 | | | | | | 5000 | 110 | 129 |
| Example 13-6 | 13-6 | | | | | | 6500 | 109 | 131 |
| Example 13-7 | 13-7 | | | | | | 7500 | 107 | 134 |
| Example 13-8 | 13-8 | | | | | | 10000 | 104 | 136 |
| Example 13-9 | 13-9 | | | | | | 20000 | 100 | 139 |
| Comparative Example 13-2 | R13-2 | | | | | | 30000 | 97 | 135 |
| Comparative Example 14-1 | R14-1 | | | | | | 0 | 106 | 112 |

(continued)

| | Nonaqueous Electrolyte Solution | (I-1) | | | (I-2) | | | E1 | E2 |
|---|---|---|---|---|---|---|---|---|---|
| | | Type | | Concentration | Type | | Concentration | | |
| | | Anion | Cation | [% by mass] | Anion | Cation | [ppm by mass] | | |
| Example 14-1 | 14-1 | | $Li^+$ | 0.25 | $ClO_4$ | $Na^+$ | 20 | 106 | 114 |
| Example 14-2 | 14-2 | | | | | | 50 | 107 | 116 |
| Example 14-3 | 14-3 | | | | | | 500 | 110 | 119 |
| Example 14-4 | 14-4 | | | | | | 2500 | 113 | 125 |
| Example 14-5 | 14-5 | | | | | | 5000 | 115 | 135 |
| Example 14-6 | 14-6 | | | | | | 6500 | 114 | 137 |
| Example 14-7 | 14-7 | | | | | | 7500 | 112 | 139 |
| Example 14-8 | 14-8 | | | | | | 10000 | 108 | 143 |
| Example 14-9 | 14-9 | | | | | | 20000 | 104 | 148 |
| Comparative Example 14-2 | R14-2 | | | | | | 30000 | 101 | 142 |
| Comparative Example 15-1 | R15-1 | | $Li^+$ | 0.50 | $ClO_4$ | $Na^+$ | 0 | 110 | 126 |
| Example 15-1 | 15-1 | | | | | | 20 | 110 | 129 |
| Example 15-2 | 15-2 | | | | | | 50 | 112 | 131 |
| Example 15-3 | 15-3 | | | | | | 500 | 114 | 134 |
| Example 15-4 | 15-4 | | | | | | 2500 | 117 | 141 |
| Example 15-5 | 15-5 | | | | | | 5000 | 119 | 152 |
| Example 15-6 | 15-6 | | | | | | 6500 | 118 | 154 |
| Example 15-7 | 15-7 | | | | | | 7500 | 116 | 157 |
| Example 15-8 | 15-8 | | | | | | 10000 | 112 | 161 |
| Example 15-9 | 15-9 | | | | | | 20000 | 108 | 168 |
| Comparative Example 15-2 | R15-2 | | | | | | 30000 | 105 | 160 |

[Table 6]

Table 6

| | Nonaqueous Electrolyte Solution | (I-1) | | | (I-2) | | | E1 | E2 |
|---|---|---|---|---|---|---|---|---|---|
| | | Type | | Concentration | Type | | Concentration | | |
| | | Anion | Cation | [% by mass] | Anion | Cation | [ppm by mass] | | |
| Comparative Example 16-1 | R16-1 | $N\text{-}(SO_2F)(COCN)$ | $Li^+$ | 1.00 | $ClO_4$ | $Na^+$ | 0 | 113 | 136 |
| Example 16-1 | 16-1 | | | | | | 20 | 113 | 139 |
| Example 16-2 | 16-2 | | | | | | 50 | 115 | 141 |
| Example 16-3 | 16-3 | | | | | | 500 | 117 | 144 |
| Example 16-4 | 16-4 | | | | | | 2500 | 120 | 152 |
| Example 16-5 | 16-5 | | | | | | 5000 | 122 | 164 |
| Example 16-6 | 16-6 | | | | | | 6500 | 122 | 167 |
| Example 16-7 | 16-7 | | | | | | 7500 | 120 | 169 |
| Example 16-8 | 16-8 | | | | | | 10000 | 115 | 174 |
| Example 16-9 | 16-9 | | | | | | 20000 | 111 | 182 |
| Comparative Example 16-2 | R16-2 | | | | | | 30000 | 108 | 172 |
| Comparative Example 17-1 | R17-1 | | $Li^+$ | 2.00 | $ClO_4$ | $Na^+$ | 0 | 118 | 139 |
| Example 17-1 | 17-1 | | | | | | 20 | 118 | 141 |
| Example 17-2 | 17-2 | | | | | | 50 | 120 | 144 |
| Example 17-3 | 17-3 | | | | | | 500 | 122 | 147 |
| Example 17-4 | 17-4 | | | | | | 2500 | 125 | 155 |
| Example 17-5 | 17-5 | | | | | | 5000 | 126 | 167 |
| Example 17-6 | 17-6 | | | | | | 6500 | 125 | 170 |
| Example 17-7 | 17-7 | | | | | | 7500 | 125 | 173 |
| Example 17-8 | 17-8 | | | | | | 10000 | 119 | 177 |
| Example 17-9 | 17-9 | | | | | | 20000 | 116 | 184 |
| Comparative Example 17-2 | R17-2 | | | | | | 30000 | 113 | 175 |
| Comparative Example 18-1 | R18-1 | | | | | | 0 | 112 | 140 |

(continued)

| | Nonaqueous Electrolyte Solution | (I-1) | | | (I-2) | | | E1 | E2 |
|---|---|---|---|---|---|---|---|---|---|
| | | Type | | Concentration | Type | | Concentration | | |
| | | Anion | Cation | [% by mass] | Anion | Cation | [ppm by mass] | | |
| Example 18-1 | 18-1 | | | | | | 20 | 113 | 142 |
| Example 18-2 | 18-2 | | | | | | 50 | 115 | 145 |
| Example 18-3 | 18-3 | | | | | | 500 | 116 | 148 |
| Example 18-4 | 18-4 | | | | | | 2500 | 120 | 156 |
| Example 18-5 | 18-5 | | $Li^+$ | 4.00 | $ClO_4$ | $Na^+$ | 5000 | 120 | 168 |
| Example 18-6 | 18-6 | | | | | | 6500 | 119 | 171 |
| Example 18-7 | 18-7 | | | | | | 7500 | 116 | 175 |
| Example 18-8 | 18-8 | | | | | | 10000 | 113 | 178 |
| Example 18-9 | 18-9 | | | | | | 20000 | 110 | 185 |
| Comparative Example 18-2 | R18-2 | | | | | | 30000 | 107 | 176 |

[Table 7]

Table 7

| | Nonaqueous Electrolyte Solution | (I-1) | | | (I-2) | | | E1 | E2 |
|---|---|---|---|---|---|---|---|---|---|
| | | Type | | Concentration | Type | | Concentration | | |
| | | Anion | Cation | [% by mass] | Anion | Cation | [ppm by mass] | | |
| Comparative Example 0-1 | R0-1 | $N-(SO_2F)(CO(OCN))$ | $Li^+$ | 0.00 | BOB | $Na^+$ | 0 | 100 | 100 |
| Comparative Example 0-2 | R0-2 | | | | | | 20 | 100 | 100 |
| Comparative Example 0-3 | R0-3 | | | | | | 50 | 100 | 100 |
| Comparative Example 0-4 | R0-4 | | | | | | 500 | 100 | 100 |
| Comparative Example 0-5 | R0-5 | | | | | | 2500 | 102 | 98 |
| Comparative Example 0-6 | R0-6 | | | | | | 5000 | 104 | 95 |
| Comparative Example 0-7 | R0-7 | | | | | | 6500 | 102 | 92 |
| Comparative Example 0-8 | R0-8 | | | | | | 7500 | 101 | 90 |
| Comparative Example 0-9 | R0-9 | | | | | | 10000 | 99 | 89 |
| Comparative Example 0-10 | R0-10 | | | | | | 20000 | 97 | 88 |
| Comparative Example 0-11 | R0-11 | | | | | | 30000 | 95 | 87 |
| Comparative Example 19-1 | R19-1 | | $Li^+$ | 0.05 | BOB | $Na^+$ | 0 | 103 | 108 |
| Example 19-1 | 19-1 | | | | | | 20 | 103 | 109 |
| Example 19-2 | 19-2 | | | | | | 50 | 103 | 109 |
| Example 19-3 | 19-3 | | | | | | 500 | 104 | 110 |
| Example 19-4 | 19-4 | | | | | | 2500 | 108 | 110 |
| Example 19-5 | 19-5 | | | | | | 5000 | 107 | 111 |
| Example 19-6 | 19-6 | | | | | | 6500 | 107 | 111 |
| Example 19-7 | 19-7 | | | | | | 7500 | 107 | 111 |
| Example 19-8 | 19-8 | | | | | | 10000 | 104 | 110 |
| Example 19-9 | 19-9 | | | | | | 20000 | 101 | 110 |
| Comparative Example 19-2 | R19-2 | | | | | | 30000 | 99 | 109 |
| Comparative Example 20-1 | R20-1 | | | | | | 0 | 106 | 114 |

(continued)

| | Nonaqueous Electrolyte Solution | (I-1) | | | (I-2) | | | E1 | E2 |
|---|---|---|---|---|---|---|---|---|---|
| | | Type | | Concentration | Type | | Concentration | | |
| | | Anion | Cation | [% by mass] | Anion | Cation | [ppm by mass] | | |
| Example 20-1 | 20-1 | | | | | | 20 | 106 | 115 |
| Example 20-2 | 20-2 | | | | | | 50 | 106 | 116 |
| Example 20-3 | 20-3 | | | | | | 500 | 107 | 116 |
| Example 20-4 | 20-4 | | | | | | 2500 | 111 | 116 |
| Example 20-5 | 20-5 | | $Li^+$ | 0.25 | BOB | $Na^+$ | 5000 | 110 | 117 |
| Example 20-6 | *20-6* | | | | | | 6500 | 110 | 117 |
| Example 20-7 | 20-7 | | | | | | 7500 | 110 | 117 |
| Example 20-8 | 20-8 | | | | | | 10000 | 107 | 117 |
| Example 20-9 | 20-9 | | | | | | 20000 | 105 | 116 |
| Comparative Example 20-2 | R20-2 | | | | | | 30000 | 103 | 114 |
| Comparative Example 21-1 | R21-1 | | | | | | 0 | 111 | 127 |
| Example 21-1 | 21-1 | | | | | | 20 | 111 | 129 |
| Example 21-2 | 21-2 | | | | | | 50 | 111 | 129 |
| Example 21-3 | 21-3 | | | | | | 500 | 112 | 130 |
| Example 21-4 | 21-4 | | | | | | 2500 | 116 | 129 |
| Example 21-5 | 21-5 | | $Li^+$ | 0.50 | BOB | $Na^+$ | 5000 | 115 | 130 |
| Example 21-6 | 21-6 | | | | | | 6500 | 115 | 130 |
| Example 21-7 | 21-7 | | | | | | 7500 | 114 | 130 |
| Example 21-8 | 21-8 | | | | | | 10000 | 112 | 130 |
| Example 21-9 | 21-9 | | | | | | 20000 | 110 | 129 |
| Comparative Example 21-2 | R21-2 | | | | | | 30000 | 108 | 127 |

[Table 8]

Table 8

| | Nonaqueous Electrolyte Solution | (I-1) | | | (I-2) | | | E1 | E2 |
|---|---|---|---|---|---|---|---|---|---|
| | | Type | | Concentration | Type | | Concentration | | |
| | | Anion | Cation | [% by mass] | Anion | Cation | [ppm by mass] | | |
| Comparative Example 22-1 | R22-1 | $N^-(SO_2F)(CO(OCN))$ | $Li^+$ | 1.00 | BOB | $Na^+$ | 0 | 114 | 137 |
| Example 22-1 | 22-1 | | | | | | 20 | 114 | 139 |
| Example 22-2 | 22-2 | | | | | | 50 | 114 | 139 |
| Example 22-3 | 22-3 | | | | | | 500 | 115 | 140 |
| Example 22-4 | 22-4 | | | | | | 2500 | 119 | 139 |
| Example 22-5 | 22-5 | | | | | | 5000 | 119 | 141 |
| Example 22-6 | 22-6 | | | | | | 6500 | 119 | 141 |
| Example 22-7 | 22-7 | | | | | | 7500 | 118 | 140 |
| Example 22-8 | 22-8 | | | | | | 10000 | 116 | 140 |
| Example 22-9 | 22-9 | | | | | | 20000 | 113 | 139 |
| Comparative Example 22-2 | R22-2 | | | | | | 30000 | 110 | 137 |
| Comparative Example 23-1 | R23-1 | | $Li^+$ | 2.00 | BOB | $Na^+$ | 0 | 119 | 140 |
| Example 23-1 | 23-1 | | | | | | 20 | 119 | 141 |
| Example 23-2 | 23-2 | | | | | | 50 | 119 | 142 |
| Example 23-3 | 23-3 | | | | | | 500 | 120 | 142 |
| Example 23-4 | 23-4 | | | | | | 2500 | 124 | 142 |
| Example 23-5 | 23-5 | | | | | | 5000 | 123 | 143 |
| Example 23-6 | 23-6 | | | | | | 6500 | 123 | 143 |
| Example 23-7 | 23-7 | | | | | | 7500 | 122 | 143 |
| Example 23-8 | 23-8 | | | | | | 10000 | 120 | 143 |
| Example 23-9 | 23-9 | | | | | | 20000 | 118 | 142 |
| Comparative Example 23-2 | R23-2 | | | | | | 30000 | 115 | 140 |
| Comparative Example 24-1 | R24-1 | | | | | | 0 | 111 | 141 |

(continued)

| | Nonaqueous Electrolyte Solution | (I-1 ) | | | (I-2) | | | E1 | E2 |
|---|---|---|---|---|---|---|---|---|---|
| | | Type | | Concentration | Type | | Concentration | | |
| | | Anion | Cation | [% by mass] | Anion | Cation | [ppm by mass] | | |
| Example 24-1 | 24-1 | | | | | | 20 | 112 | 142 |
| Example 24-2 | 24-2 | | | | | | 50 | 113 | 143 |
| Example 24-3 | 24-3 | | | | | | 500 | 113 | 143 |
| Example 24-4 | 24-4 | | | | | | 2500 | 115 | 143 |
| Example 24-5 | 24-5 | | $Li^+$ | 4.00 | BOB | $Na^+$ | 5000 | 114 | 144 |
| Example 24-6 | 24-6 | | | | | | 6500 | 114 | 144 |
| Example 24-7 | 24-7 | | | | | | 7500 | 113 | 144 |
| Example 24-8 | 24-8 | | | | | | 10000 | 112 | 144 |
| Example 24-9 | 24-9 | | | | | | 20000 | 109 | 143 |
| Comparative Example 24-2 | R24-2 | | | | | | 30000 | 106 | 141 |

[Table 9]

Table 9

| | Nonaqueous Electrolyte Solution | (I-1) | | | (I-2) | | | E1 | E2 |
|---|---|---|---|---|---|---|---|---|---|
| | | Type | | Concentration | Type | | Concentration | | |
| | | Anion | Cation | [% by mass] | Anion | Cation | [ppm by mass] | | |
| Comparative Example 0-1 | R0-1 | $N-(SO_2F)(CO(OCN))$ | $Li^+$ | 0.00 | $BF_4$ | $Na^+$ | 0 | 100 | 100 |
| Comparative Example 0-12 | R0-12 | | | | | | 20 | 100 | 100 |
| Comparative Example 0-13 | R0-13 | | | | | | 50 | 101 | 100 |
| Comparative Example 0-14 | R0-14 | | | | | | 500 | 102 | 98 |
| Comparative Example 0-15 | R0-15 | | | | | | 2500 | 108 | 96 |
| Comparative Example 0-16 | R0-16 | | | | | | 5000 | 108 | 95 |
| Comparative Example 0-17 | R0-17 | | | | | | 6500 | 104 | 93 |
| Comparative Example 0-18 | R0-18 | | | | | | 7500 | 102 | 91 |
| Comparative Example 0-19 | R0-19 | | | | | | 10000 | 100 | 91 |
| Comparative Example 0-20 | R0-20 | | | | | | 20000 | 96 | 88 |
| Comparative Example 0-21 | R0-21 | | | | | | 30000 | 94 | 84 |
| Comparative Example 25-1 | R25-1 | | $Li^+$ | 0.05 | $BF_4$ | $Na^+$ | 0 | 103 | 108 |
| Example 25-1 | 25-1 | | | | | | 20 | 103 | 109 |
| Example 25-2 | 25-2 | | | | | | 50 | 104 | 111 |
| Example 25-3 | 25-3 | | | | | | 500 | 106 | 111 |
| Example 25-4 | 25-4 | | | | | | 2500 | 114 | 112 |
| Example 25-5 | 25-5 | | | | | | 5000 | 112 | 116 |
| Example 25-6 | 25-6 | | | | | | 6500 | 110 | 118 |
| Example 25-7 | 25-7 | | | | | | 7500 | 109 | 120 |
| Example 25-8 | 25-8 | | | | | | 10000 | 105 | 122 |
| Example 25-9 | 25-9 | | | | | | 20000 | 100 | 121 |
| Comparative Example 25-2 | R25-2 | | | | | | 30000 | 97 | 117 |
| Comparative Example 26-1 | R26-1 | | | | | | 0 | 106 | 114 |

(continued)

| | Nonaqueous Electrolyte Solution | (I-1) | | | (I-2) | | | E1 | E2 |
|---|---|---|---|---|---|---|---|---|---|
| | | Type | | Concentration | Type | | Concentration | | |
| | | Anion | Cation | [% by mass] | Anion | Cation | [ppm by mass] | | |
| Example 26-1 | 26-1 | | $Li^+$ | 0.25 | $BF_4$ | $Na^+$ | 20 | 106 | 115 |
| Example 26-2 | 26-2 | | | | | | 50 | 107 | 117 |
| Example 26-3 | 26-3 | | | | | | 500 | 109 | 118 |
| Example 26-4 | 26-4 | | | | | | 2500 | 117 | 119 |
| Example 26-5 | 26-5 | | | | | | 5000 | 115 | 123 |
| Example 26-6 | 26-6 | | | | | | 6500 | 113 | 125 |
| Example 26-7 | 26-7 | | | | | | 7500 | 112 | 128 |
| Example 26-8 | 26-8 | | | | | | 10000 | 109 | 130 |
| Example 26-9 | 26-9 | | | | | | 20000 | 104 | 132 |
| Comparative Example 26-2 | R26-2 | | | | | | 30000 | 101 | 130 |
| Comparative Example 27-1 | R27-1 | | $Li^+$ | 0.50 | $BF_4$ | $Na^+$ | 0 | 111 | 127 |
| Example 27-1 | 27-1 | | | | | | 20 | 111 | 129 |
| Example 27-2 | 27-2 | | | | | | 50 | 112 | 130 |
| Example 27-3 | 27-3 | | | | | | 500 | 114 | 131 |
| Example 27-4 | 27-4 | | | | | | 2500 | 123 | 132 |
| Example 27-5 | 27-5 | | | | | | 5000 | 120 | 137 |
| Example 27-6 | 27-6 | | | | | | 6500 | 118 | 140 |
| Example 27-7 | 27-7 | | | | | | 7500 | 116 | 143 |
| Example 27-8 | 27-8 | | | | | | 10000 | 113 | 145 |
| Example 27-9 | 27-9 | | | | | | 20000 | 109 | 149 |
| Comparative Example 27-2 | R27-2 | | | | | | 30000 | 106 | 145 |

[Table 10]

Table 10

| | Nonaqueous Electrolyte Solution | (I-1) | | | (I-2) | | | E1 | E2 |
|---|---|---|---|---|---|---|---|---|---|
| | | Type | | Concentration | Type | | Concentration | | |
| | | Anion | Cation | [% by mass] | Anion | Cation | [ppm by mass] | | |
| Comparative Example 28-1 | R28-1 | $N^-(SO_2F)(CO(OCN))$ | $Li^+$ | 1.00 | $BF_4$ | $Na^+$ | 0 | 114 | 137 |
| Example 28-1 | 28-1 | | | | | | 20 | 114 | 139 |
| Example 28-2 | 28-2 | | | | | | 50 | 115 | 141 |
| Example 28-3 | 28-3 | | | | | | 500 | 117 | 141 |
| Example 28-4 | 28-4 | | | | | | 2500 | 126 | 142 |
| Example 28-5 | 28-5 | | | | | | 5000 | 124 | 148 |
| Example 28-6 | 28-6 | | | | | | 6500 | 122 | 151 |
| Example 28-7 | 28-7 | | | | | | 7500 | 120 | 155 |
| Example 28-8 | 28-8 | | | | | | 10000 | 117 | 156 |
| Example 28-9 | 28-9 | | | | | | 20000 | 112 | 161 |
| Comparative Example 28-2 | R28-2 | | | | | | 30000 | 108 | 156 |
| Comparative Example 29-1 | R29-1 | | $Li^+$ | 2.00 | $BF_4$ | $Na^+$ | 0 | 119 | 140 |
| Example 29-1 | 29-1 | | | | | | 20 | 119 | 141 |
| Example 29-2 | 29-2 | | | | | | 50 | 120 | 143 |
| Example 29-3 | 29-3 | | | | | | 500 | 122 | 144 |
| Example 29-4 | 29-4 | | | | | | 2500 | 131 | 145 |
| Example 29-5 | 29-5 | | | | | | 5000 | 128 | 151 |
| Example 29-6 | 29-6 | | | | | | 6500 | 126 | 153 |
| Example 29-7 | 29-7 | | | | | | 7500 | 124 | 158 |
| Example 29-8 | 29-8 | | | | | | 10000 | 122 | 159 |
| Example 29-9 | 29-9 | | | | | | 20000 | 117 | 167 |
| Comparative Example 29-2 | R29-2 | | | | | | 30000 | 113 | 159 |
| Comparative Example 30-1 | R30-1 | | | | | | 0 | 111 | 141 |

(continued)

| | Nonaqueous Electrolyte Solution | (I-1 ) | | | (I-2) | | | E1 | E2 |
|---|---|---|---|---|---|---|---|---|---|
| | | Type | | Concentration | Type | | Concentration | | |
| | | Anion | Cation | [% by mass] | Anion | Cation | [ppm by mass] | | |
| Example 30-1 | 30-1 | | $Li^+$ | 4.00 | $BF_4$ | $Na^+$ | 20 | 112 | 142 |
| Example 30-2 | 30-2 | | | | | | 50 | 114 | 144 |
| Example 30-3 | 30-3 | | | | | | 500 | 115 | 145 |
| Example 30-4 | 30-4 | | | | | | 2500 | 122 | 146 |
| Example 30-5 | 30-5 | | | | | | 5000 | 119 | 152 |
| Example 30-6 | 30-6 | | | | | | 6500 | 117 | 154 |
| Example 30-7 | 30-7 | | | | | | 7500 | 115 | 159 |
| Example 30-8 | 30-8 | | | | | | 10000 | 113 | 160 |
| Example 30-9 | 30-9 | | | | | | 20000 | 108 | 168 |
| Comparative Example 30-2 | R30-2 | | | | | | 30000 | 104 | 160 |

[Table 11]

Table 11

| | Nonaqueous Electrolyte Solution | (I-1) | | | (I-2) | | | E1 | E2 |
|---|---|---|---|---|---|---|---|---|---|
| | | Type | | Concentration | Type | | Concentration | | |
| | | Anion | Cation | [% by mass] | Anion | Cation | [ppm by mass] | | |
| Comparative Example 0-1 | R0-1 | $N-(SO_2F)(CO(OCN))$ | $Li^+$ | 0.00 | $ClO_4$ | $Na^+$ | 0 | 100 | 100 |
| Comparative Example 0-22 | R0-22 | | | | | | 20 | 100 | 98 |
| Comparative Example 0-23 | R0-23 | | | | | | 50 | 101 | 97 |
| Comparative Example 0-24 | R0-24 | | | | | | 500 | 102 | 93 |
| Comparative Example 0-25 | R0-25 | | | | | | 2500 | 105 | 91 |
| Comparative Example 0-26 | R0-26 | | | | | | 5000 | 107 | 89 |
| Comparative Example 0-27 | R0-27 | | | | | | 6500 | 104 | 87 |
| Comparative Example 0-28 | R0-28 | | | | | | 7500 | 102 | 85 |
| Comparative Example 0-29 | R0-29 | | | | | | 10000 | 99 | 83 |
| Comparative Example 0-30 | R0-30 | | | | | | 20000 | 96 | 79 |
| Comparative Example 0-31 | R0-31 | | | | | | 30000 | 94 | 74 |
| Comparative Example 31-1 | R31-1 | | $Li^+$ | 0.05 | $ClO_4$ | $Na^+$ | 0 | 103 | 108 |
| Example 31-1 | 31-1 | | | | | | 20 | 103 | 110 |
| Example 31-2 | 31-2 | | | | | | 50 | 104 | 112 |
| Example 31-3 | 31-3 | | | | | | 500 | 106 | 114 |
| Example 31-4 | 31-4 | | | | | | 2500 | 111 | 121 |
| Example 31-5 | 31-5 | | | | | | 5000 | 111 | 130 |
| Example 31-6 | 31-6 | | | | | | 6500 | 110 | 132 |
| Example 31-7 | 31-7 | | | | | | 7500 | 108 | 134 |
| Example 31-8 | 31-8 | | | | | | 10000 | 104 | 138 |
| Example 31-9 | 31-9 | | | | | | 20000 | 100 | 139 |
| Comparative Example 31-2 | R31-2 | | | | | | 30000 | 97 | 136 |
| Comparative Example 32-1 | R32-1 | | | | | | 0 | 106 | 114 |

(continued)

| | Nonaqueous Electrolyte Solution | (I-1) | | | (I-2) | | | E1 | E2 |
|---|---|---|---|---|---|---|---|---|---|
| | | Type | | Concentration | Type | | Concentration | | |
| | | Anion | Cation | [% by mass] | Anion | Cation | [ppm by mass] | | |
| Example 32-1 | 32-1 | | | | | | 20 | 106 | 117 |
| Example 32-2 | 32-2 | | | | | | 50 | 107 | 118 |
| Example 32-3 | 32-3 | | | | | | 500 | 109 | 121 |
| Example 32-4 | 32-4 | | | | | | 2500 | 114 | 128 |
| Example 32-5 | 32-5 | | $Li^+$ | 0.25 | $ClO_4$ | $Na^+$ | 5000 | 114 | 138 |
| Example 32-6 | 32-6 | | | | | | 6500 | 112 | 140 |
| Example 32-7 | 32-7 | | | | | | 7500 | 111 | 144 |
| Example 32-8 | 32-8 | | | | | | 10000 | 107 | 146 |
| Example 32-9 | 32-9 | | | | | | 20000 | 104 | 149 |
| Comparative Example 32-2 | R32-2 | | | | | | 30000 | 101 | 145 |
| Comparative Example 33-1 | R33-1 | | | | | | 0 | 111 | 127 |
| Example 33-1 | 33-1 | | | | | | 20 | 111 | 130 |
| Example 33-2 | 33-2 | | | | | | 50 | 112 | 132 |
| Example 33-3 | 33-3 | | | | | | 500 | 114 | 135 |
| Example 33-4 | 33-4 | | | | | | 2500 | 119 | 142 |
| Example 33-5 | 33-5 | | $Li^+$ | 0.50 | $ClO_4$ | $Na^+$ | 5000 | 119 | 153 |
| Example 33-6 | 33-6 | | | | | | 6500 | 117 | 156 |
| Example 33-7 | 33-7 | | | | | | 7500 | 116 | 160 |
| Example 33-8 | 33-8 | | | | | | 10000 | 112 | 163 |
| Example 33-9 | 33-9 | | | | | | 20000 | 109 | 168 |
| Comparative Example 33-2 | R33-2 | | | | | | 30000 | 106 | 161 |

[Table 12]

Table 12

| | Nonaqueous Electrolyte Solution | (I-1) Type Anion | (I-1) Type Cation | (I-1) Concentration [% by mass] | (I-2) Type Anion | (I-2) Type Cation | (I-2) Concentration [ppm by mass] | E1 | E2 |
|---|---|---|---|---|---|---|---|---|---|
| Comparative Example 34-1 | R34-1 | $N^-(SO_2F)(CO(OCN))$ | $Li^+$ | 1.00 | $ClO_4$ | $Na^+$ | 0 | 114 | 137 |
| Example 34-1 | 34-1 | | | | | | 20 | 114 | 140 |
| Example 34-2 | 34-2 | | | | | | 50 | 115 | 142 |
| Example 34-3 | 34-3 | | | | | | 500 | 117 | 146 |
| Example 34-4 | 34-4 | | | | | | 2500 | 123 | 153 |
| Example 34-5 | 34-5 | | | | | | 5000 | 123 | 165 |
| Example 34-6 | 34-6 | | | | | | 6500 | 122 | 168 |
| Example 34-7 | 34-7 | | | | | | 7500 | 119 | 172 |
| Example 34-8 | 34-8 | | | | | | 10000 | 116 | 175 |
| Example 34-9 | 34-9 | | | | | | 20000 | 112 | 184 |
| Comparative Example 34-2 | R34-2 | | | | | | 30000 | 108 | 174 |
| Comparative Example 35-1 | R35-1 | | $Li^+$ | 2.00 | $ClO_4$ | $Na^+$ | 0 | 119 | 140 |
| Example 35-1 | 35-1 | | | | | | 20 | 119 | 143 |
| Example 35-2 | 35-2 | | | | | | 50 | 120 | 145 |
| Example 35-3 | 35-3 | | | | | | 500 | 122 | 148 |
| Example 35-4 | 35-4 | | | | | | 2500 | 127 | 156 |
| Example 35-5 | 35-5 | | | | | | 5000 | 127 | 169 |
| Example 35-6 | 35-6 | | | | | | 6500 | 126 | 173 |
| Example 35-7 | 35-7 | | | | | | 7500 | 124 | 177 |
| Example 35-8 | 35-8 | | | | | | 10000 | 120 | 179 |
| Example 35-9 | 35-9 | | | | | | 20000 | 117 | 187 |
| Comparative Example 35-2 | R35-2 | | | | | | 30000 | 113 | 179 |
| Comparative Example 36-1 | R36-1 | | | | | | 0 | 111 | 141 |

(continued)

| | Nonaqueous Electrolyte Solution | (I-1) | | | (I-2) | | | E1 | E2 |
|---|---|---|---|---|---|---|---|---|---|
| | | Type | | Concentration | Type | | Concentration | | |
| | | Anion | Cation | [% by mass] | Anion | Cation | [ppm by mass] | | |
| Example 36-1 | 36-1 | | | | | | 20 | 112 | 144 |
| Example 36-2 | 36-2 | | | | | | 50 | 114 | 146 |
| Example 36-3 | 36-3 | | | | | | 500 | 115 | 149 |
| Example 36-4 | 36-4 | | | | | | 2500 | 119 | 157 |
| Example 36-5 | 36-5 | | $Li^+$ | 4.00 | $ClO_4$ | $Na^+$ | 5000 | 118 | 170 |
| Example 36-6 | 36-6 | | | | | | 6500 | 116 | 174 |
| Example 36-7 | 36-7 | | | | | | 7500 | 114 | 177 |
| Example 36-8 | 36-8 | | | | | | 10000 | 112 | 180 |
| Example 36-9 | 36-9 | | | | | | 20000 | 108 | 189 |
| Comparative Example 36-2 | R36-2 | | | | | | 30000 | 104 | 178 |

[Table 13]

Table 13

| | Nonaqueous Electrolyte Solution | (I-1) | | | (I-2) | | | E1 | E2 |
|---|---|---|---|---|---|---|---|---|---|
| | | Type | | Concentration | Type | | Concentration | | |
| | | Anion | Cation | [% by mass] | Anion | Cation | [ppm by mass] | | |
| Comparative Example 0-1 | R0-1 | None | None | 0 | None | None | 0 | 100 | 100 |
| Comparative Example 37-1 | R37-1 | $N-(SO_2F)(COCN)$ | $Li^+$ | 1.00 | BOB | $Li^+$ | 0 | 113 | 136 |
| Example 37-1 | 37-1 | | | | | | 20 | 114 | 138 |
| Example 37-2 | 37-2 | | | | | | 50 | 115 | 139 |
| Example 37-3 | 37-3 | | | | | | 500 | 116 | 139 |
| Example 37-4 | 37-4 | | | | | | 2500 | 118 | 140 |
| Example 37-5 | 37-5 | | | | | | 5000 | 121 | 141 |
| Example 37-6 | 37-6 | | | | | | 6500 | 121 | 142 |
| Example 37-7 | 37-7 | | | | | | 7500 | 120 | 144 |
| Example 37-8 | 37-8 | | | | | | 10000 | 117 | 146 |
| Example 37-9 | 37-9 | | | | | | 20000 | 112 | 150 |
| Comparative Example 37-2 | R37-2 | | | | | | 30000 | 110 | 148 |
| Comparative Example 38-1 | R38-1 | | $Li^+$ | 1.00 | BOB | $K^+$ | 0 | 113 | 136 |
| Example 38-1 | 38-1 | | | | | | 20 | 114 | 137 |
| Example 38-2 | 38-2 | | | | | | 50 | 114 | 138 |
| Example 38-3 | 38-3 | | | | | | 500 | 115 | 138 |
| Example 38-4 | 38-4 | | | | | | 2500 | 116 | 138 |
| Example 38-5 | 38-5 | | | | | | 5000 | 118 | 139 |
| Example 38-6 | 38-6 | | | | | | 6500 | 118 | 140 |
| Example 38-7 | 38-7 | | | | | | 7500 | 117 | 142 |
| Example 38-8 | 38-8 | | | | | | 10000 | 115 | 144 |
| Example 38-9 | 38-9 | | | | | | 20000 | 112 | 148 |
| Comparative Example 38-2 | R38-2 | | | | | | 30000 | 109 | 146 |

(continued)

| | Nonaqueous Electrolyte Solution | (I-1) | | | (I-2) | | | E1 | E2 |
|---|---|---|---|---|---|---|---|---|---|
| | | Type | | Concentration | Type | | Concentration | | |
| | | Anion | Cation | [% by mass] | Anion | Cation | [ppm by mass] | | |
| Comparative Example 39-1 | R39-1 | | | | | | 0 | 113 | 136 |
| Example 39-1 | 39-1 | | | | | | 20 | 113 | 139 |
| Example 39-2 | 39-2 | | | | | | 50 | 114 | 142 |
| Example 39-3 | 39-3 | | | | | | 500 | 119 | 142 |
| Example 39-4 | 39-4 | | | | | | 2500 | 127 | 145 |
| Example 39-5 | 39-5 | | $Li^+$ | 1.00 | $BF_4$ | $Li^+$ | 5000 | 124 | 156 |
| Example 39-6 | 39-6 | | | | | | 6500 | 122 | 160 |
| Example 39-7 | 39-7 | | | | | | 7500 | 119 | 167 |
| Example 39-8 | 39-8 | | | | | | 10000 | 116 | 173 |
| Example 39-9 | 39-9 | | | | | | 20000 | 110 | 180 |
| Comparative Example 39-2 | R39-2 | | | | | | 30000 | 109 | 179 |

[Table 14]

Table 14

| | Nonaqueous Electrolyte Solution | (I-1 ) | | | (I-2) | | | E1 | E2 |
|---|---|---|---|---|---|---|---|---|---|
| | | Type | | Concentration | Type | | Concentration | | |
| | | Anion | Cation | [% by mass] | Anion | Cation | [ppm by mass] | | |
| Comparative Example 40-1 | R40-1 | | | | | | 0 | 113 | 136 |
| Example 40-1 | 40-1 | | | | | | 20 | 113 | 137 |
| Example 40-2 | 40-2 | | | | | | 50 | 114 | 141 |
| Example 40-3 | 40-3 | | | | | | 500 | 116 | 141 |
| Example 40-4 | 40-4 | | | | | | 2500 | 120 | 143 |
| Example 40-5 | 40-5 | | $Li^+$ | 1.00 | $BF_4$ | $K^+$ | 5000 | 118 | 154 |
| Example 40-6 | 40-6 | | | | | | 6500 | 118 | 156 |
| Example 40-7 | 40-7 | | | | | | 7500 | 117 | 162 |
| Example 40-8 | 40-8 | | | | | | 10000 | 115 | 171 |
| Example 40-9 | 40-9 | | | | | | 20000 | 109 | 178 |
| Comparative Example 40-2 | R40-2 | | | | | | 30000 | 104 | 174 |
| Comparative Example 41-1 | R41-1 | | | | | | 0 | 113 | 136 |
| Example 41-1 | 41-1 | | | | | | 20 | 113 | 140 |
| Example 41-2 | 41-2 | | | | | | 50 | 116 | 142 |
| Example 41-3 | 41-3 | | | | | | 500 | 118 | 145 |
| Example 41-4 | 41-4 | | | | | | 2500 | 121 | 153 |
| Example 41-5 | 41-5 | $N-(SO_2F)(COCN)$ | $Li^+$ | 1.00 | $ClO_4$ | $Li^+$ | 5000 | 124 | 165 |
| Example 41-6 | 41-6 | | | | | | 6500 | 123 | 169 |
| Example 41-7 | 41-7 | | | | | | 7500 | 122 | 171 |
| Example 41-8 | 41-8 | | | | | | 10000 | 116 | 175 |
| Example 41-9 | 41-9 | | | | | | 20000 | 111 | 184 |
| Comparative Example 41-2 | R41-2 | | | | | | 30000 | 110 | 174 |
| Comparative Example 42-1 | R42-1 | | | | | | 0 | 113 | 136 |

(continued)

| | Nonaqueous Electrolyte Solution | (I-1 ) | | | (I-2) | | | E1 | E2 |
|---|---|---|---|---|---|---|---|---|---|
| | | Type | | Concentration | Type | | Concentration | | |
| | | Anion | Cation | [% by mass] | Anion | Cation | [ppm by mass] | | |
| Example 42-1 | 42-1 | | | | | | 20 | 113 | 139 |
| Example 42-2 | 42-2 | | | | | | 50 | 114 | 141 |
| Example 42-3 | 42-3 | | | | | | 500 | 116 | 144 |
| Example 42-4 | 42-4 | | | | | | 2500 | 119 | 151 |
| Example 42-5 | 42-5 | | $Li^+$ | 1.00 | $ClO_4$ | $K^+$ | 5000 | 119 | 163 |
| Example 42-6 | 42-6 | | | | | | 6500 | 118 | 166 |
| Example 42-7 | 42-7 | | | | | | 7500 | 117 | 168 |
| Example 42-8 | 42-8 | | | | | | 10000 | 114 | 173 |
| Example 42-9 | 42-9 | | | | | | 20000 | 109 | 181 |
| Comparative Example 42-2 | R42-2 | | | | | | 30000 | 107 | 171 |

[Table 15]

Table 15

| | Nonaqueous Electrolyte Solution | (I-1) | | | (I-2) | | | E1 | E2 |
|---|---|---|---|---|---|---|---|---|---|
| | | Type | | Concentration | Type | | Concentration | | |
| | | Anion | Cation | [% by mass] | Anion | Cation | [ppm by mass] | | |
| Comparative Example 0-1 | R0-1 | None | None | 0 | None | None | 0 | 100 | 100 |
| Comparative Example 43-1 | R43-1 | N-$(SO_2F)(CO(OCN))$ | $Li^+$ | 1.00 | BOB | $Li^+$ | 0 | 114 | 137 |
| Example 43-1 | 43-1 | | | | | | 20 | 114 | 140 |
| Example 43-2 | 43-2 | | | | | | 50 | 114 | 140 |
| Example 43-3 | 43-3 | | | | | | 500 | 117 | 140 |
| Example 43-4 | 43-4 | | | | | | 2500 | 121 | 141 |
| Example 43-5 | 43-5 | | | | | | 5000 | 122 | 142 |
| Example 43-6 | 43-6 | | | | | | 6500 | 121 | 142 |
| Example 43-7 | 43-7 | | | | | | 7500 | 120 | 142 |
| Example 43-8 | 43-8 | | | | | | 10000 | 117 | 141 |
| Example 43-9 | 43-9 | | | | | | 20000 | 112 | 140 |
| Comparative Example 43-2 | R43-2 | | | | | | 30000 | 111 | 138 |
| Comparative Example 44-1 | R44-1 | | $Li^+$ | 1.00 | BOB | $K^+$ | 0 | 114 | 137 |
| Example 44-1 | 44-1 | | | | | | 20 | 114 | 139 |
| Example 44-2 | 44-2 | | | | | | 50 | 114 | 139 |
| Example 44-3 | 44-3 | | | | | | 500 | 114 | 139 |
| Example 44-4 | 44-4 | | | | | | 2500 | 115 | 139 |
| Example 44-5 | 44-5 | | | | | | 5000 | 117 | 140 |
| Example 44-6 | 44-6 | | | | | | 6500 | 117 | 140 |
| Example 44-7 | 44-7 | | | | | | 7500 | 116 | 140 |
| Example 44-8 | 44-8 | | | | | | 10000 | 114 | 140 |
| Example 44-9 | 44-9 | | | | | | 20000 | 112 | 138 |
| Comparative Example 44-2 | R44-2 | | | | | | 30000 | 109 | 136 |

(continued)

| | Nonaqueous Electrolyte Solution | (I-1) | | | (I-2) | | | E1 | E2 |
|---|---|---|---|---|---|---|---|---|---|
| | | Type | | Concentration | Type | | Concentration | | |
| | | Anion | Cation | [% by mass] | Anion | Cation | [ppm by mass] | | |
| Comparative Example 45-1 | R45-1 | | | | | | 0 | 114 | 137 |
| Example 45-1 | 45-1 | | | | | | 20 | 115 | 140 |
| Example 45-2 | 45-2 | | | | | | 50 | 115 | 142 |
| Example 45-3 | 45-3 | | | | | | 500 | 119 | 142 |
| Example 45-4 | 45-4 | | | | | | 2500 | 129 | 143 |
| Example 45-5 | 45-5 | | $Li^+$ | 1.00 | $BF_4$ | $Li^+$ | 5000 | 129 | 149 |
| Example 45-6 | 45-6 | | | | | | 6500 | 128 | 153 |
| Example 45-7 | 45-7 | | | | | | 7500 | 127 | 156 |
| Example 45-8 | 45-8 | | | | | | 10000 | 126 | 157 |
| Example 45-9 | 45-9 | | | | | | 20000 | 113 | 162 |
| Comparative Example 45-2 | R45-2 | | | | | | 30000 | 110 | 159 |

[Table 16]

Table 16

| | Nonaqueous Electrolyte Solution | (I-1) | | | (I-2) | | | E1 | E2 |
|---|---|---|---|---|---|---|---|---|---|
| | | Type | | Concentration | Type | | Concentration | | |
| | | Anion | Cation | [% by mass] | Anion | Cation | [ppm by mass] | | |
| Comparative Example 46-1 | R46-1 | | | | | | 0 | 114 | 137 |
| Example 46-1 | 46-1 | | | | | | 20 | 114 | 139 |
| Example 46-2 | 46-2 | | | | | | 50 | 114 | 141 |
| Example 46-3 | 46-3 | | | | | | 500 | 116 | 141 |
| Example 46-4 | 46-4 | | | | | | 2500 | 123 | 142 |
| Example 46-5 | 46-5 | | $Li^+$ | 1.00 | $BF_4$ | $K^+$ | 5000 | 120 | 147 |
| Example 46-6 | 46-6 | | | | | | 6500 | 119 | 151 |
| Example 46-7 | 46-7 | | | | | | 7500 | 118 | 154 |
| Example 46-8 | 46-8 | | | | | | 10000 | 118 | 155 |
| Example 46-9 | 46-9 | | | | | | 20000 | 112 | 160 |
| Comparative Example 46-2 | R46-2 | | | | | | 30000 | 106 | 156 |
| Comparative Example 47-1 | R47-1 | | | | | | 0 | 114 | 137 |
| Example 47-1 | 47-1 | | | | | | 20 | 114 | 141 |
| Example 47-2 | 47-2 | | | | | | 50 | 115 | 143 |
| Example 47-3 | 47-3 | | | | | | 500 | 117 | 146 |
| Example 47-4 | 47-4 | | | | | | 2500 | 123 | 154 |
| Example 47-5 | 47-5 | $N(SO_2F)(CO(OCN))$ | $Li^+$ | 1.00 | $ClO_4$ | $Li^+$ | 5000 | 125 | 167 |
| Example 47-6 | 47-6 | | | | | | 6500 | 124 | 169 |
| Example 47-7 | 47-7 | | | | | | 7500 | 123 | 174 |
| Example 47-8 | 47-8 | | | | | | 10000 | 118 | 177 |
| Example 47-9 | 47-9 | | | | | | 20000 | 111 | 186 |
| Comparative Example 47-2 | R47-2 | | | | | | 30000 | 109 | 175 |
| Comparative Example 48-1 | R48-1 | | | | | | 0 | 114 | 137 |

(continued)

| | Nonaqueous Electrolyte Solution | (I-1) | | | (I-2) | | | E1 | E2 |
|---|---|---|---|---|---|---|---|---|---|
| | | Type | | Concentration | Type | | Concentration | | |
| | | Anion | Cation | [% by mass] | Anion | Cation | [ppm by mass] | | |
| Example 48-1 | 48-1 | | $Li^+$ | 1.00 | $ClO_4$ | $K^+$ | 20 | 114 | 140 |
| Example 48-2 | 48-2 | | | | | | 50 | 115 | 142 |
| Example 48-3 | 48-3 | | | | | | 500 | 116 | 145 |
| Example 48-4 | 48-4 | | | | | | 2500 | 118 | 153 |
| Example 48-5 | 48-5 | | | | | | 5000 | 119 | 165 |
| Example 48-6 | 48-6 | | | | | | 6500 | 120 | 167 |
| Example 48-7 | 48-7 | | | | | | 7500 | 119 | 171 |
| Example 48-8 | 48-8 | | | | | | 10000 | 116 | 174 |
| Example 48-9 | 48-9 | | | | | | 20000 | 110 | 183 |
| Comparative Example 48-2 | R48-2 | | | | | | 30000 | 105 | 173 |

From Tables 1 to 16, it can be seen, from comparison under the condition that the type and the concentration of (I-1) were the same, that the nonaqueous electrolyte solutions of the Examples could improve E1 and E2 in a well-balanced manner better than the nonaqueous electrolyte solutions of the Comparative Examples.
In addition, in the Examples in which the (1-2) content of the nonaqueous electrolyte solution was 10 to 15000 ppm by mass, E1 and E2 could be improved in a more balanced manner. That "E1 and E2 could be improved in a more balanced manner" means that "equivalent or higher resistance after high-temperature storage" and "superior post-overdischarge discharge capacity retention rate after the high-temperature storage test" were exhibited compared to those of the case in which the (I-2) content of the nonaqueous electrolyte solution was less than 10 ppm by mass.
Next, in order to examine the influence of the content of the cations other than lithium in the nonaqueous electrolyte solution in the case where the nonaqueous electrolyte solution battery was a lithium ion battery, those shown in the following Tables 17 to 22 were selected from the Examples and the Comparative Examples above, and the contents (ppm by mass) of the cations other than lithium in the nonaqueous electrolyte solution were determined by ICP emission spectrometry.

[Table 17]

Table 17

| | Nonaqueous Electrolyte Solution | (I-1) | | | (I-2) | | | Content of Cations Other Than Li in Electrolyte Solution [ppm by mass] | E1 | E2 |
|---|---|---|---|---|---|---|---|---|---|---|
| | | Type | | Concentration | Type | | Concentration | | | |
| | | Anion | Cation | [% by mass] | Anion | Cation | [ppm by mass] | | | |
| Comparative Example 0-1 | R0-1 | None | | | None | | | <1 | 100 | 100 |
| Example 37-5 | 37-5 | N-$(SO_2F)$(COCN) | $Li^+$ | 1.00 | BOB | $Li^+$ | 5000 | <1 | 121 | 141 |
| Example 4-5 | 4-5 | | | | | $Na^+$ | 5000 | 551 | 119 | 140 |
| Example 38-5 | 38-5 | | | | | $K^+$ | 5000 | 870 | 118 | 139 |

[Table 18]

Table 18

| | Nonaqueous Electrolyte Solution | (I-1) | | | (I-2) | | | Content of Cations Other Than Li in Electrolyte Solution [ppm by mass] | E1 | E2 |
|---|---|---|---|---|---|---|---|---|---|---|
| | | Type | | Concentration | Type | | Concentration | | | |
| | | Anion | Cation | [% by mass] | Anion | Cation | [ppm by mass] | | | |
| Comparative Example 0-1 | R0-1 | None | | | None | | | <1 | 100 | 100 |
| Example 39-5 | 39-5 | $N\text{-}(SO_2F)(COCN)$ | $Li^+$ | 1.00 | $BF_4$ | $Li^+$ | 5000 | <1 | 124 | 156 |
| Example 10-5 | 10-5 | | | | | $Na^+$ | 5000 | 1041 | 123 | 154 |
| Example 40-5 | 40-5 | | | | | $K^+$ | 5000 | 1557 | 118 | 154 |

[Table 19]

Table 19

| | Nonaqueous Electrolyte Solution | (I-1) | | | (I-2) | | | Content of Cations Other Than Li in Electrolyte Solution [ppm by mass] | E1 | E2 |
|---|---|---|---|---|---|---|---|---|---|---|
| | | Type | | Concentration | Type | | Concentration | | | |
| | | Anion | Cation | [% by mass] | Anion | Cation | [ppm by mass] | | | |
| Comparative Example 0-1 | R0-1 | None | | | None | | | <1 | 100 | 100 |
| Example 41-5 | 41-5 | N-$(SO_2F)(COCN)$ | $Li^+$ | 1.00 | | $Li^+$ | 5000 | <1 | 124 | 165 |
| Example 16-5 | 16-5 | | | | $ClO_4$ | $Na^+$ | 5000 | 940 | 122 | 164 |
| Example 42-5 | 42-5 | | | | | $K^+$ | 5000 | 1408 | 119 | 163 |

[Table 20]

Table 20

| | Nonaqueous Electrolyte Solution | (I-1) | | | (I-2) | | | Content of Cations Other Than Li in Electrolyte Solution [ppm by mass] | E1 | E2 |
|---|---|---|---|---|---|---|---|---|---|---|
| | | Type | | Concentration | Type | | Concentration | | | |
| | | Anion | Cation | [% by mass] | Anion | Cation | [ppm by mass] | | | |
| Comparative Example 0-1 | R0-1 | None | | | None | | | <1 | 100 | 100 |
| Example 43-5 | 43-5 | $N-(SO_2F)(CO(OCN))$ | $Li^+$ | 1.00 | BOB | $Li^+$ | 5000 | <1 | 122 | 142 |
| Example 22-5 | 22-5 | | | | | $Na^+$ | 5000 | 546 | 119 | 141 |
| Example 44-5 | 44-5 | | | | | $K^+$ | 5000 | 866 | 117 | 140 |

[Table 21]

Table 21

| | Nonaqueous Electrolyte Solution | (I-1) | | | (I-2) | | | Content of Cations Other Than Li in Electrolyte Solution [ppm by mass] | E1 | E2 |
|---|---|---|---|---|---|---|---|---|---|---|
| | | Type | | Concentration | Type | | Concentration | | | |
| | | Anion | Cation | [% by mass] | Anion | Cation | [ppm by mass] | | | |
| Comparative Example 0-1 | R0-1 | None | | | None | | | <1 | 100 | 100 |
| Example 45-5 | 45-5 | N-$(SO_2F)$(CO(OCN)) | $Li^+$ | 1.00 | $BF_4$ | $Li^+$ | 5000 | <1 | 129 | 149 |
| Example 28-5 | 28-5 | | | | | $Na^+$ | 5000 | 1048 | 124 | 148 |
| Example 46-5 | 46-5 | | | | | $K^+$ | 5000 | 1550 | 120 | 147 |

[Table 22]

Table 22

| | Nonaqueous Electrolyte Solution | (I-1) | | | (I-2) | | | Content of Cations Other Than Li in Electrolyte Solution [ppm by mass] | E1 | E2 |
|---|---|---|---|---|---|---|---|---|---|---|
| | | Type | | Concentration | Type | | Concentration | | | |
| | | Anion | Cation | [% by mass] | Anion | Cation | [ppm by mass] | | | |
| Comparative Example 0-1 | R0-1 | None | | | None | | | <1 | 100 | 100 |
| Example 47-5 | 47-5 | | | | | $Li^+$ | 5000 | <1 | 125 | 167 |
| Example 34-5 | 34-5 | $N^-(SO_2F)(CO(OCN))$ | $Li^+$ | 1.00 | $ClO_4$ | $Na^+$ | 5000 | 944 | 123 | 165 |
| Example 48-5 | 48-5 | | | | | $K^+$ | 5000 | 1411 | 119 | 165 |

From Tables 17 to 22, it can be seen, from comparison under the condition that the type and the concentration of (I-1) were the same and that the type of the anion of (I-2) was the same, that an effect of improving the low-temperature (-30°C) output characteristic after the high-temperature (70°C) storage test (resistance after high-temperature storage) and the post-overdischarge discharge capacity retention rate after the high-temperature (70°C) storage test in a well-balanced manner could be exhibited better as the content of the cations other than lithium in the nonaqueous electrolyte solution was lower.

<Evaluation of Low-Temperature (-30°C) Output Characteristic After High-Temperature (70°C) Storage Test (Resistance After High-Temperature Storage) (LFP Positive Electrode/Natural Graphite Negative Electrode)>

Each nonaqueous electrolyte solution battery (cell) produced as described above was left to stand at an ambient temperature of 25°C for 12 hours (impregnation time: 12 hours) and then conditioned at an ambient temperature of 25°C under the following conditions. That is, as initial charge and discharge, a charge and discharge cycle including constant-current constant-voltage charging at an upper limit charge voltage of 3.5 V and at 0.1 C rate (9 mA), discharging at 0.2 C rate constant current to a discharge end voltage of 2.0 V, subsequent constant-current constant-voltage charging at an upper limit charge voltage of 3.5 V and at 0.2 C rate, and discharging at 0.2 C rate constant current to a discharge end voltage of 2.0 V was repeated three times.

Further, a storage test was performed under the following conditions. That is, the cell subjected to the conditioning was subjected to constant-current constant-voltage charging at an upper limit charge voltage of 3.5 V and at 0.2 C rate and stored for one week in an environment at 70°C.

After the storage test was performed, the cell was subjected to discharging at 0.2 C rate constant current to a discharge end voltage of 2.0 V at an ambient temperature of 25°C and constant-current constant-voltage charging at 0.2 C rate by a constant-current constant-voltage method to an upper limit charge voltage of 3.5 V, and the discharge capacity (discharge capacity at -30°C) at the time of discharging at 5 C rate constant current to a discharge end voltage of 2.0 V at an ambient temperature of -30°C was measured.

In each table, the relative values of the capacities of the Examples and the Comparative Examples are shown, where the capacity of Comparative Example a0-1 using the nonaqueous electrolyte solution Ra0-1 without containing (I-1) and (I-2) is set to 100. A larger value thereof means that the discharge capacity at a low temperature after high-temperature storage is higher, that is, the resistance after high-temperature storage is smaller.

<Evaluation of Post-Overdischarge Discharge Capacity Retention Rate (LFP Positive Electrode/Natural Graphite Negative Electrode)>

For each cell subjected to the high-temperature (70°C) storage test as described above, a charge and discharge cycle including constant-current constant-voltage charging at an upper limit charge voltage of 3.5 V and at 0.2 C rate and discharging at 0.2 C rate constant current to a discharge end voltage of 2.0 V was repeated three times at an ambient temperature of 25°C. The third discharge capacity is defined as the capacity before the overdischarge test.

After the above operation is performed, the cell in the discharged state is further discharged to 0 V with constant resistance of 75 Ω to bring the cell into an overdischarged state, and the cell is left to stand at an ambient temperature of 25°C for three days. After the cell was left to stand, the cell was again subjected, at an ambient temperature of 25°C, to constant-current constant-voltage charging at an upper limit charge voltage of 3.5 V and at 0.2 C rate and discharging at 0.2 C rate constant current to a discharge end voltage of 2.0 V. The discharge capacity at that time (the capacity after the overdischarge test) was measured, and the capacity retention rate based on the capacity before the overdischarge test (post-overdischarge discharge capacity retention rate) was determined by the following equation. In each table, the "post-overdischarge discharge capacity retention rates" which are the relative values of the capacity retention rates of the Examples and the Comparative Examples are shown, where the capacity retention rate of Comparative Example a0-1 is set to 100.

Post-overdischarge discharge capacity retention rate (%) = (capacity after overdischarge test/capacity before overdischarge test) $\times$ 100

In the tables, "E1" shows the discharge capacity at the low temperature after high-temperature storage (discharge capacity at -30°C) (relative value), and "E2" shows the post-overdischarge discharge capacity retention rate (relative value).

[Table 23]

Table 23

| | Nonaqueoric Electrolyte Solution | (I-1) Type Anion | (I-1) Type Cation | (I-1) Concentration [% by mass] | (I-2) Type Anion | (I-2) Type Cation | (I-2) Concentration [ppm by mass] | E1 | E2 |
|---|---|---|---|---|---|---|---|---|---|
| Comparative Example a0-1 | Ra0-1 | $N^-(SO_2F)(COCN)$ | $Li^+$ | 0.00 | BOB | $Na^+$ | 0 | 100 | 100 |
| Comparative Example a0-2 | Ra0-2 | | | | | | 20 | 100 | 100 |
| Comparative Example a0-3 | Ra0-3 | | | | | | 50 | 100 | 100 |
| Comparative Example a0-4 | Ra0-4 | | | | | | 500 | 100 | 99 |
| Comparative Example a0-5 | Ra0-5 | | | | | | 2500 | 101 | 98 |
| Comparative Example a0-6 | Ra0-6 | | | | | | 5000 | 102 | 95 |
| Comparative Example a0-7 | Ra0-7 | | | | | | 6500 | 101 | 92 |
| Comparative Example a0-8 | Ra0-8 | | | | | | 7500 | 100 | 90 |
| Comparative Example a0-9 | Ra0-9 | | | | | | 10000 | 97 | 88 |
| Comparative Example a0-10 | Ra0-10 | | | | | | 20000 | 95 | 87 |
| Comparative Example a0-11 | Ra0-11 | | | | | | 30000 | 92 | 86 |
| Comparative Example a1-1 | Ra1-1 | | $Li^+$ | 0.05 | BOB | $Na^+$ | 0 | 102 | 109 |
| Example 49-1 | 49-1 | | | | | | 20 | 102 | 110 |
| Example 49-2 | 49-2 | | | | | | 50 | 103 | 110 |
| Example 49-3 | 49-3 | | | | | | 500 | 104 | 110 |
| Example 49-4 | 49-4 | | | | | | 2500 | 106 | 111 |
| Example 49-5 | 49-5 | | | | | | 5000 | 107 | 113 |
| Example 49-6 | 49-6 | | | | | | 6500 | 107 | 114 |
| Example 49-7 | 49-7 | | | | | | 7500 | 106 | 115 |
| Example 49-8 | 49-8 | | | | | | 10000 | 105 | 115 |
| Example 49-9 | 49-9 | | | | | | 20000 | 103 | 119 |
| Comparative Example a1-2 | Ra1-2 | | | | | | 30000 | 99 | 117 |
| Comparative Example a2-1 | Ra2-1 | | | | | | 0 | 104 | 111 |

(continued)

| | Nonaqueoric Electrolyte Solution | (I-1) | | | (I-2) | | | E1 | E2 |
|---|---|---|---|---|---|---|---|---|---|
| | | Type | | Concentration | Type | | Concentration | | |
| | | Anion | Cation | [% by mass] | Anion | Cation | [ppm by mass] | | |
| Example 50-1 | 50-1 | | $Li^+$ | 0.25 | BOB | $Na^+$ | 20 | 104 | 112 |
| Example 50-2 | 50-2 | | | | | | 50 | 105 | 112 |
| Example 50-3 | 50-3 | | | | | | 500 | 107 | 113 |
| Example 50-4 | 50-4 | | | | | | 2500 | 108 | 114 |
| Example 50-5 | 50-5 | | | | | | 5000 | 109 | 114 |
| Example 50-6 | 50-6 | | | | | | 6500 | 110 | 115 |
| Example 50-7 | 50-7 | | | | | | 7500 | 109 | 116 |
| Example 50-8 | 50-8 | | | | | | 10000 | 107 | 117 |
| Example 50-9 | 50-9 | | | | | | 20000 | 105 | 120 |
| Comparative Example a2-2 | Ra2-2 | | | | | | 30000 | 102 | 118 |
| Comparative Example a3-1 | Ra3-1 | | $Li^+$ | 0.50 | BOB | $Na^+$ | 0 | 108 | 127 |
| Example 51-1 | 51-1 | | | | | | 20 | 108 | 128 |
| Example 51-2 | 51-2 | | | | | | 50 | 109 | 128 |
| Example 51-3 | 51-3 | | | | | | 500 | 111 | 129 |
| Example 51-4 | 51-4 | | | | | | 2500 | 112 | 129 |
| Example 51-5 | 51-5 | | | | | | 5000 | 113 | 131 |
| Example 51-6 | 51-6 | | | | | | 6500 | 114 | 133 |
| Example 51-7 | 51-7 | | | | | | 7500 | 113 | 133 |
| Example 51-8 | 51-8 | | | | | | 10000 | 111 | 135 |
| Example 51-9 | 51-9 | | | | | | 20000 | 109 | 137 |
| Comparative Example a3-2 | Ra3-2 | | | | | | 30000 | 106 | 136 |

[Table 24]

Table 24

| | Nonaqueous Electrolyte Solution | (I-1) | | | (I-2) | | | E1 | E2 |
|---|---|---|---|---|---|---|---|---|---|
| | | Type | | Concentration | Type | | Concentration | | |
| | | Anion | Cation | [% by mass] | Anion | Cation | [ppm by mass] | | |
| Comparative Example a4-1 | Ra4-1 | | | | | | 0 | 116 | 140 |
| Example 52-1 | 52-1 | | | | | | 20 | 116 | 140 |
| Example 52-2 | 52-2 | | | | | | 50 | 117 | 141 |
| Example 52-3 | 52-3 | | | | | | 500 | 119 | 141 |
| Example 52-4 | 52-4 | | | | | | 2500 | 120 | 141 |
| Example 52-5 | 52-5 | | $Li^+$ | 1.00 | BOB | $Na^+$ | 5000 | 121 | 144 |
| Example 52-6 | 52-6 | | | | | | 6500 | 121 | 145 |
| Example 52-7 | 52-7 | | | | | | 7500 | 121 | 146 |
| Example 52-8 | 52-8 | | | | | | 10000 | 119 | 147 |
| Example 52-9 | 52-9 | | | | | | 20000 | 117 | 150 |
| Comparative Example a4-2 | Ra4-2 | | | | | | 30000 | 113 | 149 |
| Comparative Example a5-1 | Ra5-1 | | | | | | 0 | 121 | 145 |
| Example 53-1 | 53-1 | | | | | | 20 | 121 | 146 |
| Example 53-2 | 53-2 | | | | | | 50 | 122 | 146 |
| Example 53-3 | 53-3 | | | | | | 500 | 124 | 147 |
| Example 53-4 | 53-4 | | | | | | 2500 | 124 | 147 |
| Example 53-5 | 53-5 | N-$(SO_2F)$(COCN) | $Li^+$ | 2.00 | BOB | $Na^+$ | 5000 | 125 | 149 |
| Example 53-6 | 53-6 | | | | | | 6500 | 126 | 150 |
| Example 53-7 | 53-7 | | | | | | 7500 | 125 | 152 |
| Example 53-8 | 53-8 | | | | | | 10000 | 122 | 153 |
| Example 53-9 | 53-9 | | | | | | 20000 | 122 | 157 |
| Comparative Example a5-2 | Ra5-2 | | | | | | 30000 | 118 | 156 |
| Comparative Example a6-1 | Ra6-1 | | | | | | 0 | 114 | 148 |

(continued)

| | Nonaqueous Electrolyte Solution | (I-1) | | | (I-2) | | | E1 | E2 |
|---|---|---|---|---|---|---|---|---|---|
| | | Type | | Concentration | Type | | Concentration | | |
| | | Anion | Cation | [% by mass] | Anion | Cation | [ppm by mass] | | |
| Example 54-1 | 54-1 | | $Li^+$ | 4.00 | BOB | $Na^+$ | 20 | 115 | 148 |
| Example 54-2 | 54-2 | | | | | | 50 | 117 | 149 |
| Example 54-3 | 54-3 | | | | | | 500 | 118 | 149 |
| Example 54-4 | 54-4 | | | | | | 2500 | 118 | 150 |
| Example 54-5 | 54-5 | | | | | | 5000 | 119 | 152 |
| Example 54-6 | 54-6 | | | | | | 6500 | 119 | 153 |
| Example 54-7 | 54-7 | | | | | | 7500 | 117 | 155 |
| Example 54-8 | 54-8 | | | | | | 10000 | 116 | 156 |
| Example 54-9 | 54-9 | | | | | | 20000 | 116 | 160 |
| Comparative Example a6-2 | Ra6-2 | | | | | | 30000 | 113 | 159 |

[Table 25]

Table 25

| | Nonaqueous Electrolyte Solution | (I-1) | | | (I-2) | | | E1 | E2 |
|---|---|---|---|---|---|---|---|---|---|
| | | Type | | Concentration | Type | | Concentration | | |
| | | Anion | Cation | [% by mass] | Anion | Cation | [ppm by mass] | | |
| Comparative Example a0-1 | Ra0-1 | | | | | | 0 | 100 | 100 |
| Comparative Example a0-12 | Ra0-12 | | | | | | 20 | 100 | 100 |
| Comparative Example a0-13 | Ra0-13 | | | | | | 50 | 101 | 99 |
| Comparative Example a0-14 | Ra0-14 | | | | | | 500 | 103 | 97 |
| Comparative Example a0-15 | Ra0-15 | | | | | | 2500 | 108 | 94 |
| Comparative Example a0-16 | Ra0-16 | | $Li^+$ | 0.00 | $BF_4$ | $Na^+$ | 5000 | 106 | 92 |
| Comparative Example a0-17 | Ra0-17 | | | | | | 6500 | 104 | 91 |
| Comparative Example a0-18 | Ra0-18 | | | | | | 7500 | 102 | 90 |
| Comparative Example a0-19 | Ra0-19 | | | | | | 10000 | 98 | 89 |
| Comparative Example a0-20 | Ra0-20 | | | | | | 20000 | 94 | 88 |
| Comparative Example a0-21 | Ra0-21 | | | | | | 30000 | 90 | 83 |
| Comparative Example a7-1 | Ra7-1 | | | | | | 0 | 102 | 109 |
| Example 55-1 | 55-1 | | | | | | 20 | 102 | 110 |
| Example 55-2 | 55-2 | | | | | | 50 | 104 | 111 |
| Example 55-3 | 55-3 | | | | | | 500 | 106 | 111 |
| Example 55-4 | 55-4 | | | | | | 2500 | 112 | 113 |
| Example 55-5 | 55-5 | | $Li^+$ | 0.05 | $BF_4$ | $Na^+$ | 5000 | 111 | 118 |
| Example 55-6 | 55-6 | | | | | | 6500 | 110 | 121 |
| Example 55-7 | 55-7 | | | | | | 7500 | 108 | 124 |
| Example 55-8 | 55-8 | | | | | | 10000 | 106 | 128 |
| Example 55-9 | 55-9 | | | | | | 20000 | 102 | 140 |
| Comparative Example a7-2 | Ra7-2 | $N-(SO_2F)(COCN)$ | | | | | 30000 | 97 | 135 |
| Comparative Example a8-1 | Ra8-1 | | | | | | 0 | 104 | 111 |

(continued)

| | Nonaqueous Electrolyte Solution | (I-1) | | | (I-2) | | | E1 | E2 |
|---|---|---|---|---|---|---|---|---|---|
| | | Type | | Concentration | Type | | Concentration | | |
| | | Anion | Cation | [% by mass] | Anion | Cation | [ppm by mass] | | |
| Example 56-1 | 56-1 | | $Li^+$ | 0.25 | $BF_4$ | $Na^+$ | 20 | 104 | 112 |
| Example 56-2 | 56-2 | | | | | | 50 | 106 | 113 |
| Example 56-3 | 56-3 | | | | | | 500 | 109 | 114 |
| Example 56-4 | 56-4 | | | | | | 2500 | 115 | 116 |
| Example 56-5 | 56-5 | | | | | | 5000 | 114 | 120 |
| Example 56-6 | 56-6 | | | | | | 6500 | 113 | 123 |
| Example 56-7 | 56-7 | | | | | | 7500 | 111 | 125 |
| Example 56-8 | 56-8 | | | | | | 10000 | 108 | 130 |
| Example 56-9 | 56-9 | | | | | | 20000 | 104 | 142 |
| Comparative Example a8-2 | Ra8-2 | | | | | | 30000 | 100 | 137 |
| Comparative Example a9-1 | Ra9-1 | | $Li^+$ | 0.50 | $BF_4$ | $Na^+$ | 0 | 108 | 127 |
| Example 57-1 | 57-1 | | | | | | 20 | 108 | 128 |
| Example 57-2 | 57-2 | | | | | | 50 | 111 | 130 |
| Example 57-3 | 57-3 | | | | | | 500 | 114 | 130 |
| Example 57-4 | 57-4 | | | | | | 2500 | 119 | 132 |
| Example 57-5 | 57-5 | | | | | | 5000 | 118 | 138 |
| Example 57-6 | 57-6 | | | | | | 6500 | 117 | 141 |
| Example 57-7 | 57-7 | | | | | | 7500 | 115 | 143 |
| Example 57-8 | 57-8 | | | | | | 10000 | 112 | 150 |
| Example 57-9 | 57-9 | | | | | | 20000 | 108 | 161 |
| Comparative Example a9-2 | Ra9-2 | | | | | | 30000 | 104 | 157 |

[Table 26]

Table 26

| | Nonaqueous Electrolyte Solution | (I-1) | | | (I-2) | | | E1 | E2 |
|---|---|---|---|---|---|---|---|---|---|
| | | Type | | Concentration | Type | | Concentration | | |
| | | Anion | Cation | [% by mass] | Anion | Cation | [ppm by mass] | | |
| Comparative Example a10-1 | Ra10-1 | $N-(SO_2F)(COCN)$ | $Li^+$ | 1.00 | $BF_4$ | $Na^+$ | 0 | 116 | 140 |
| Example 58-1 | 58-1 | | | | | | 20 | 116 | 140 |
| Example 58-2 | 58-2 | | | | | | 50 | 118 | 142 |
| Example 58-3 | 58-3 | | | | | | 500 | 121 | 142 |
| Example 58-4 | 58-4 | | | | | | 2500 | 127 | 144 |
| Example 58-5 | 58-5 | | | | | | 5000 | 125 | 151 |
| Example 58-6 | 58-6 | | | | | | 6500 | 125 | 154 |
| Example 58-7 | 58-7 | | | | | | 7500 | 123 | 157 |
| Example 58-8 | 58-8 | | | | | | 10000 | 120 | 164 |
| Example 58-9 | 58-9 | | | | | | 20000 | 115 | 176 |
| Comparative Example a10-2 | Ra10-2 | | | | | | 30000 | 111 | 172 |
| Comparative Example a11-1 | Ra11-1 | | $Li^+$ | 2.00 | $BF_4$ | $Na^+$ | 0 | 121 | 145 |
| Example 59-1 | 59-1 | | | | | | 20 | 121 | 146 |
| Example 59-2 | 59-2 | | | | | | 50 | 123 | 148 |
| Example 59-3 | 59-3 | | | | | | 500 | 126 | 148 |
| Example 59-4 | 59-4 | | | | | | 2500 | 131 | 150 |
| Example 59-5 | 59-5 | | | | | | 5000 | 130 | 157 |
| Example 59-6 | 59-6 | | | | | | 6500 | 129 | 160 |
| Example 59-7 | 59-7 | | | | | | 7500 | 127 | 163 |
| Example 59-8 | 59-8 | | | | | | 10000 | 123 | 170 |
| Example 59-9 | 59-9 | | | | | | 20000 | 120 | 185 |
| Comparative Example a11-2 | Ra11-2 | | | | | | 30000 | 116 | 178 |
| Comparative Example a12-1 | Ra12-1 | | | | | | 0 | 114 | 148 |

(continued)

| | Nonaqueous Electrolyte Solution | (I-1) | | | (I-2) | | | E1 | E2 |
|---|---|---|---|---|---|---|---|---|---|
| | | Type | | Concentration | Type | | Concentration | | |
| | | Anion | Cation | [% by mass] | Anion | Cation | [ppm by mass] | | |
| Example 60-1 | 60-1 | | $Li^+$ | 4.00 | $BF_4$ | $Na^+$ | 20 | 115 | 148 |
| Example 60-2 | 60-2 | | | | | | 50 | 118 | 150 |
| Example 60-3 | 60-3 | | | | | | 500 | 120 | 151 |
| Example 60-4 | 60-4 | | | | | | 2500 | 125 | 153 |
| Example 60-5 | 60-5 | | | | | | 5000 | 123 | 160 |
| Example 60-6 | 60-6 | | | | | | 6500 | 122 | 163 |
| Example 60-7 | 60-7 | | | | | | 7500 | 119 | 166 |
| Example 60-8 | 60-8 | | | | | | 10000 | 118 | 173 |
| Example 60-9 | 60-9 | | | | | | 20000 | 115 | 188 |
| Comparative Example a12-2 | Ra12-2 | | | | | | 30000 | 111 | 181 |

[Table 27]

Table 27

| | Nonaqueous Electrolyte Solution | (I-1) | | | (I-2) | | | E1 | E2 |
|---|---|---|---|---|---|---|---|---|---|
| | | Type | | Concentration | Type | | Concentration | | |
| | | Anion | Cation | [% by mass] | Anion | Cation | [ppm by mass] | | |
| Comparative Example a0-1 | Ra0-1 | | | | | | 0 | 100 | 100 |
| Comparative Example a0-22 | Ra0-22 | | | | | | 20 | 100 | 98 |
| Comparative Example a0-23 | Ra0-23 | | | | | | 50 | 101 | 96 |
| Comparative Example a0-24 | Ra0-24 | | | | | | 500 | 103 | 92 |
| Comparative Example a0-25 | Ra0-25 | | | | | | 2500 | 105 | 90 |
| Comparative Example a0-26 | Ra0-26 | | $Li^+$ | 0.00 | $ClO_4$ | $Na^+$ | 5000 | 105 | 88 |
| Comparative Example a0-27 | Ra0-27 | | | | | | 6500 | 103 | 84 |
| Comparative Example a0-28 | Ra0-28 | | | | | | 7500 | 101 | 82 |
| Comparative Example a0-29 | Ra0-29 | | | | | | 10000 | 97 | 80 |
| Comparative Example a0-30 | Ra0-30 | | | | | | 20000 | 94 | 76 |
| Comparative Example a0-31 | Ra0-31 | | | | | | 30000 | 90 | 70 |
| Comparative Example a13-1 | Ra13-1 | | | | | | 0 | 102 | 109 |
| Example 61-1 | 61-1 | | | | | | 20 | 102 | 111 |
| Example 61-2 | 61-2 | | | | | | 50 | 104 | 112 |
| Example 61-3 | 61-3 | | | | | | 500 | 106 | 115 |
| Example 61-4 | 61-4 | | | | | | 2500 | 109 | 122 |
| Example 61-5 | 61-5 | | $Li^+$ | 0.05 | $ClO_4$ | $Na^+$ | 5000 | 110 | 132 |
| Example 61-6 | 61-6 | | | | | | 6500 | 110 | 136 |
| Example 61-7 | 61-7 | | | | | | 7500 | 107 | 141 |
| Example 61-8 | 61-8 | $N\text{-}(SO_2F)(COCN)$ | | | | | 10000 | 105 | 144 |
| Example 61-9 | 61-9 | | | | | | 20000 | 102 | 145 |
| Comparative Example a13-1 | Ra13-2 | | | | | | 30000 | 97 | 141 |
| Comparative Example a14-1 | Ra14-1 | | | | | | 0 | 104 | 111 |

(continued)

| | Nonaqueous Electrolyte Solution | (I-1) | | | (I-2) | | | E1 | E2 |
|---|---|---|---|---|---|---|---|---|---|
| | | Type | | Concentration | Type | | Concentration | | |
| | | Anion | Cation | [% by mass] | Anion | Cation | [ppm by mass] | | |
| Example 62-1 | 62-1 | | $Li^+$ | 0.25 | $ClO_4$ | $Na^+$ | 20 | 104 | 113 |
| Example 62-2 | 62-2 | | | | | | 50 | 106 | 114 |
| Example 62-3 | 62-3 | | | | | | 500 | 109 | 117 |
| Example 62-4 | 62-4 | | | | | | 2500 | 111 | 125 |
| Example 62-5 | 62-5 | | | | | | 5000 | 112 | 135 |
| Example 62-6 | 62-6 | | | | | | 6500 | 112 | 137 |
| Example 62-7 | 62-7 | | | | | | 7500 | 110 | 142 |
| Example 62-8 | 62-8 | | | | | | 10000 | 107 | 147 |
| Example 62-9 | 62-9 | | | | | | 20000 | 104 | 148 |
| Comparative Example a14-2 | Ra14-2 | | | | | | 30000 | 100 | 143 |
| Comparative Example a15-1 | Ra15-1 | | $Li^+$ | 0.50 | $ClO_4$ | $Na^+$ | 0 | 108 | 127 |
| Example 63-1 | 63-1 | | | | | | 20 | 108 | 129 |
| Example 63-2 | 63-2 | | | | | | 50 | 111 | 131 |
| Example 63-3 | 63-3 | | | | | | 500 | 114 | 134 |
| Example 63-4 | 63-4 | | | | | | 2500 | 116 | 142 |
| Example 63-5 | 63-5 | | | | | | 5000 | 117 | 154 |
| Example 63-6 | 63-6 | | | | | | 6500 | 116 | 158 |
| Example 63-7 | 63-7 | | | | | | 7500 | 114 | 163 |
| Example 63-8 | 63-8 | | | | | | 10000 | 111 | 168 |
| Example 63-9 | 63-9 | | | | | | 20000 | 108 | 169 |
| Comparative Example a15-2 | Ra15-2 | | | | | | 30000 | 104 | 164 |

[Table 28]

Table 28

| | Nonaqueous Electrolyte Solution | (I-1) Type Anion | (I-1) Type Cation | (I-1) Concentration [% by mass] | (I-2) Type Anion | (I-2) Type Cation | (I-2) Concentration [ppm by mass] | E1 | E2 |
|---|---|---|---|---|---|---|---|---|---|
| Comparative Example a16-1 | Ra16-1 | $N-(SO_2F)(COCN)$ | $Li^+$ | 1.00 | $ClO_4$ | $Na^+$ | 0 | 116 | 140 |
| Example 64-1 | 64-1 | | | | | | 20 | 116 | 142 |
| Example 64-2 | 64-2 | | | | | | 50 | 118 | 143 |
| Example 64-3 | 64-3 | | | | | | 500 | 121 | 147 |
| Example 64-4 | 64-4 | | | | | | 2500 | 123 | 155 |
| Example 64-5 | 64-5 | | | | | | 5000 | 124 | 169 |
| Example 64-6 | 64-6 | | | | | | 6500 | 124 | 172 |
| Example 64-7 | 64-7 | | | | | | 7500 | 122 | 178 |
| Example 64-8 | 64-8 | | | | | | 10000 | 119 | 184 |
| Example 64-9 | 64-9 | | | | | | 20000 | 115 | 185 |
| Comparative Example a16-2 | Ra16-2 | | | | | | 30000 | 111 | 180 |
| Comparative Example a17-1 | Ra17-1 | | $Li^+$ | 2.00 | $ClO_4$ | $Na^+$ | 0 | 121 | 145 |
| Example 65-1 | 65-1 | | | | | | 20 | 121 | 147 |
| Example 65-2 | 65-2 | | | | | | 50 | 123 | 149 |
| Example 65-3 | 65-3 | | | | | | 500 | 126 | 153 |
| Example 65-4 | 65-4 | | | | | | 2500 | 128 | 162 |
| Example 65-5 | 65-5 | | | | | | 5000 | 129 | 176 |
| Example 65-6 | 65-6 | | | | | | 6500 | 128 | 179 |
| Example 65-7 | 65-7 | | | | | | 7500 | 127 | 185 |
| Example 65-8 | 65-8 | | | | | | 10000 | 122 | 192 |
| Example 65-9 | 65-9 | | | | | | 20000 | 120 | 193 |
| Comparative Example a17-2 | Ra17-2 | | | | | | 30000 | 116 | 187 |
| Comparative Example a18-1 | Ra18-1 | | | | | | 0 | 114 | 148 |

(continued)

| | Nonaqueous Electrolyte Solution | (I-1) | | | (I-2) | | | E1 | E2 |
|---|---|---|---|---|---|---|---|---|---|
| | | Type | | Concentration | Type | | Concentration | | |
| | | Anion | Cation | [% by mass] | Anion | Cation | [ppm by mass] | | |
| Example 66-1 | 66-1 | | $Li^+$ | 4.00 | $ClO_4$ | $Na^+$ | 20 | 115 | 150 |
| Example 66-2 | 66-2 | | | | | | 50 | 118 | 152 |
| Example 66-3 | 66-3 | | | | | | 500 | 120 | 156 |
| Example 66-4 | 66-4 | | | | | | 2500 | 122 | 165 |
| Example 66-5 | 66-5 | | | | | | 5000 | 122 | 179 |
| Example 66-6 | 66-6 | | | | | | 6500 | 121 | 182 |
| Example 66-7 | 66-7 | | | | | | 7500 | 119 | 188 |
| Example 66-8 | 66-8 | | | | | | 10000 | 116 | 195 |
| Example 66-9 | 66-9 | | | | | | 20000 | 115 | 196 |
| Comparative Example a18-2 | Ra18-2 | | | | | | 30000 | 111 | 190 |

[Table 29]

Table 29

| | Nonaqueous Electrolyte Solution | (I-1) | | | (I-2) | | | E1 | E2 |
|---|---|---|---|---|---|---|---|---|---|
| | | Type | | Concentration | Type | | Concentration | | |
| | | Anion | Cation | [% by mass] | Anion | Cation | [ppm by mass] | | |
| Comparative Example a0-1 | Ra0-1 | $N-(SO_2F)(CO(OCN))$ | $Li^+$ | 0.00 | BOB | $Na^+$ | 0 | 100 | 100 |
| Comparative Example a0-2 | Ra0-2 | | | | | | 20 | 100 | 100 |
| Comparative Example a0-3 | Ra0-3 | | | | | | 50 | 100 | 100 |
| Comparative Example a0-4 | Ra0-4 | | | | | | 500 | 100 | 99 |
| Comparative Example a0-5 | Ra0-5 | | | | | | 2500 | 101 | 98 |
| Comparative Example a0-6 | Ra0-6 | | | | | | 5000 | 102 | 95 |
| Comparative Example a0-7 | Ra0-7 | | | | | | 6500 | 101 | 92 |
| Comparative Example a0-8 | Ra0-8 | | | | | | 7500 | 100 | 90 |
| Comparative Example a0-9 | Ra0-9 | | | | | | 10000 | 97 | 88 |
| Comparative Example a0-10 | Ra0-10 | | | | | | 20000 | 95 | 87 |
| Comparative Example a0-11 | Ra0-11 | | | | | | 30000 | 92 | 86 |
| Comparative Example a19-1 | Ra19-1 | | $Li^+$ | 0.05 | BOB | $Na^+$ | 0 | 103 | 117 |
| Example 67-1 | 67-1 | | | | | | 20 | 103 | 118 |
| Example 67-2 | 67-2 | | | | | | 50 | 104 | 119 |
| Example 67-3 | 67-3 | | | | | | 500 | 105 | 119 |
| Example 67-4 | 67-4 | | | | | | 2500 | 107 | 119 |
| Example 67-5 | 67-5 | | | | | | 5000 | 107 | 120 |
| Example 67-6 | 67-6 | | | | | | 6500 | 106 | 120 |
| Example 67-7 | 67-7 | | | | | | 7500 | 106 | 120 |
| Example 67-8 | 67-8 | | | | | | 10000 | 104 | 119 |
| Example 67-9 | 67-9 | | | | | | 20000 | 102 | 118 |
| Comparative Example a19-2 | Ra19-2 | | | | | | 30000 | 99 | 117 |
| Comparative Example a20-1 | Ra20-1 | | | | | | 0 | 104 | 121 |

(continued)

| | Nonaqueous Electrolyte Solution | (I-1) | | | (I-2) | | | E1 | E2 |
|---|---|---|---|---|---|---|---|---|---|
| | | Type | | Concentration | Type | | Concentration | | |
| | | Anion | Cation | [% by mass] | Anion | Cation | [ppm by mass] | | |
| Example 68-1 | 68-1 | | $Li^+$ | 0.25 | BOB | $Na^+$ | 20 | 104 | 122 |
| Example 68-2 | 68-2 | | | | | | 50 | 105 | 123 |
| Example 68-3 | 68-3 | | | | | | 500 | 106 | 123 |
| Example 68-4 | 68-4 | | | | | | 2500 | 109 | 123 |
| Example 68-5 | 68-5 | | | | | | 5000 | 109 | 124 |
| Example 68-6 | 68-6 | | | | | | 6500 | 108 | 124 |
| Example 68-7 | 68-7 | | | | | | 7500 | 107 | 125 |
| Example 68-8 | 68-8 | | | | | | 10000 | 105 | 123 |
| Example 68-9 | 68-9 | | | | | | 20000 | 104 | 122 |
| Comparative Example a20-2 | Ra20-2 | | | | | | 30000 | 102 | 121 |
| Comparative Example a21-1 | Ra21-1 | | $Li^+$ | 0.50 | BOB | $Na^+$ | 0 | 108 | 132 |
| Example 69-1 | 69-1 | | | | | | 20 | 109 | 133 |
| Example 69-2 | 69-2 | | | | | | 50 | 109 | 133 |
| Example 69-3 | 69-3 | | | | | | 500 | 109 | 133 |
| Example 69-4 | 69-4 | | | | | | 2500 | 111 | 134 |
| Example 69-5 | 69-5 | | | | | | 5000 | 112 | 135 |
| Example 69-6 | 69-6 | | | | | | 6500 | 111 | 135 |
| Example 69-7 | 69-7 | | | | | | 7500 | 110 | 135 |
| Example 69-8 | 69-8 | | | | | | 10000 | 109 | 134 |
| Example 69-9 | 69-9 | | | | | | 20000 | 108 | 133 |
| Comparative Example a21-2 | Ra21-2 | | | | | | 30000 | 106 | 132 |

[Table 30]

Table 30

| | Nonaqueous Electrolyte Solution | (I-1) | | | (I-2) | | | E1 | E2 |
|---|---|---|---|---|---|---|---|---|---|
| | | Type | | Concentration | Type | | Concentration | | |
| | | Anion | Cation | [% by mass] | Anion | Cation | [ppm by mass] | | |
| Comparative Example a22-1 | Ra22-1 | $N-(SO_2F)(CO(OCN))$ | $Li^+$ | 1.00 | BOB | $Na^+$ | 0 | 116 | 141 |
| Example 70-1 | 70-1 | | | | | | 20 | 117 | 142 |
| Example 70-2 | 70-2 | | | | | | 50 | 117 | 142 |
| Example 70-3 | 70-3 | | | | | | 500 | 118 | 143 |
| Example 70-4 | 70-4 | | | | | | 2500 | 119 | 143 |
| Example 70-5 | 70-5 | | | | | | 5000 | 119 | 145 |
| Example 70-6 | 70-6 | | | | | | 6500 | 117 | 145 |
| Example 70-7 | 70-7 | | | | | | 7500 | 116 | 146 |
| Example 70-8 | 70-8 | | | | | | 10000 | 115 | 143 |
| Example 70-9 | 70-9 | | | | | | 20000 | 114 | 142 |
| Comparative Example a22-2 | Ra22-2 | | | | | | 30000 | 112 | 141 |
| Comparative Example a23-1 | Ra23-1 | | $Li^+$ | 2.00 | BOB | $Na^+$ | 0 | 118 | 144 |
| Example 71-1 | 71-1 | | | | | | 20 | 118 | 145 |
| Example 71-2 | 71-2 | | | | | | 50 | 118 | 146 |
| Example 71-3 | 71-3 | | | | | | 500 | 119 | 146 |
| Example 71-4 | 71-4 | | | | | | 2500 | 119 | 147 |
| Example 71-5 | 71-5 | | | | | | 5000 | 121 | 148 |
| Example 71-6 | 71-6 | | | | | | 6500 | 119 | 148 |
| Example 71-7 | 71-7 | | | | | | 7500 | 118 | 149 |
| Example 71-8 | 71-8 | | | | | | 10000 | 117 | 146 |
| Example 71-9 | 71-9 | | | | | | 20000 | 116 | 145 |
| Comparative Example a23-2 | Ra23-2 | | | | | | 30000 | 115 | 144 |
| Comparative Example a24-1 | Ra24-1 | | | | | | 0 | 108 | 149 |

(continued)

| | Nonaqueous Electrolyte Solution | (I-1) | | | (I-2) | | | E1 | E2 |
|---|---|---|---|---|---|---|---|---|---|
| | | Type | | Concentration | Type | | Concentration | | |
| | | Anion | Cation | [% by mass] | Anion | Cation | [ppm by mass] | | |
| Example 72-1 | 72-1 | | | | | | 20 | 109 | 150 |
| Example 72-2 | 72-2 | | | | | | 50 | 109 | 150 |
| Example 72-3 | 72-3 | | | | | | 500 | 109 | 151 |
| Example 72-4 | 72-4 | | | | | | 2500 | 110 | 151 |
| Example 72-5 | 72-5 | | $Li^+$ | 4.00 | BOB | $Na^+$ | 5000 | 110 | 152 |
| Example 72-6 | 72-6 | | | | | | 6500 | 109 | 152 |
| Example 72-7 | 72-7 | | | | | | 7500 | 108 | 153 |
| Example 72-8 | 72-8 | | | | | | 10000 | 107 | 152 |
| Example 72-9 | 72-9 | | | | | | 20000 | 106 | 150 |
| Comparative Example a24-2 | Ra24-2 | | | | | | 30000 | 103 | 149 |

[Table 31]

Table 31

| | Nonaqueous Electrolyte Solution | (I-1) | | | (I-2) | | | E1 | E2 |
|---|---|---|---|---|---|---|---|---|---|
| | | Type | | Concentration | Type | | Concentration | | |
| | | Anion | Cation | [% by mass] | Anion | Cation | [ppm by mass] | | |
| Comparative Example a0-1 | Ra0-1 | | | | | | 0 | 100 | 100 |
| Comparative Example a0-12 | Ra0-12 | | | | | | 20 | 100 | 100 |
| Comparative Example a0-13 | Ra0-13 | | | | | | 50 | 101 | 99 |
| Comparative Example a0-14 | Ra0-14 | | | | | | 500 | 103 | 97 |
| Comparative Example a0-15 | Ra0-15 | | | | | | 2500 | 108 | 94 |
| Comparative Example a0-16 | Ra0-16 | | $Li^+$ | 0.00 | $BF_4$ | $Na^+$ | 5000 | 106 | 92 |
| Comparative Example *a0-17* | Ra0-17 | | | | | | 6500 | 104 | 91 |
| Comparative Example a0-18 | Ra0-18 | | | | | | 7500 | 102 | 90 |
| Comparative Example a0-19 | Ra0-19 | | | | | | 10000 | 98 | 89 |
| Comparative Example a0-20 | Ra0-20 | | | | | | 20000 | 94 | 88 |
| Comparative Example a0-21 | Ra0-21 | | | | | | 30000 | 90 | 83 |
| Comparative Example a25-1 | Ra25-1 | | | | | | 0 | 103 | 117 |
| Example 73-1 | 73-1 | | | | | | 20 | 103 | 118 |
| Example 73-2 | 73-2 | | | | | | 50 | 105 | 119 |
| Example 73-3 | 73-3 | | | | | | 500 | 107 | 119 |
| Example 73-4 | 73-4 | | | | | | 2500 | 113 | 121 |
| Example 73-5 | 73-5 | | $Li^+$ | 0.05 | $BF_4$ | $Na^+$ | 5000 | 112 | 127 |
| Example 73-6 | 73-6 | | | | | | 6500 | 109 | 130 |
| Example 73-7 | 73-7 | $N-(SO_2F)(CO(OCN))$ | | | | | 7500 | 107 | 133 |
| Example 73-8 | 73-8 | | | | | | 10000 | 105 | 138 |
| Example 73-9 | 73-9 | | | | | | 20000 | 101 | 151 |
| Comparative Example a25-2 | Ra25-2 | | | | | | 30000 | 97 | 145 |
| Comparative Example a26-1 | Ra26-1 | | | | | | 0 | 104 | 121 |

(continued)

| | Nonaqueous Electrolyte Solution | (I-1) | | | (I-2) | | | E1 | E2 |
|---|---|---|---|---|---|---|---|---|---|
| | | Type | | Concentration | Type | | Concentration | | |
| | | Anion | Cation | [% by mass] | Anion | Cation | [ppm by mass] | | |
| Example 74-1 | 74-1 | | $Li^+$ | 0.25 | $BF_4$ | $Na^+$ | 20 | 104 | 122 |
| Example 74-2 | 74-2 | | | | | | 50 | 106 | 124 |
| Example 74-3 | 74-3 | | | | | | 500 | 108 | 124 |
| Example 74-4 | 74-4 | | | | | | 2500 | 115 | 127 |
| Example 74-5 | 74-5 | | | | | | 5000 | 114 | 131 |
| Example 74-6 | 74-6 | | | | | | 6500 | 111 | 134 |
| Example 74-7 | 74-7 | | | | | | 7500 | 109 | 136 |
| Example 74-8 | 74-8 | | | | | | 10000 | 106 | 142 |
| Example 74-9 | 74-9 | | | | | | 20000 | 102 | 154 |
| Comparative Example a26-2 | Ra26-2 | | | | | | 30000 | 100 | 150 |
| Comparative Example a27-1 | Ra27-1 | | $Li^+$ | 0.50 | $BF_4$ | $Na^+$ | 0 | 108 | 132 |
| Example 75-1 | 75-1 | | | | | | 20 | 109 | 133 |
| Example 75-2 | 75-2 | | | | | | 50 | 110 | 134 |
| Example 75-3 | 75-3 | | | | | | 500 | 111 | 135 |
| Example 75-4 | 75-4 | | | | | | 2500 | 118 | 137 |
| Example 75-5 | 75-5 | | | | | | 5000 | 116 | 143 |
| Example 75-6 | 75-6 | | | | | | 6500 | 114 | 146 |
| Example 75-7 | 75-7 | | | | | | 7500 | 112 | 149 |
| Example 75-8 | 75-8 | | | | | | 10000 | 110 | 155 |
| Example 75-9 | 75-9 | | | | | | 20000 | 107 | 167 |
| Comparative Example a27-2 | Ra27-2 | | | | | | 30000 | 104 | 163 |

[Table 32]

Table 32

| | Nonaqueous Electrolyte Solution | (I-1) | | | (I-2) | | | E1 | E2 |
|---|---|---|---|---|---|---|---|---|---|
| | | Type | | Concentration | Type | | Concentration | | |
| | | Anion | Cation | [% by mass] | Anion | Cation | [ppm by mass] | | |
| Comparative Example a28-1 | Ra28-1 | $N-(SO_2F)(CO(OCN))$ | $Li^+$ | 1.00 | $BF_4$ | $Na^+$ | 0 | 113 | 141 |
| Example 76-1 | 76-1 | | | | | | 20 | 114 | 142 |
| Example 76-2 | 76-2 | | | | | | 50 | 115 | 144 |
| Example 76-3 | 76-3 | | | | | | 500 | 118 | 144 |
| Example 76-4 | 76-4 | | | | | | 2500 | 123 | 146 |
| Example 76-5 | 76-5 | | | | | | 5000 | 122 | 153 |
| Example 76-6 | 76-6 | | | | | | 6500 | 119 | 156 |
| Example 76-7 | 76-7 | | | | | | 7500 | 117 | 159 |
| Example 76-8 | 76-8 | | | | | | 10000 | 115 | 166 |
| Example 76-9 | 76-9 | | | | | | 20000 | 112 | 178 |
| Comparative Example a28-2 | Ra28-2 | | | | | | 30000 | 108 | 174 |
| Comparative Example a29-1 | Ra29-1 | | $Li^+$ | 2.00 | $BF_4$ | $Na^+$ | 0 | 118 | 144 |
| Example 77-1 | 77-1 | | | | | | 20 | 118 | 145 |
| Example 77-2 | 77-2 | | | | | | 50 | 120 | 147 |
| Example 77-3 | 77-3 | | | | | | 500 | 121 | 147 |
| Example 77-4 | 77-4 | | | | | | 2500 | 127 | 149 |
| Example 77-5 | 77-5 | | | | | | 5000 | 125 | 156 |
| Example 77-6 | 77-6 | | | | | | 6500 | 122 | 159 |
| Example 77-7 | 77-7 | | | | | | 7500 | 120 | 162 |
| Example 77-8 | 77-8 | | | | | | 10000 | 118 | 169 |
| Example 77-9 | 77-9 | | | | | | 20000 | 115 | 184 |
| Comparative Example a29-2 | Ra29-2 | | | | | | 30000 | 112 | 177 |
| Comparative Example a30-1 | Ra30-1 | | | | | | 0 | 108 | 149 |

(continued)

| | Nonaqueous Electrolyte Solution | (I-1) | | | (I-2) | | | E1 | E2 |
|---|---|---|---|---|---|---|---|---|---|
| | | Type | | Concentration | Type | | Concentration | | |
| | | Anion | Cation | [% by mass] | Anion | Cation | [ppm by mass] | | |
| Example 78-1 | 78-1 | | | | | | 20 | 109 | 150 |
| Example 78-2 | 78-2 | | | | | | 50 | 110 | 152 |
| Example 78-3 | 78-3 | | | | | | 500 | 112 | 152 |
| Example 78-4 | 78-4 | | | | | | 2500 | 116 | 154 |
| Example 78-5 | 78-5 | | $Li^+$ | 4.00 | $BF_4$ | $Na^+$ | 5000 | 115 | 161 |
| Example 78-6 | 78-6 | | | | | | 6500 | 112 | 164 |
| Example 78-7 | 78-7 | | | | | | 7500 | 109 | 168 |
| Example 78-8 | 78-8 | | | | | | 10000 | 108 | 175 |
| Example 78-9 | 78-9 | | | | | | 20000 | 105 | 190 |
| Comparative Example a30-2 | Ra30-2 | | | | | | 30000 | 101 | 182 |

[Table 33]

Table 33

| | Nonaqueous Electrolyte Solution | (I-1) | | | (I-2) | | | E1 | E2 |
|---|---|---|---|---|---|---|---|---|---|
| | | Type | | Concentration | Type | | Concentration | | |
| | | Anion | Cation | [% by mass] | Anion | Cation | [ppm by mass] | | |
| Comparative Example a0-1 | Ra0-1 | $N^-(SO_2F)(CO(OCN))$ | $Li^+$ | 0.00 | $ClO_4$ | $Na^+$ | 0 | 100 | 100 |
| Comparative Example a0-22 | Ra0-22 | | | | | | 20 | 100 | 98 |
| Comparative Example a0-23 | Ra0-23 | | | | | | 50 | 101 | 96 |
| Comparative Example a0-24 | Ra0-24 | | | | | | 500 | 103 | 92 |
| Comparative Example a0-25 | Ra0-25 | | | | | | 2500 | 105 | 90 |
| Comparative Example a0-26 | Ra0-26 | | | | | | 5000 | 105 | 88 |
| Comparative Example a0-27 | Ra0-27 | | | | | | 6500 | 103 | 84 |
| Comparative Example a0-28 | Ra0-28 | | | | | | 7500 | 101 | 82 |
| Comparative Example a0-29 | Ra0-29 | | | | | | 10000 | 97 | 80 |
| Comparative Example a0-30 | Ra0-30 | | | | | | 20000 | 94 | 76 |
| Comparative Example a0-31 | Ra0-31 | | | | | | 30000 | 90 | 70 |
| Comparative Example a31-1 | Ra31-1 | | $Li^+$ | 0.05 | $ClO_4$ | $Na^+$ | 0 | 103 | 117 |
| Example 79-1 | 79-1 | | | | | | 20 | 103 | 119 |
| Example 79-2 | 79-2 | | | | | | 50 | 105 | 120 |
| Example 79-3 | 79-3 | | | | | | 500 | 107 | 123 |
| Example 79-4 | 79-4 | | | | | | 2500 | 110 | 130 |
| Example 79-5 | 79-5 | | | | | | 5000 | 110 | 142 |
| Example 79-6 | 79-6 | | | | | | 6500 | 109 | 146 |
| Example 79-7 | 79-7 | | | | | | 7500 | 107 | 151 |
| Example 79-8 | 79-8 | | | | | | 10000 | 104 | 155 |
| Example 79-9 | 79-9 | | | | | | 20000 | 101 | 156 |
| Comparative Example a31-2 | Ra31-2 | | | | | | 30000 | 97 | 151 |
| Comparative Example a32-1 | Ra32-1 | | | | | | 0 | 104 | 121 |

(continued)

| | Nonaqueous Electrolyte Solution | (I-1) | | | (I-2) | | | E1 | E2 |
|---|---|---|---|---|---|---|---|---|---|
| | | Type | | Concentration | Type | | Concentration | | |
| | | Anion | Cation | [% by mass] | Anion | Cation | [ppm by mass] | | |
| Example 80-1 | 80-1 | | $Li^+$ | 0.25 | $ClO_4$ | $Na^+$ | 20 | 104 | 123 |
| Example 80-2 | 80-2 | | | | | | 50 | 106 | 125 |
| Example 80-3 | 80-3 | | | | | | 500 | 108 | 128 |
| Example 80-4 | 80-4 | | | | | | 2500 | 112 | 136 |
| Example 80-5 | 80-5 | | | | | | 5000 | 113 | 147 |
| Example 80-6 | 80-6 | | | | | | 6500 | 110 | 149 |
| Example 80-7 | 80-7 | | | | | | 7500 | 108 | 155 |
| Example 80-8 | 80-8 | | | | | | 10000 | 105 | 160 |
| Example 80-9 | 80-9 | | | | | | 20000 | 102 | 161 |
| Comparative Example a32-2 | Ra32-2 | | | | | | 30000 | 100 | 156 |
| Comparative Example a33-1 | Ra33-1 | | $Li^+$ | 0.50 | $ClO_4$ | $Na^+$ | 0 | 108 | 132 |
| Example 81-1 | 81-1 | | | | | | 20 | 109 | 134 |
| Example 81-2 | 81-2 | | | | | | 50 | 110 | 136 |
| Example 81-3 | 81-3 | | | | | | 500 | 111 | 139 |
| Example 81-4 | 81-4 | | | | | | 2500 | 114 | 148 |
| Example 81-5 | 81-5 | | | | | | 5000 | 115 | 160 |
| Example 81-6 | 81-6 | | | | | | 6500 | 113 | 164 |
| Example 81-7 | 81-7 | | | | | | 7500 | 111 | 169 |
| Example 81-8 | 81-8 | | | | | | 10000 | 109 | 175 |
| Example 81-9 | 81-9 | | | | | | 20000 | 107 | 176 |
| Comparative Example a33-2 | Ra33-2 | | | | | | 30000 | 104 | 170 |

[Table 34]

Table 34

| | Nonaqueous Electrolyte Solution | (I-1) | | | (I-2) | | | E1 | E2 |
|---|---|---|---|---|---|---|---|---|---|
| | | Type | | Concentration | Type | | Concentration | | |
| | | Anion | Cation | [% by mass] | Anion | Cation | [ppm by mass] | | |
| Comparative Example a34-1 | Ra34-1 | N-$(SO_2F)(CO(OCN))$ | $Li^+$ | 1.00 | $ClO_4$ | $Na^+$ | 0 | 116 | 141 |
| Example 82-1 | 82-1 | | | | | | 20 | 116 | 143 |
| Example 82-2 | 82-2 | | | | | | 50 | 117 | 145 |
| Example 82-3 | 82-3 | | | | | | 500 | 120 | 148 |
| Example 82-4 | 82-4 | | | | | | 2500 | 122 | 157 |
| Example 82-5 | 82-5 | | | | | | 5000 | 123 | 171 |
| Example 82-6 | 82-6 | | | | | | 6500 | 120 | 174 |
| Example 82-7 | 82-7 | | | | | | 7500 | 118 | 180 |
| Example 82-8 | 82-8 | | | | | | 10000 | 116 | 186 |
| Example 82-9 | 82-9 | | | | | | 20000 | 114 | 188 |
| Comparative Example a34-2 | Ra34-2 | | | | | | 30000 | 110 | 182 |
| Comparative Example a35-1 | Ra35-1 | | $Li^+$ | 2.00 | $ClO_4$ | $Na^+$ | 0 | 118 | 144 |
| Example 83-1 | 83-1 | | | | | | 20 | 118 | 147 |
| Example 83-2 | 83-2 | | | | | | 50 | 120 | 148 |
| Example 83-3 | 83-3 | | | | | | 500 | 121 | 152 |
| Example 83-4 | 83-4 | | | | | | 2500 | 123 | 161 |
| Example 83-5 | 83-5 | | | | | | 5000 | 124 | 175 |
| Example 83-6 | 83-6 | | | | | | 6500 | 122 | 178 |
| Example 83-7 | 83-7 | | | | | | 7500 | 120 | 184 |
| Example 83-8 | 83-8 | | | | | | 10000 | 117 | 191 |
| Example 83-9 | 83-9 | | | | | | 20000 | 115 | 192 |
| Comparative Example a35-2 | Ra35-2 | | | | | | 30000 | 112 | 186 |
| Comparative Example a36-1 | Ra36-1 | | | | | | 0 | 108 | 149 |

(continued)

| | Nonaqueous Electrolyte Solution | (I-1) | | | (I-2) | | | E1 | E2 |
|---|---|---|---|---|---|---|---|---|---|
| | | Type | | Concentration | Type | | Concentration | | |
| | | Anion | Cation | [% by mass] | Anion | Cation | [ppm by mass] | | |
| Example 84-1 | 84-1 | | | | | | 20 | 109 | 151 |
| Example 84-2 | 84-2 | | | | | | 50 | 110 | 153 |
| Example 84-3 | 84-3 | | | | | | 500 | 112 | 157 |
| Example 84-4 | 84-4 | | | | | | 2500 | 113 | 166 |
| Example 84-5 | 84-5 | | $Li^+$ | 4.00 | $ClO_4$ | $Na^+$ | 5000 | 113 | 180 |
| Example 84-6 | 84-6 | | | | | | 6500 | 111 | 184 |
| Example 84-7 | 84-7 | | | | | | 7500 | 109 | 190 |
| Example 84-8 | 84-8 | | | | | | 10000 | 107 | 197 |
| Example 84-9 | 84-9 | | | | | | 20000 | 105 | 198 |
| Comparative Example a36-2 | Ra36-2 | | | | | | 30000 | 101 | 192 |

[Table 35]

Table 35

| | Nonaqueous Electrolyte Solution | (I-1) | | | (I-2) | | | E1 | E2 |
|---|---|---|---|---|---|---|---|---|---|
| | | Type | | Concentration | Type | | Concentration | | |
| | | Anion | Cation | [% by mass] | Anion | Cation | [ppm by mass] | | |
| Comparative Example a0-1 | Ra0-1 | None | None | 0 | None | None | 0 | 100 | 100 |
| Comparative Example a37-1 | Ra37-1 | | | | | | 0 | 116 | 140 |
| Example 85-1 | 85-1 | | | | | | 20 | 116 | 141 |
| Example 85-2 | 85-2 | | | | | | 50 | 118 | 141 |
| Example 85-3 | 85-3 | | | | | | 500 | 120 | 141 |
| Example 85-4 | 85-4 | | | | | | 2500 | 123 | 142 |
| Example 85-5 | 85-5 | | $Li^+$ | 1.00 | BOB | $Li^+$ | 5000 | 123 | 145 |
| Example 85-6 | 85-6 | | | | | | 6500 | 124 | 146 |
| Example 85-7 | 85-7 | | | | | | 7500 | 123 | 147 |
| Example 85-8 | 85-8 | | | | | | 10000 | 120 | 149 |
| Example 85-9 | 85-9 | | | | | | 20000 | 117 | 151 |
| Comparative Example a37-2 | Ra37-2 | | | | | | 30000 | 113 | 150 |
| Comparative Example a38-1 | Ra38-1 | | | | | | 0 | 116 | 140 |
| Example 86-1 | 86-1 | | | | | | 20 | 116 | 140 |
| Example 86-2 | 86-2 | | | | | | 50 | 117 | 141 |
| Example 86-3 | 86-3 | | | | | | 500 | 118 | 140 |
| Example 86-4 | 86-4 | | | | | | 2500 | 121 | 141 |
| Example 86-5 | 86-5 | N-($SO_2$F)(COCN) | $Li^+$ | 1.00 | BOB | $K^+$ | 5000 | 120 | 143 |
| Example 86-6 | 86-6 | | | | | | 6500 | 121 | 144 |
| Example 86-7 | 86-7 | | | | | | 7500 | 120 | 145 |
| Example 86-8 | 86-8 | | | | | | 10000 | 118 | 147 |
| Example 86-9 | 86-9 | | | | | | 20000 | 116 | 149 |
| Comparative Example a38-2 | Ra38-2 | | | | | | 30000 | 112 | 148 |

(continued)

| | Nonaqueous Electrolyte Solution | (I-1) | | | (I-2) | | | E1 | E2 |
|---|---|---|---|---|---|---|---|---|---|
| | | Type | | Concentration | Type | | Concentration | | |
| | | Anion | Cation | [% by mass] | Anion | Cation | [ppm by mass] | | |
| Comparative Example a39-1 | Ra39-1 | | | | | | 0 | 116 | 140 |
| Example 87-1 | 87-1 | | | | | | 20 | 116 | 142 |
| Example 87-2 | 87-2 | | | | | | 50 | 119 | 143 |
| Example 87-3 | 87-3 | | | | | | 500 | 124 | 143 |
| Example 87-4 | 87-4 | | | | | | 2500 | 131 | 145 |
| Example 87-5 | 87-5 | | $Li^+$ | 1.00 | $BF_4$ | $Li^+$ | 5000 | 129 | 152 |
| Example 87-6 | 87-6 | | | | | | 6500 | 125 | 157 |
| Example 87-7 | 87-7 | | | | | | 7500 | 123 | 160 |
| Example 87-8 | 87-8 | | | | | | 10000 | 121 | 165 |
| Example 87-9 | 87-9 | | | | | | 20000 | 118 | 177 |
| Comparative Example a39-2 | Ra39-2 | | | | | | 30000 | 113 | 174 |

[Table 36]

Table 36

| | Nonaqueous Electrolyte Solution | (I-1) | | | (I-2) | | | E1 | E2 |
|---|---|---|---|---|---|---|---|---|---|
| | | Type | | Concentration | Type | | Concentration | | |
| | | Anion | Cation | [% by mass] | Anion | Cation | [ppm by mass] | | |
| Comparative Example a40-1 | Ra40-1 | N-(SO$_2$F)(COCN) | Li$^+$ | 1.00 | BF$_4$ | K$^+$ | 0 | 116 | 140 |
| Example 88-1 | 88-1 | | | | | | 20 | 116 | 140 |
| Example 88-2 | 88-2 | | | | | | 50 | 117 | 142 |
| Example 88-3 | 88-3 | | | | | | 500 | 120 | 142 |
| Example 88-4 | 88-4 | | | | | | 2500 | 125 | 143 |
| Example 88-5 | 88-5 | | | | | | 5000 | 123 | 150 |
| Example 88-6 | 88-6 | | | | | | 6500 | 122 | 153 |
| Example 88-7 | 88-7 | | | | | | 7500 | 121 | 156 |
| Example 88-8 | 88-8 | | | | | | 10000 | 119 | 163 |
| Example 88-9 | 88-9 | | | | | | 20000 | 114 | 175 |
| Comparative Example a40-2 | Ra40-2 | | | | | | 30000 | 111 | 170 |
| Comparative Example a41-1 | Ra41-1 | | Li$^+$ | 1.00 | ClO$_4$ | Li$^+$ | 0 | 116 | 140 |
| Example 89-1 | 89-1 | | | | | | 20 | 116 | 143 |
| Example 89-2 | 89-2 | | | | | | 50 | 119 | 145 |
| Example 89-3 | 89-3 | | | | | | 500 | 122 | 147 |
| Example 89-4 | 89-4 | | | | | | 2500 | 125 | 156 |
| Example 89-5 | 89-5 | | | | | | 5000 | 127 | 170 |
| Example 89-6 | 89-6 | | | | | | 6500 | 125 | 174 |
| Example 89-7 | 89-7 | | | | | | 7500 | 124 | 180 |
| Example 89-8 | 89-8 | | | | | | 10000 | 119 | 186 |
| Example 89-9 | 89-9 | | | | | | 20000 | 115 | 187 |
| Comparative Example a41-2 | Ra41-2 | | | | | | 30000 | 113 | 182 |
| Comparative Example a42-1 | Ra42-1 | | | | | | 0 | 116 | 140 |

(continued)

| | Nonaqueous Electrolyte Solution | (I-1) | | | (I-2) | | | E1 | E2 |
|---|---|---|---|---|---|---|---|---|---|
| | | Type | | Concentration | Type | | Concentration | | |
| | | Anion | Cation | [% by mass] | Anion | Cation | [ppm by mass] | | |
| Example 90-1 | 90-1 | | $Li^+$ | 1.00 | $ClO_4$ | $K^+$ | 20 | 116 | 142 |
| Example 90-2 | 90-2 | | | | | | 50 | 117 | 143 |
| Example 90-3 | 90-3 | | | | | | 500 | 120 | 146 |
| Example 90-4 | 90-4 | | | | | | 2500 | 123 | 154 |
| Example 90-5 | 90-5 | | | | | | 5000 | 121 | 168 |
| Example 90-6 | 90-6 | | | | | | 6500 | 121 | 171 |
| Example 90-7 | 90-7 | | | | | | 7500 | 119 | 177 |
| Example 90-8 | 90-8 | | | | | | 10000 | 117 | 183 |
| Example 90-9 | 90-9 | | | | | | 20000 | 113 | 184 |
| Comparative Example a42-2 | Ra42-2 | | | | | | 30000 | 110 | 179 |

[Table 37]

Table 37

| | Nonaqueous Electrolyte Solution | (I-1) | | | (I-2) | | | E1 | E2 |
|---|---|---|---|---|---|---|---|---|---|
| | | Type | | Concentration | Type | | Concentration | | |
| | | Anion | Cation | [% by mass] | Anion | Cation | [ppm by mass] | | |
| Comparative Example a0-1 | Ra0-1 | None | None | 0 | None | None | 0 | 100 | 100 |
| Comparative Example a43-1 | Ra43-1 | $N-(SO_2F)(CO(OCN))$ | $Li^+$ | 1.00 | BOB | $Li^+$ | 0 | 113 | 141 |
| Example 91-1 | 91-1 | | | | | | 20 | 114 | 143 |
| Example 91-2 | 91-2 | | | | | | 50 | 117 | 143 |
| Example 91-3 | 91-3 | | | | | | 500 | 121 | 143 |
| Example 91-4 | 91-4 | | | | | | 2500 | 126 | 144 |
| Example 91-5 | 91-5 | | | | | | 5000 | 124 | 146 |
| Example 91-6 | 91-6 | | | | | | 6500 | 124 | 147 |
| Example 91-7 | 91-7 | | | | | | 7500 | 122 | 147 |
| Example 91-8 | 91-8 | | | | | | 10000 | 120 | 144 |
| Example 91-9 | 91-9 | | | | | | 20000 | 116 | 143 |
| Comparative Example a43-2 | Ra43-2 | | | | | | 30000 | 115 | 142 |
| Comparative Example a44-1 | Ra44-1 | | $Li^+$ | 1.00 | BOB | $K^+$ | 0 | 113 | 141 |
| Example 92-1 | 92-1 | | | | | | 20 | 113 | 142 |
| Example 92-2 | 92-2 | | | | | | 50 | 115 | 142 |
| Example 92-3 | 92-3 | | | | | | 500 | 116 | 142 |
| Example 92-4 | 92-4 | | | | | | 2500 | 118 | 143 |
| Example 92-5 | 92-5 | | | | | | 5000 | 117 | 144 |
| Example 92-6 | 92-6 | | | | | | 6500 | 116 | 145 |
| Example 92-7 | 92-7 | | | | | | 7500 | 116 | 146 |
| Example 92-8 | 92-8 | | | | | | 10000 | 115 | 142 |
| Example 92-9 | 92-9 | | | | | | 20000 | 113 | 141 |
| Comparative Example a44-2 | Ra44-2 | | | | | | 30000 | 112 | 140 |

(continued)

| | Nonaqueous Electrolyte Solution | (I-1) | | | (I-2) | | | E1 | E2 |
|---|---|---|---|---|---|---|---|---|---|
| | | Type | | Concentration | Type | | Concentration | | |
| | | Anion | Cation | [% by mass] | Anion | Cation | [ppm by mass] | | |
| Comparative Example a45-1 | Ra45-1 | | $Li^+$ | 1.00 | $BF_4$ | $Li^+$ | 0 | 113 | 141 |
| Example 93-1 | 93-1 | | | | | | 20 | 117 | 143 |
| Example 93-2 | 93-2 | | | | | | 50 | 118 | 145 |
| Example 93-3 | 93-3 | | | | | | 500 | 123 | 146 |
| Example 93-4 | 93-4 | | | | | | 2500 | 133 | 147 |
| Example 93-5 | 93-5 | | | | | | 5000 | 132 | 154 |
| Example 93-6 | 93-6 | | | | | | 6500 | 131 | 157 |
| Example 93-7 | 93-7 | | | | | | 7500 | 130 | 160 |
| Example 93-8 | 93-8 | | | | | | 10000 | 130 | 167 |
| Example 93-9 | 93-9 | | | | | | 20000 | 122 | 180 |
| Comparative Example a45-2 | Ra45-2 | | | | | | 30000 | 114 | 177 |

[Table 38]

Table 38

| | Nonaqueous Electrolyte Solution | (I-1) | | | (I-2) | | | E1 | E2 |
|---|---|---|---|---|---|---|---|---|---|
| | | Type | | Concentration | Type | | Concentration | | |
| | | Anion | Cation | [% by mass] | Anion | Cation | [ppm by mass] | | |
| Comparative Example a46-1 | Ra46-1 | $N-(SO_2F)(CO(OCN))$ | $Li^+$ | 1.00 | $BF_4$ | $K^+$ | 0 | 113 | 141 |
| Example 94-1 | 94-1 | | | | | | 20 | 115 | 142 |
| Example 94-2 | 94-2 | | | | | | 50 | 116 | 144 |
| Example 94-3 | 94-3 | | | | | | 500 | 117 | 144 |
| Example 94-4 | 94-4 | | | | | | 2500 | 120 | 145 |
| Example 94-5 | 94-5 | | | | | | 5000 | 119 | 152 |
| Example 94-6 | 94-6 | | | | | | 6500 | 117 | 155 |
| Example 94-7 | 94-7 | | | | | | 7500 | 116 | 158 |
| Example 94-8 | 94-8 | | | | | | 10000 | 114 | 165 |
| Example 94-9 | 94-9 | | | | | | 20000 | 111 | 178 |
| Comparative Example a46-2 | Ra46-2 | | | | | | 30000 | 107 | 174 |
| Comparative Example a47-1 | Ra47-1 | | $Li^+$ | 1.00 | $ClO_4$ | $Li^+$ | 0 | 113 | 141 |
| Example 95-1 | 95-1 | | | | | | 20 | 116 | 145 |
| Example 95-2 | 95-2 | | | | | | 50 | 118 | 147 |
| Example 95-3 | 95-3 | | | | | | 500 | 121 | 149 |
| Example 95-4 | 95-4 | | | | | | 2500 | 128 | 158 |
| Example 95-5 | 95-5 | | | | | | 5000 | 127 | 172 |
| Example 95-6 | 95-6 | | | | | | 6500 | 127 | 176 |
| Example 95-7 | 95-7 | | | | | | 7500 | 126 | 182 |
| Example 95-8 | 95-8 | | | | | | 10000 | 121 | 188 |
| Example 95-9 | 95-9 | | | | | | 20000 | 116 | 189 |
| Comparative Example a47-2 | Ra47-2 | | | | | | 30000 | 112 | 184 |
| Comparative Example a48-1 | Ra48-1 | | | | | | 0 | 113 | 141 |

(continued)

| | Nonaqueous Electrolyte Solution | (I-1) | | | (I-2) | | | E1 | E2 |
|---|---|---|---|---|---|---|---|---|---|
| | | Type | | Concentration | Type | | Concentration | | |
| | | Anion | Cation | [% by mass] | Anion | Cation | [ppm by mass] | | |
| Example 96-1 | 96-1 | | | | | | 20 | 115 | 143 |
| Example 96-2 | 96-2 | | | | | | 50 | 117 | 145 |
| Example 96-3 | 96-3 | | | | | | 500 | 119 | 148 |
| Example 96-4 | 96-4 | | | | | | 2500 | 120 | 156 |
| Example 96-5 | 96-5 | | $Li^+$ | 1.00 | $ClO_4$ | $K^+$ | 5000 | 120 | 170 |
| Example 96-6 | 96-6 | | | | | | 6500 | 119 | 173 |
| Example 96-7 | 96-7 | | | | | | 7500 | 117 | 179 |
| Example 96-8 | 96-8 | | | | | | 10000 | 115 | 185 |
| Example 96-9 | 96-9 | | | | | | 20000 | 112 | 187 |
| Comparative Example a48-2 | Ra48-2 | | | | | | 30000 | 108 | 181 |

From Tables 23 to 38, it can be seen, from comparison under the condition that the type and the concentration of (I-1) were the same, that the nonaqueous electrolytic solutions of the Examples could improve E1 and E2 in a well-balanced manner better than the nonaqueous electrolyte solutions of the Comparative Examples.

In addition, in the Examples in which the (I-2) content in the nonaqueous electrolyte solution was 10 to 15000 ppm by mass, E1 and E2 could be improved in a more balanced manner. That "E1 and E2 could be improved in a more balanced manner" means that "equivalent or higher resistance after high-temperature storage" and "superior post-overdischarge discharge capacity retention rate after the high-temperature storage test" were exhibited compared to those of the case in which the (I-2) content in the nonaqueous electrolyte solution was less than 10 ppm by mass.

Next, in order to examine the influence of the content of the cations other than lithium in the nonaqueous electrolyte solution in the case where the nonaqueous electrolyte solution battery was a lithium ion battery, those shown in the following Tables 39 to 44 were selected from the Examples and the Comparative Examples above, and the contents (ppm by mass) of the cations other than lithium in the nonaqueous electrolyte solution were determined by ICP emission spectrometry.

[Table 39]

Table 39

| | Nonaqueous Electrolyte Solution | (1-1) | | | (I-2) | | | Content of Cations Other Than Li in Electrolyte Solution [ppm by mass] | E1 | E2 |
|---|---|---|---|---|---|---|---|---|---|---|
| | | Type | | Concentration | Type | | Concentration | | | |
| | | Anion | Cation | [% by mass] | Anion | Cation | [ppm by mass] | | | |
| Comparative Example a0-1 | Ra0-1 | None | | | None | | | <1 | 100 | 100 |
| Example 85-5 | 85-5 | $N-(SO_2F)(COCN)$ | $Li^+$ | 1.00 | BOB | $Li^+$ | 5000 | <1 | 123 | 145 |
| Example 52-5 | 52-5 | | | | | $Na^+$ | 5000 | 545 | 121 | 144 |
| Example 86-5 | 86-5 | | | | | $K^+$ | 5000 | 860 | 120 | 143 |

[Table 40]

Table 40

| | Nonaqueous Electrolyte Solution | (I-1) | | | (I-2) | | | Content of Cations Other Than Li in Electrolyte Solution [ppm by mass] | E1 | E2 |
|---|---|---|---|---|---|---|---|---|---|---|
| | | Type | | Concentration | Type | | Concentration | | | |
| | | Anion | Cation | [% by mass] | Anion | Cation | [ppm by mass] | | | |
| Comparative Example a0-1 | Ra0-1 | None | | | None | | | <1 | 100 | 100 |
| Example 87-5 | 87-5 | $N-(SO_2F)(COCN)$ | $Li^+$ | 1.00 | $BF_4$ | $Li^+$ | 5000 | <1 | 129 | 152 |
| Example 58-5 | 58-5 | | | | | $Na^+$ | 5000 | 1050 | 125 | 151 |
| Example 88-5 | 88-5 | | | | | $K^+$ | 5000 | 1556 | 123 | 150 |

[Table 41]

Table 41

| | Nonaqueous Electrolyte Solution | (I-1) Type Anion | (I-1) Type Cation | (I-1) Concentration [% by mass] | (I-2) Type Anion | (I-2) Type Cation | (I-2) Concentration [ppm by mass] | Content of Cations Other Than Li in Electrolyte Solution [ppm by mass] | E1 | E2 |
|---|---|---|---|---|---|---|---|---|---|---|
| Comparative Example a0-1 | Ra0-1 | None | | | None | | | <1 | 100 | 100 |
| Example 89-5 | 89-5 | $N-(SO_2F)(COCN)$ | $Li^+$ | 1.00 | $ClO_4$ | $Li^+$ | 5000 | <1 | 127 | 170 |
| Example 64-5 | 64-5 | | | | | $Na^+$ | 5000 | 938 | 124 | 169 |
| Example 90-5 | 90-5 | | | | | $K^+$ | 5000 | 1412 | 121 | 168 |

[Table 42]

Table 42

| | Nonaqueous Electrolyte Solution | (I-1) | | | (I-2) | | | Content of Cations Other Than Li in Electrolyte Solution [ppm by mass] | E1 | E2 |
|---|---|---|---|---|---|---|---|---|---|---|
| | | Type | | Concentration | Type | | Concentration | | | |
| | | Anion | Cation | [% by mass] | Anion | Cation | [ppm by mass] | | | |
| Comparative Example a0-1 | Ra0-1 | None | | | None | | | <1 | 100 | 100 |
| Example 91-5 | 91-5 | $N-(SO_2F)(CO(OCN))$ | $Li^+$ | 1.00 | BOB | $Li^+$ | 5000 | <1 | 124 | 146 |
| Example 70-5 | 70-5 | | | | | $Na^+$ | 5000 | 550 | 119 | 145 |
| Example 92-5 | 92-5 | | | | | $K^+$ | 5000 | 863 | 117 | 144 |

[Table 43]

Table 43

| | Nonaqueous Electrolyte Solution | (I-1) | | | (I-2) | | | Content of Cations Other Than Li in Electrolyte Solution [ppm by mass] | E1 | E2 |
|---|---|---|---|---|---|---|---|---|---|---|
| | | Type | | Concentration | Type | | Concentration | | | |
| | | Anion | Cation | [% by mass] | Anion | Cation | [ppm by mass] | | | |
| Comparative Example a0-1 | Ra0-1 | None | | | None | | | <1 | 100 | 100 |
| Example 93-5 | 93-5 | $N-(SO_2F)(CO(OCN))$ | $Li^+$ | 1.00 | $BF_4$ | $Li^+$ | 5000 | <1 | 132 | 154 |
| Comparative Example 76-5 | 76-5 | | | | | $Na^+$ | 5000 | 1050 | 122 | 153 |
| Example 94-5 | 94-5 | | | | | $K^+$ | 5000 | 1555 | 119 | 152 |

[Table 44]

Table 44

| | Nonaqueous Electrolyte Solution | (I-1) Type Anion | (I-1) Type Cation | (I-1) Concentration [% by mass] | (I-2) Type Anion | (I-2) Type Cation | (I-2) Concentration [ppm by mass] | Content of Cations Other Than Li in Electrolyte Solution [ppm by mass] | E1 | E2 |
|---|---|---|---|---|---|---|---|---|---|---|
| Comparative Example a0-1 | Ra0-1 | None | | | None | | | <1 | 100 | 100 |
| Example 95-5 | 95-5 | $N-(SO_2F)(CO(OCN))$ | $Li^+$ | 1.00 | $ClO_4$ | $Li^+$ | 5000 | <1 | 127 | 172 |
| Example 82-5 | 82-5 | $N-(SO_2F)(CO(OCN))$ | $Li^+$ | 1.00 | $ClO_4$ | $Na^+$ | 5000 | 941 | 123 | 171 |
| Example 96-5 | 96-5 | $N-(SO_2F)(CO(OCN))$ | $Li^+$ | 1.00 | $ClO_4$ | $K^+$ | 5000 | 1415 | 120 | 170 |

From Tables 39 to 44, it can be seen, from comparison under the condition that the type and the concentration of (I-1) were the same and that the type of the anion of (I-2) was the same, that an effect of improving the low-temperature (-30°C) output characteristic after the high-temperature (70°C) storage test (resistance after high-temperature storage) and the post-overdischarge discharge capacity retention rate after the high-temperature (70°C) storage test in a well-balanced manner could be exhibited better as the content of the cations other than lithium in the nonaqueous electrolyte solution was lower.

INDUSTRIAL APPLICABILITY

According to the present disclosure, a nonaqueous electrolyte solution capable of improving a low-temperature (-30°C) output characteristic after a high-temperature (70°C) storage test (resistance after high-temperature storage) and a post-overdischarge discharge capacity retention rate after a high-temperature (70°C) storage test in a well-balanced manner and a nonaqueous electrolyte solution battery can be provided.

Although the present disclosure has been explained in detail and referring to specific embodiments, it will be apparent to a person skilled in the art that various changes and modifications can be made without departing from the spirit and the scope of the present disclosure.

The present application is based on a Japanese Patent Application (No. 2023-016466) filed on February 6, 2023, the contents of which are incorporated herein by reference.

## Claims

1. A nonaqueous electrolyte solution, comprising:

(I-1) a compound represented by the following general formula [1a]; and
(I-2) at least one selected from the group consisting of a compound represented by the following general formula [1b] and a compound represented by the following general formula [1b'],

wherein the (I-2) content in the nonaqueous electrolyte solution is 10 to 25000 ppm by mass:

$$M^+ [X\text{-}S(=O)_2\text{-}N\text{-}C(=O)\text{-}R^1]^- \quad [1a]$$

(wherein in the general formula [1a], X represents a halogen atom, $R^1$ represents a -CN group or a -OCN group, and $M^+$ represents an alkali metal ion)

[Chem. 1]

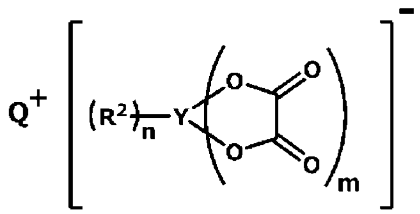

[1b]

(wherein in the general formula [lb], Y represents a boron atom, $R^2$ represents a fluorine atom, n is 0 to 4, m is 0 to 2, and $Q^+$ represents an alkali metal ion, a tetraalkylammonium cation, or a tetraalkylphosphonium cation)

$$Q^+[Z]^- \quad [1b']$$

(wherein in the general formula [1b'], the anion moiety represented by $[Z]^-$ is the following structure [1b-1] or a chloride anion, and $Q^+$ represents an alkali metal ion, a tetraalkylammonium cation, or a tetraalkylphosphonium cation.)

[Chem. 2]

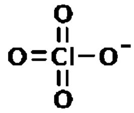

[1b-1]

2. The nonaqueous electrolyte solution according to claim 1, wherein the (I-2) content in the nonaqueous electrolyte solution is 10 to 8000 ppm by mass.

3. The nonaqueous electrolyte solution according to claim 1 or 2, wherein the (I-1) content in the nonaqueous electrolyte solution is 0.01 to 5.00% by mass.

4. The nonaqueous electrolyte solution according to claim 1 or 2, wherein X in the general formula [1a] is a fluorine atom.

5. The nonaqueous electrolyte solution according to claim 1 or 2, wherein the (I-2) is a salt compound containing at least one counter anion selected from the group consisting of a bis(oxalato)borate anion, a tetrafluoroborate anion, a chloride anion, and a perchlorate anion and at least one counter cation selected from the group consisting of a lithium cation, a sodium cation, a potassium cation, a tetraalkylammonium cation, and a tetraalkylphosphonium cation.

6. The nonaqueous electrolyte solution according to claim 1 or 2, further comprising (II) a solute, wherein the solute is at least one selected from the group consisting of $LiPF_6$, $LiSbF_6$, $LiAsF_6$, $LiCF_3SO_3$, $LiC_4F_9SO_3$, $LiAlO_2$, $LiAlCl_4$, and LiI or at least one selected from the group consisting of $NaPF_6$, $NaSbF_6$, $NaAsF_6$, $NaCF_3SO_3$, $NaC_4F_9SO_3$, $NaAlO_2$, $NaAlCl_4$, and NaI.

7. The nonaqueous electrolyte solution according to claim 1 or 2, further comprising (III) a nonaqueous organic solvent.

8. The nonaqueous electrolyte solution according to claim 7, wherein the (III) contains at least one selected from the group consisting of a cyclic ester, a chain ester, a cyclic ether, a chain ether, a sulfone compound, a sulfoxide compound, and an ionic liquid.

9. The nonaqueous electrolyte solution according to claim 8, wherein the (III) contains a cyclic ester, and the cyclic ester is a cyclic carbonate.

10. The nonaqueous electrolyte solution according to claim 8, wherein the (III) contains a chain ester, and the chain ester is a chain carbonate.

11. The nonaqueous electrolyte solution according to claim 1 or 2, further comprising at least one additive selected from the group consisting of vinylene carbonate, fluoroethylene carbonate, dimethyl dicarbonate, ethynyl ethylene carbonate, trans-difluoroethylene carbonate, difluorobis(oxalato)phosphate, tetrafluorooxalato phosphate, (difluorophosphoryl)(fluorosulfonyl)imide salt, difluorophosphate, fluorosulfonate, nitrate, 1,3-propenesultone, 1,3-propanesultone, 1,6-diisocyanatohexane, 1,3,2-dioxathiolane-2,2-dioxide, 4-propyl-1,3,2-dioxathiolane-2,2-dioxide, methylene methanedisulfonate, 1,2-ethanedisulfonic anhydride, methanesulfonic anhydride, methanesulfonyl fluoride, 1,4-dioxane-2,6-dione, tripropargyl phosphate, tris(trimethylsilyl)borate, (ethoxy)pentafluorocyclotriphosphazene, tetrafluoro(malonato)phosphate, tetrafluoro(picolinato)phosphate, 1,3-dimethyl-1,3-divinyl-1,3-di(1,1,1,3,3,3-hexafluoroisopropyl)disiloxane, N,N'-carbonylbis(N-methylsulfamoylfluoride), tetravinylsilane, trivinylmethylsilane, t-butylbenzene, t-amylbenzene, fluorobenzene, and cyclohexylbenzene.

12. A nonaqueous electrolyte solution battery, at least comprising:

a positive electrode;
a negative electrode;
a separator; and
the nonaqueous electrolyte solution according to claim 1 or 2.

**INTERNATIONAL SEARCH REPORT**

International application No.
**PCT/JP2024/003560**

**A. CLASSIFICATION OF SUBJECT MATTER**

***H01M 10/0568***(2010.01)i; ***H01M 10/052***(2010.01)i; ***H01M 10/054***(2010.01)i; ***H01M 10/0567***(2010.01)i; ***H01M 10/0569***(2010.01)i
FI: H01M10/0568; H01M10/052; H01M10/054; H01M10/0567; H01M10/0569

According to International Patent Classification (IPC) or to both national classification and IPC

**B. FIELDS SEARCHED**

Minimum documentation searched (classification system followed by classification symbols)

H01M10/0568; H01M10/052; H01M10/054; H01M10/0567; H01M10/0569

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| Y | WO 2022/244046 A1 (CENTRAL GLASS CO., LTD.) 24 November 2022 (2022-11-24) claims 1, 8, paragraph [0029], example 1-1, table 2 | 1-12 |
| Y | JP 2021-163684 A (CENTRAL GLASS CO., LTD.) 11 October 2021 (2021-10-11) claims 1, 8, paragraphs [0029], [0157], example 1-1, table 2 | 1-12 |
| Y | JP 2021-061117 A (TOYOTA JIDOSHA KABUSHIKI KAISHA) 15 April 2021 (2021-04-15) claim 1, paragraphs [0027], [0031]-[0041], table 1 | 1-12 |
| A | JP 2018-085213 A (KABUSHIKI KAISHA TOYOTA CHUO KENKYUSHO) 31 May 2018 (2018-05-31) entire text, all drawings | 1-12 |
| A | JP 2016-184462 A (MITSUBISHI CHEMICAL CORP.) 20 October 2016 (2016-10-20) entire text, all drawings | 1-12 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 April 2024** | **23 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

INTERNATIONAL SEARCH REPORT

International application No.
PCT/JP2024/003560

C. DOCUMENTS CONSIDERED TO BE RELEVANT

| Category* | Citation of document, with indication, where appropriate, of the relevant passages | Relevant to claim No. |
|---|---|---|
| A | JP 2016-146341 A (MITSUBISHI CHEMICAL CORP.) 12 August 2016 (2016-08-12) entire text, all drawings | 1-12 |

Form PCT/ISA/210 (second sheet) (July 2022)

**INTERNATIONAL SEARCH REPORT**
**Information on patent family members**

International application No.
**PCT/JP2024/003560**

| Patent document cited in search report | Publication date (day/month/year) | Patent family member(s) | Publication date (day/month/year) |
|---|---|---|---|
| WO 2022/244046 A1 | 24 November 2022 | CN 117337506 A | |
| JP 2021-163684 A | 11 October 2021 | (Family: none) | |
| JP 2021-061117 A | 15 April 2021 | (Family: none) | |
| JP 2018-085213 A | 31 May 2018 | (Family: none) | |
| JP 2016-184462 A | 20 October 2016 | JP 2019-135730 A | |
| JP 2016-146341 A | 12 August 2016 | JP 2020-155424 A | |
| | | JP 2022-81690 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2021163684 A